# EUROPÄISCHE PATENTSCHRIFT

(11) **EP 4 318 347 B1**
(45) Veröffentlichungstag und Bekanntmachung des Hinweises auf die Patenterteilung: **29.07.2026**
(21) Anmeldenummer: 22189069.2
(22) Anmeldetag: 05.08.2022
(51) Int. Cl.: G06Q 10/08

(54) **VERFAHREN ZUR NACHVERFOLGUNG VON SENDUNGEN ODER TRANSPORTBEHÄLTERN SOWIE NACHVERFOLGUNGSVORRICHTUNG**
METHOD FOR TRACKING SHIPMENTS OR TRANSPORT CONTAINERS AND TRACKING DEVICE
PROCÉDÉ DE SUIVI DES EXPÉDITIONS OU DES CONTENEURS DE TRANSPORT, AINSI QUE DISPOSITIF DE SUIVI

(43) Veröffentlichungstag der Anmeldung: 07.02.2024
(73) Patentinhaber: POSTAL CONSULTING Rühl GmbH, 14059 Berlin (DE)
(72) Erfinder: RÜHL, Steffen, 14059 Berlin (DE)
(74) Vertreter: Zimmermann & Partner Patentanwälte mbB

(56) Entgegenhaltungen:
- WO-A1-2009/054130
- CN-A- 114 127 760
- JP-A- 2008 094 503
- KR-A- 20210 056 345
- US-A1- 2009 314 835
- US-A1- 2018 012 177
- US-A1- 2020 143 322
- US-B1- 11 301 800
- US-B2- 7 574 366
- US-B2- 7 913 908

## Beschreibung

### TECHNISCHER HINTERGRUND

Die vorliegende Erfindung liegt auf dem Gebiet des Warenverkehrs und der Logistik und betriff ein Verfahren zur Nachverfolgung von Sendungen oder Transportbehältern.

Im Warenverkehr besteht bei Versendern, Frachtführern und Empfängern ein hohes Interesse, wiederholt oder kontinuierlich Informationen über den Versandstatus und die aktuelle Position von Sendungen zu erhalten oder abfragen zu können. Typischerweise übergibt ein Versender eine an den Empfänger gerichtete Sendung an den Frachtführer, der diese Sendung dann zum Empfänger transportiert. Beim Frachtführer kann es sich im normalen gewerblichen Handeln auch um mehrere Frachtführer handeln, zum Beispiel Subunternehmer. Für die vorliegende Beschreibung wird der Einfachheit halber häufig nur von einem Frachtführer gesprochen, welcher die Sendung bis zum Bestimmungsort transportiert.

Häufig will der Versender dem Empfänger eine hohe Transparenz über den Sendungsstatus gewähren. Dazu bindet der Versender die Nachverfolgungssysteme des oder der Frachtführer, welche die Sendung dann physisch zum Empfänger transportieren, an die eigenen CRM-Systeme (Customer-Relationship-Management) an, um dem Empfänger möglichst viele aktuelle Informationen über den Verpackungs- und Versandstatus mitteilen zu können.

Die Frachtführer haben ein Interesse, aktuelle Informationen über den Versandstatus bereitzustellen, da dies die Zufriedenheit der Versender und Empfänger erhöht. Damit können auch Kosten vermieden werden, die sonst z.B. für Rückfragen im Call-Center entstehen würden. Frachtführer nutzen hierfür jedoch häufig Systeme, die nicht immer in Echtzeit arbeiten. Derartige Systeme nutzen oftmals die Lokalisierbarkeit von Transportfahrzeugen, um die Position der mit den Transportfahrzeugen transportierten Sendungen zu ermitteln.

Für den Empfänger ist die Kenntnis über den Versandstatus und die wahrscheinliche Lieferzeit sehr wichtig. Für gewerbliche oder private Empfänger lassen sich daraus gewisse Aktionen ableiten. Ein privater Empfänger kann so besser entscheiden, wann er zuhause zur Entgegennahme der Sendung sein sollte. Bei einem gewerblichen Empfänger kann der Empfang einer Sendung möglicherweise weitere innerbetriebliche Prozesse anstoßen, beispielsweise eine Reparatur bei einem Kunden vorbereiten, da das mit der Sendung versandte Ersatzteil bald geliefert wird.

Die Nachverfolgung einer Sendung wird im allgemeinen als Tracking beschrieben. In einigen Fällen werden Tracker eingesetzt, d.h. Geräte, welche der Sendung beigefügt sind und jederzeit eine Abfrage des Standorts der Sendung ermöglichen. Derartige Tracker sind jedoch recht teuer, sodass diese nur eingesetzt werden, wenn der Wert der Sendung dies rechtfertigt. Weiterhin ist eine Rückführung der Tracker erforderlich. Diese ist umständlich und mit hohen Kosten verbunden. Tracker werden somit nur äußerst selten zu einer Sendung gegeben.

In der US 2018 / 0012177 A1 wird ein Tracker beschrieben, der eine Kommunikationseinheit zum Empfangen von Adressen und eine Anzeige zur Darstellung der Adressen aufweist. Nach Nutzung des Trackers erhält dieser die Adresse des nächstliegenden Verteilzentrums, damit der Anbieter des Trackers diesen wieder für die nächste Verwendung vorbereiten kann.

Die WO 2012 / 045 182 A1 offenbart einen Tracker, der eine Kommunikationseinheit und eine Bestätigungseinheit aufweist. Nachdem die Sendung mit dem Tracker beim Empfänger angekommen ist, bestätigt der Empfänger den Empfang durch Betätigen der Bestätigungseinheit. Dem Sender wird dann die Bestätigung übermittelt.

Weitere Lösungen, welche Tracker verwenden, sind aus der US 2020/0051015 A1, WO 2019/232314 A1, US 2019/0190550 A1, US 2017/0161679 A1, GB 2546288 A, EP 2827287 A1, EP 2497056 B1, US 2005/0116047 A1, EP 1697811 B1, und WO 2019/102390 A1 bekannt.

### ZUSAMMENFASSUNG DER ERFINDUNG

Vor diesem Hintergrund werden ein Verfahren nach Anspruch 1 sowie ein Verfahren nach Anspruch 16 vorgeschlagen.

Gemäß einer Ausführungsform wird ein Verfahren zur Nachverfolgung von Sendungen wie Post-, Paket-, Päckchen-, Speditions- und Kuriersendungen sowie zur Weiterverteilung von Nachverfolgungsvorrichtungen vorgeschlagen. Bei dem Verfahren wird mehreren Nutzern jeweils mindestens eine Nachverfolgungsvorrichtung, bevorzugt jeweils eine Vielzahl von Nachverfolgungsvorrichtungen bereitgestellt, welche jeweils ein Kommunikationsmodul und eine grafische Ausgabeeinheit aufweisen und welche unabhängig voneinander über das Kommunikationsmodul drahtlos mit einer Kontrolleinrichtung kommunizieren können oder in Verbindung stehen. Eine der Nachverfolgungsvorrichtungen wird zur Verwendung durch einen ersten der mehreren Nutzer zur Nachverfolgung einer Sendung vom ersten Nutzer an einen Empfänger aktiviert, um die aktivierte Nachverfolgungsvorrichtung zusammen mit der Sendung an den Empfänger zu versenden. Die Aktivierung der Nachverfolgungsvorrichtung wird an die Kontrolleinrichtung übermittelt. Die Kontrolleinrichtung empfängt wiederholt während des Transports der Sendung zum Empfänger die Position der aktivierten Nachverfolgungsvorrichtung. Der erste Nutzer und/oder der Empfänger kann/können über die Kontrolleinrichtung die Position der Sendung nachverfolgen. Die Kontrolleinrichtung überwacht den Lagerbestand der Nachverfolgungsvorrichtungen bei einigen oder allen Nutzern und übermittelt an die aktivierte Nachverfolgungsvorrichtung, nachdem diese zusammen mit der Sendung beim Empfänger eingetroffen ist, Zielanweisungen, welche die Darstellung von Zieladressinformationen zum Weiterversenden an einen zweiten der mehreren Nutzer auf der grafischen Ausgabeeinheit bewirkt. Die Zielanweisungen werden durch die Kontrolleinheit in Abhängigkeit vom Bedarf an Nachverfolgungsvorrichtungen durch die Nutzer und/oder in Abhängigkeit vom Lagerbestand an Nachverfolgungsvorrichtungen bei den Nutzern ermittelt.

Für die Durchführung des Verfahrens kann eine Nachverfolgungsvorrichtung für die Nachverfolgung von Sendungen oder Transportbehältern verwendet werden, wobei die Nachverfolgungsvorrichtung einen flächigen Grundkörper mit zwei gegenüberliegenden Seitenflächen aufweist. Der flächige Grundkörper hat bevorzugt Mindestmaße von 7 cm x 10 cm und insbesondere von 9 cm x 14 cm, wobei die Länge bevorzugt mindestens das 1,4 fache der Breite ist, und wobei der flächige Grundkörper bevorzugt eine Dicke von nicht mehr als 1 cm und insbesondere nicht mehr als 0,5 cm hat. Die Nachverfolgungsvorrichtung umfasst weiterhin eine grafische Ausgabeeinheit, die in eine der beiden Seitenflächen integriert ist; ein Kommunikationsmodul (erstes Kommunikationsmodul), um eine drahtlose Kommunikation mit einem Kommunikationsnetzwerk herzustellen; ein Nahfeldkommunikationsmodul (zweites Kommunikationsmodul), um kontaktlos mit einem Bediengerät zu kommunizieren; optional ein Kurzstreckenkommunikationsmodul (drittes Kommunikationsmodul); ein Speichermodul; mindestens zwei Sensoren ausgewählt aus einem Lichtsensor, einem Beschleunigungssensor (Accelerometer), Biegesensor und einem Drehratensensor (Gyrometer); ein Prozessormodul; eine aufladbare Energiequelle; und eine Kennung in Form eines maschinenlesbaren Codes; wobei das Kommunikationsmodul, das Nahfeldkommunikationsmodul, das optionale Kurzstreckenkommunikationsmodul, das Speichermodul, die mindestens zwei Sensoren, das Prozessormodul, und die aufladbare Energiequelle in den flächigen Grundkörper integriert sind.

Die Nachverfolgungsvorrichtung ist insbesondere für die nachstehend beschriebenen Verfahren geeignet und entsprechend angepasst.

Ein Vorteil der vorliegenden Erfindung ist die für die Nutzer und Empfänger anwenderfreundliche Nachverfolgung der Sendungen sowie die sehr effiziente Verteilung und Zurverfügungstellung von Nachverfolgungsvorrichtungen bei den Nutzern, welche die Nachverfolgungsvorrichtungen für die Nachverfolgung von beispielsweise Sendungen an Empfängern nutzen. Bei den Empfängern kann es sich ebenfalls um Nutzer handeln, welche ihrerseits Nachverfolgungsvorrichtungen für die Nachverfolgung von Sendungen verwenden, oder aber auch um Endkunden, welche die Nachverfolgungsvorrichtungen lediglich weiterversenden oder zurückschicken. Ein Nutzer im Sinne der vorliegenden Anmeldung ist eine Person, Firma oder Institution, welche Nachverfolgungsvorrichtungen zur Nachverfolgung von Sendungen verwendet und jeder Sendung oder einer ausgewählten Sendung oder mehreren ausgewählten Sendungen eine Nachverfolgungsvorrichtung beilegt. Den Nutzern werden die Nachverfolgungsvorrichtungen bereitgestellt, wobei die Anzahl der bereitgestellten Nachverfolgungsvorrichtungen von Nutzer zu Nutzer unterschiedlich sein kann. Unter den Nutzern kann zumindest einem Nutzer mindestens eine Nachverfolgungsvorrichtung bereitgestellt werden und anderen Nutzern eine Vielzahlzahl von Nachverfolgungsvorrichtungen bereitgestellt werden.

Unter einer Sendung werden insbesondere Warensendungen wie Pakete, Päckchen und Kuriersendungen, aber auch größere Warenlieferungen verstanden, welche groß genug sind, eine Nachverfolgungsvorrichtung aufzunehmen. Sendungen können allerdings auch "einfache" Postsendungen sein, die sonst beispielsweise mit der Zusatzleistung "Einschreiben" versandt worden wären.

Gemäß einem Aspekt der vorliegenden Erfindung wird die Verteilung der Nachverfolgungsvorrichtungen an die Nutzer durch die Kontrolleinrichtung überwacht und gesteuert. Die Kontrolleinrichtung überwacht dazu beispielsweise die Lagerbestände an Nachverfolgungsvorrichtungen bei einigen oder allen Nutzern, insbesondere bei den Nutzern, welchen jeweils eine Vielzahl von Nachverfolgungsvorrichtungen bereitgestellt wurden. Durch den Einsatz der Nachverfolgungsvorrichtungen durch die Nutzer, um beispielsweise eine konkrete Sendung an einen Empfänger zu verfolgen, verringert sich der Lagerbestand bei dem jeweiligen Nutzer. Diese Nutzer haben daher möglicherweise Bedarf an weiteren Nachverfolgungsvorrichtungen, um den Lagerbestand aufzustocken und immer genügend Nachverfolgungsvorrichtungen zur Verfügung zu haben. Der Bedarf kann bei den einzelnen Nutzern sehr unterschiedlich und auch Schwankungen unterworfen sein. Beispielsweise versendet ein Nutzer regelmäßig sehr viele Sendungen, deren Sendungsverlauf dieser Nutzer unter Verwendung der Nachverfolgungsvorrichtungen überwachen möchte. Daher besteht bei diesem Nutzer stets ein Bedarf an vielen Nachverfolgungsvorrichtungen. Ein anderer Nutzer versendet Sendungen eher unregelmäßig, wobei es vorkommen kann, dass kurzfristig auch viele Sendungen versendet werden. Dieser Nutzer hat daher einen schwankenden Bedarf an Nachverfolgungsvorrichtungen. Die Nutzer können ihren Bedarf an Nachverfolgungsvorrichtungen anpassen und diesen beispielsweise an die Kontrolleinrichtung übermitteln.

Da die Kontrolleinrichtung die Lagerbestände bei den einzelnen Nutzern überwacht, kann mittels der Kontrolleinrichtung die Verteilung der Nachverfolgungsvorrichtungen gezielt gesteuert werden und insbesondere auch vorausschauend erfolgen. Wird eine Nachverfolgungsvorrichtung durch einen Nutzer einer Sendung beigelegt, wird die Nachverfolgungsvorrichtung beispielsweise zuvor aktiviert. Die Aktivierung wird von der Kontrolleinrichtung registriert. Ebenso kann der Versand der Nachverfolgungsvorrichtung, welcher der Sendung beigelegt ist, sowie deren Position auf dem Transportweg durch die Kontrolleinrichtung abgefragt werden.

Durch die Verwendung von Nachverfolgungsvorrichtungen durch die einzelnen Nutzer sinkt deren Lagerbestand an Nachverfolgungsvorrichtungen bei den Nutzern, welche einer Sendung eine Nachverfolgungsvorrichtung beigelegt haben. Erreicht nun eine Sendung mit einer Nachverfolgungsvorrichtung den Empfänger, kann beispielsweise von der Kontrolleinrichtung an die Nachverfolgungsvorrichtung eine Zielanweisung übermittelt werden, welche die Darstellung von Zieladressinformationen zum Weiterversenden der Nachverfolgungsvorrichtung an einen anderen Nutzer, z.B. den zweiten Nutzer, auf der grafischen Ausgabeeinheit bewirkt. Durch den Empfang der Zielanweisung bewirkt die Nachverfolgungseinrichtung, dass auf der grafischen Ausgabeeinheit eine Zieladressinformation ausgegeben wird. Die Zieladressinformation gibt beispielsweise an, an welchen Nutzer die Nachverfolgungsvorrichtung weiterversendet werden soll. Die Kontrolleinrichtung kann dazu beispielsweise eine Zieladressinformation eines der Nutzer übermitteln, bei dem ein erhöhter Bedarf an Nachverfolgungsvorrichtungen besteht, oder dessen Lagerbestand erheblich zurückgegangen ist oder wahrscheinlich zurückgehen wird. Alternativ ist es möglich, dass auf der Nachverfolgungsvorrichtung mehrere Zieladresseninformationen gespeichert sind und mit der von der Kontrolleinrichtung übermittelten Zielanweisung eine der gespeicherten Zieladressinformationen ausgewählt wird, welche dann auf der grafischen Ausgabeeinheit angezeigt wird.

Unter einer Zielanweisung soll im Rahmen der vorliegenden Beschreibung eine Anweisung und/oder eine Dateninformation verstanden werden, welche von der Kontrolleinrichtung an die Nachverfolgungsvorrichtung gesendet wird, um eine Ausgabe einer Zieladressinformation auf der grafischen Ausgabeeinheit der Nachverfolgungsvorrichtung zu bewirken. Eine Zieladressinformation kann eine für den Empfänger lesbare Anweisung sein und/oder eine postalische Adresse darstellen. Die Zieladressinformation kann zusätzlich optional auch ein maschinenlesbarer optische Code, beispielsweise eine QR-Code oder einen Barcode, aufweisen. Für die Weiterversendung der Nachverfolgungsvorrichtung an einen anderen Nutzer, z.B. den zweiten Nutzer, kann die Kontrolleinrichtung zunächst eine erste Zielanweisung und zu einem späteren Zeitpunkt eine zweite Zielanweisung senden. Nach Empfang der ersten Zielanweisung kann beispielsweise eine erste Zieladressinformation ausgegeben werden, welche sich an den Empfänger richtet und ihn beispielsweise auffordert, die Nachverfolgungsvorrichtung zur Post zu bringen, in einen Briefkasten einzuwerfen, oder einem Rückgabeautomaten (Rückgabevorrichtung) zuzuführen. Die zweite Zielanweisung kann dann, nach erfolgter Rückgabe, die Ausgabe einer zweiten Zieladressinformation bewirken, welche sich an das oder die Logistikunternehmen, beispielsweise ein Postunternehmen, wendet, welches dann die eigentliche Weiterversendung der Nachverfolgungsvorrichtung zum zweiten Nutzer übernimmt. Die zweite Zielanweisung kann zu einem späteren Zeitpunkt als die erste Zielanweisung übermittelt werden. Es ist auch möglich, dass keine erste Zielanweisung übermittelt wird, da die erste Zieladressinformation auf der Nachverfolgungsvorrichtung als allgemeine Anweisung aufgedruckt oder gespeichert ist. In diesem Fall stellt die zweite Zielanweisung die von der Kontrolleinrichtung übermittelte Zielanweisung dar.

Grundsätzlich ist es möglich, die Zieladressinformationen dynamisch anzupassen, insbesondere in Abgängigkeit vom Bedarf an Nachverfolgungsvorrichtungen bei den einzelnen Nutzern. Damit kann auch während der Weiterversendung der Nachverfolgungsvorrichtungen vom Empfänger an beispielsweise den zweiten Nutzer relativ schnell auf einen wechselnden Bedarf an Nachverfolgungsvorrichtung reagiert werden und die Nachverfolgungsvorrichtung beispielsweise an einen dritten Nutzer versendet werden, bei dem kurzfristig ein noch höherer Bedarf aufgetreten ist.

Damit wird die vom Empfänger der Sendung entnommene Nachverfolgungsvorrichtung nicht notwendigerweise zu dem Nutzer zurückgeschickt, der die Sendung an den Empfänger verschickt hatte, sondern zu dem Nutzer, bei dem aktuell ein hoher Bedarf an Nachverfolgungsvorrichtungen besteht. Weiterhin kann damit vermieden werden, dass die Nachverfolgungsvorrichtungen zunächst wieder einem zentralen Verteilzentrum zugeschickt werden muss und von dort dann an die einzelnen Nutzer weitergesendet wird. Dies spart Transportkosten, Energie und Zeit und erhöht insgesamt die Verfügbarkeit der Nachverfolgungsvorrichtungen. Dadurch werden insgesamt auch weniger Nachverfolgungsvorrichtungen benötigt, wodurch wiederum Ressourcen eingespart werden.

Zu unterscheiden von den Nutzern ist der Betreiber des Nachverfolgungssystems, welcher die einzelnen Nachverfolgungsvorrichtungen bereitstellt, den Nutzern auf Anfrage die Nachverfolgungsvorrichtungen zur Verfügung stellt, und die Kontrolleinrichtung betreibt oder überwacht. Ein Nutzer kann beispielsweise beim Betreiber eine gewisse Anzahl an Nachverfolgungsvorrichtungen bestellen, die vom Betreiber dann an diesen Nutzer geliefert werden. Gleichzeitig kann der Nutzer beispielsweise eine Bestandsmindestmenge von vorrätigen Nachverfolgungsvorrichtungen festlegen. Die Bestandmindestmenge stellt für den Betreiber eine Kenngröße zur Steuerung der Weiterversendung der einzelnen Nachverfolgungsvorrichtungen dar, nachdem diese bei den jeweiligen Empfängern angekommen sind. Die Nutzer können die Bestandsmindestmengen anpassen. Die Bestandsmindestmenge kann in der Kontrolleinrichtung hinterlegt sein. Da der Betreiber über die Kontrolleinrichtung einen Überblick über die lokale Verteilung der Nachverfolgungsvorrichtungen und deren aktuellen Status (Nachverfolgungsvorrichtung wird gerade zur Sendungsverfolgung genutzt, Nachverfolgungsvorrichtung ist inaktiv bei einem Nutzer, Nachverfolgungsvorrichtung wird an einen anderen Nutzer weiterversendet) hat, kann der Betreiber sowohl die gezielte Weiterversendung einer Nachverfolgungsvorrichtung von einem Empfänger an einen Nutzer als auch das Bereitstellen von zusätzlichen Nachverfolgungsvorrichtungen an einen Nutzer steuern und rechtzeitig auf mögliche Engpässe bei einzelnen Nutzern reagieren. Darüber hinaus ist es möglich, dass der Betreiber an einzelne Nachverfolgungsvorrichtungen Zielanweisungen mit Zieladressinformation zum Senden an ein zentrales Lager übermittelt, damit die Nachverfolgungsvorrichtungen in dem zentralen Lager geprüft und/oder gewartet und/oder ggf. aufgeladen werden können, oder damit beispielsweise ein Softwareupdate vorgenommen werden kann.

Die Nachverfolgungsvorrichtungen werden häufig auch als Tracker bezeichnet, da mit Ihnen der Verlauf einer Sendung verfolgt (Englisch: to be tracked) werden kann. Eine Nachverfolgungsvorrichtung umfasst daher zumindest das Kommunikationsmodul, welche eine drahtlose Verbindung bzw. eine drahtlose Kommunikation mit der Kontrolleinrichtung insbesondere über ein Kommunikationsnetzwerk ermöglicht. Die drahtlose Kommunikation kann wiederholt erfolgen, beispielsweise periodisch, bei Auftreten bestimmter Ereignisse, oder durch eine gezielte Kontaktaufnahme durch die Kontrolleinrichtung und/oder durch die Nachverfolgungsvorrichtung. Beispielsweise ist die Aktivierung ein bestimmtes Ereignis, in dessen Folge durch die Nachverfolgungsvorrichtung eine Verbindungsaufnahme mit der Kontrolleinrichtung erfolgt, um der Kontrolleinrichtung die Aktivierung mitzuteilen. Die Kontrolleinrichtung kann beispielsweise mit der Nachverfolgungsvorrichtung kommunizieren, nachdem die Nachverfolgungsvorrichtung eine Statusmitteilung an die Kontrolleinrichtung übermittelt hat. Beispielsweise kann das Kommunikationsmodul nach Übermitteln der Statusmitteilung für einen vorgegebenen Zeitraum in einen Sende- und Empfangsmodus übergehen, um so eine Kommunikation mit der Kontrolleinrichtung zu ermöglichen. Nach Ablauf des vorgegebenen Zeitraums kann das Kommunikationsmodul bis zur Abgabe einer weiteren Statusmitteilung inaktiviert werden. Dadurch kann der Energieverbrauch der Nachverfolgungsvorrichtung gesenkt werden.

Weiterhin weist die Nachverfolgungsvorrichtung zumindest die grafische Ausgabeeinheit auf. Die grafische Ausgabeeinheit ist so konfiguriert, dass mithilfe der grafischen Ausgabeeinheit Zieladressinformationen angezeigt werden können. Bei den Zieladressinformationen handelt es sich bevorzugt um eine postalische Adresse. Die Zieladressinformationen können im Klartext angegeben werden und/oder als maschinenlesbarer Code. Die grafische Ausgabeeinheit ist ansteuerbar, damit bedarfsweise unterschiedliche Zieladressinformationen durch die grafische Ausgabeeinheit angezeigt werden können.

Bei der grafischen Ausgabeeinheit kann es sich um ein passives, d. h. nichtselbstleuchtendes, Display handeln. Beispiele sind elektronisches Papier, beispielsweise auf Basis von Elektrophorese (schwarze und weiße Partikel mit unterschiedlicher Ladung). Es kann aber auch ein aktives, d. h. selbstleuchtendes, Display verwendet werden. Beispiele sind OLED-Displays.

Für die Verwendung einer Nachverfolgungsvorrichtung wird die Nachverfolgungsvorrichtung zunächst bei dem Nutzer oder durch den Nutzer, der eine Sendung versenden möchte, aktiviert. Unter Aktivierung wird hier das Versetzen der Nachverfolgungsvorrichtung aus einem Ruhezustand in einen Betriebszustand verstanden. Neben dem Ruhezustand und dem Betriebszustand kann es auch einen Auszustand und einen Sendungszustand geben. Im Auszustand ist die Energiezufuhr in der Nachverfolgungsvorrichtung unterbrochen oder inaktiviert, sodass die Nachverfolgungsvorrichtung keine Funktionen ausführt. Aus dem Auszustand in den Ruhezustand oder in den Betriebszustand kann die Nachverfolgungsvorrichtung nur durch eine aktive Handlung beispielsweise durch den Nutzer überführt werden. Die Aktivierung kann auch automatisch beim Nutzer erfolgen, beispielsweise wenn der Nutzer ein Versandsystem mit automatisierter Bereitstellung von Nachverfolgungsvorrichtungen aus einem Magazin oder ähnlichen Vorrichtungen nutzt.

Im Ruhezustand ist die Energiezufuhr vorhanden oder aktiviert, sodass die Nachverfolgungsvorrichtung zumindest grundlegende Funktionen ausführen kann. Beispielsweise kann eine Kommunikation mit der Kontrolleinrichtung, d.h. eine Kommunikation zwischen der Kontrolleinrichtung und der nicht aktivierten Nachverfolgungsvorrichtung seitens der Nachverfolgungsvorrichtung nicht möglich sein, d.h. das Kommunikationsmodul ist inaktiv. Alternativ ist im Ruhezustand eine eingeschränkte Kommunikation, beispielsweise nur in größeren Zeitabständen, zwischen der Kontrolleinrichtung und der Nachverfolgungsvorrichtung möglich. Beispielsweise kann die Nachverfolgungsvorrichtung im Ruhezustand in größeren Zeitabständen eine Statusinformation an die Kontrolleinheit übermitteln, um dieser zu signalisieren, dass die Nachverfolgungsvorrichtung grundsätzlich einsatzbereit ist. Im Ruhezustand kann weiterhin die grafische Ausgabeeinheit deaktiviert sein. Wird für die grafische Ausgabeeinheit beispielsweise ein elektronisches Papier verwendet, kann die zuletzt angezeigte Information auch nach der Deaktivierung sichtbar bleiben, da bei elektronischem Papier Energie nur für die Änderung der Darstellung erforderlich ist.

Im Betriebszustand, d.h., wenn die Nachverfolgungsvorrichtung aktiviert wurde, stehen alle Funktionen der Nachverfolgungsvorrichtung zur Verfügung. Dagegen beschreibt der Sendungszustand einen Zustand einer Nachverfolgungsvorrichtung, ab dem die im Betriebszustand befindliche Nachverfolgungsvorrichtung einer Sendung zugewiesen wurde und diese Zuordnung in der Kontrolleinrichtung hinterlegt ist. Dazu kann die Sendung eine eindeutige Sendungskennung aufweisen, und die Nachverfolgungsvorrichtung eine eindeutige Kennung aufweisen. Die eindeutige Kennung kann als maschinenlesbarer Code auf der Nachverfolgungsvorrichtungen vorhanden sein. Bei der Aktivierung können die Sendungskennung und die eindeutige Kennung der Nachverfolgungsvorrichtung an die Kontrolleinrichtung übermittelt und einander zugeordnet werden. Es ist auch möglich, dass die Zuordnung von Sendungskennung und eindeutiger Kennung vor oder nach der Aktivierung erfolgt. Beispielsweise kann bei elektronischer Beauftragung eines Frachtführers für das Versenden der Sendung, beispielsweise eines Kurierdienstes, die eindeutige Kennung der Nachverfolgungsvorrichtung an den Frachtführer übermittelt werden. Die Zuordnung von eindeutiger Kennung und Sendungskennung, die vom Frachtführer bereitgestellt wird, kann dann beim Frachtführer erfolgen, welcher diese Zuordnung dann auch an die Kontrolleinrichtung übermittelt, oder die Kontrolleinrichtung fragt diese Zuordnung beim Frachtführer ab. Alternativ wird die Sendungskennung durch den Nutzer beim Frachtführer abgefragt und die Sendungskennung zusammen mit der eindeutigen Kennung an die Kontrolleinrichtung übermittelt oder von der Kontrolleinrichtung abgefragt. Die Aktivierung kann auch zu einem späteren Zeitpunkt erfolgen. Die Zuordnung von Sendungskennung und eindeutiger Kennung kann daher auch ohne vorherigen Aktivierung der Nachverfolgungsvorrichtung erfolgen. Bevorzugt erfolgt die Aktivierung jedoch vor der Zuordnung. Durch die Übermittlung der Zuordnung und deren Registrierung in der Kontrolleinrichtung ist es möglich, die Sendung durch Abfragen der Position der Nachverfolgungsvorrichtungen nachzuverfolgen.

Erreicht die Sendung zusammen mit der Nachverfolgungsvorrichtung den Empfänger, wird dies der Kontrolleinrichtung übermittelt, und die Zuordnung zwischen Sendung und Nachverfolgungsvorrichtung wird aufgehoben. Die Nachverfolgungsvorrichtung geht dadurch von dem Sendungszustand in den Betriebszustand über. Im Sendungszustand stehen alle Funktionen der Nachverfolgungsvorrichtung, wie im Betriebszustand, voll zur Verfügung. Der Sendungszustand kann daher auch als eine besondere Ausprägung des Betriebszustands angesehen werden, bei welcher beispielsweise häufiger bestimmte Funktionen aufgerufen werden. Der Unterschied zwischen Betriebszustand und Sendungszustand ist dann im Wesentlichen die bestehende Zuordnung der Nachverfolgungsvorrichtung zu einer Sendung. Im Sendungszustand kann die grafische Ausgabeeinheit bei Verwendung in einer Sendung deaktiviert sein, da diese nicht zwingend benötigt wird. Insbesondere bei Verwendung von Displays auf Basis von elektronischem Papier für die grafische Ausgabeeinheit ist es möglich, dass auch nach Deaktivierung der grafischen Ausgabeeinheit die zuletzt dargestellte Information sichtbar bleibt.

Darüber hinaus ist es möglich, dass bestimmte Funktionen der Nachverfolgungsvorrichtung in Abhängigkeit von dem jeweiligen Zustand, in dem sich die Nachverfolgungsvorrichtung befindet, unterschiedlich aktiviert oder ausgeführt werden, beispielsweise häufiger ausgeführt werden. Beispielsweise hat im Sendungszustand die Positionsbestimmung eine höhere Priorität als beispielsweise im Betriebszustand vor dem eigentlichen Versenden der Sendung. Daher kann im Sendungszustand die Position der Nachverfolgungsvorrichtung häufiger ermittelt werden als im Betriebszustand.

Um eine Nachverfolgungsvorrichtung zu aktivieren, kann der Nutzer der Nachverfolgungsvorrichtung beispielsweise kontaktlos Energie zuführen. Dazu kann der Nutzer die Nachverfolgungsvorrichtung beispielsweise auf eine Induktionseinrichtung, vergleichbar mit einer Induktionseinrichtung zum kontaktlosen Laden von Mobiltelefonen, legen. Die Nachverfolgungsvorrichtung kann dazu beispielsweise eine kontaktlose Ladeschnittstelle aufweisen. Sobald die Nachverfolgungsvorrichtung aktiviert ist, d.h. in den Betriebszustand überführt wurde, wird dies dem Nutzer angezeigt. Dies kann beispielsweise mittels der grafischen Ausgabeeinheit oder einer anderen optischen Anzeigevorrichtung, beispielsweise einer LED, erfolgen. Durch die kurzzeitige Zufuhr von Energie kann beispielsweise eine Aktivierungsroutine gestartet werden, welche in einem Speicher der Nachverfolgungsvorrichtung hinterlegt ist. Grundsätzlich kann die Energiezufuhr nicht nur für die eigentliche Aktivierung, sondern auch für das Aufladen einer wiederaufladbaren Energiequelle genutzt werden, welche in der Nachverfolgungsvorrichtung integriert ist.

Alternativ oder zusätzlich ist es möglich, dass die Nachverfolgungsvorrichtung ein Datenkommunikationsmodul, beispielsweise einen RFID-Transponder (Nahfeldkommunikationsmodul), aufweist, das als Eingabe- und Ausgabevorrichtung dient. Zur Aktivierung kann die Nachverfolgungsvorrichtung beispielsweise einem RFID-Lesegerät zugeführt werden, welches beispielsweise die Kennung der Nachverfolgungsvorrichtung auslesen und ein Aktivierungssignal an den RFID-Transponder übermitteln kann. Der RFID-Transponder kann für NFC (Near-Field-Communication) ausgelegt sein. In diesem Fall ist es beispielsweise möglich, die Nachverfolgungsvorrichtung mittels eines NFC-kompatiblen mobilen Endgeräts zu aktivieren und Daten auszutauschen. Dadurch ist der Nutzer beispielsweise nicht auf zusätzliche Hardware angewiesen, sodass die Nutzung der Nachverfolgungsvorrichtungen nicht zu weiteren Kosten führt. Außerdem kann dann über das mobile Endgerät auch eine Datenverbindung zur Kontrolleinrichtung aufgebaut werden und die Aktivierung der Nachverfolgungsvorrichtung an die Kontrolleinrichtung übermittelt und/oder verifiziert werden. Die Aktivierung der Nachverfolgungsvorrichtung kann auch direkt von der Nachverfolgungsvorrichtung über das Kommunikationsnetzwerk an die Kontrolleinrichtung übermittelt werden.

Damit kann, gemäß einer Ausführungsform, der Nutzer der Nachverfolgungsvorrichtung Energie zur Aktivierung der Nachverfolgungsvorrichtung zuführen, insbesondere kontaktlos Energie zuführen, um dadurch die Nachverfolgungsvorrichtung aus einem Ruhezustand in einen Betriebszustand zu überführen.

Gemäß einer weiteren Ausführungsform, die mit jeder weiteren hier beschriebenen Ausführungsform allein oder in beliebiger Kombination realisiert werden kann, weist die Nachverfolgungsvorrichtung als Datenkommunikationsmodul weiterhin ein Kurzstreckenkommunikationsmodul, beispielsweise ein Bluetooth-Modul, für die Kommunikation über kurze bis mittlere Distanzen auf.

Zur besseren Unterscheidung wird im Weiteren für das Kommunikationsmodul für die Kommunikation mit der Kontrolleinrichtung auch vom ersten Kommunikationsmodul oder Fernkommunikationsmodul, beim Nahfeldkommunikationsmodul auch vom zweiten Kommunikationsmodul, und beim Kurzstreckenkommunikationsmodul auch vom dritten Kommunikationsmodul gesprochen. Sowohl das Nahfeldkommunikationsmodul als auch das Kurzstreckenkommunikationsmodul stellen allgemein ein Datenkommunikationsmodul dar, welches zum Austausch von Daten mit einem Bediengerät oder Sender/Empfänger und/oder zur Lokalisierung der Nachverfolgungsvorrichtung in Innenräumen dient. Das zweite Kommunikationsmodul (Nahfeldkommunikationsmodul) erlaubt eine Kommunikation bis zu einer Entfernung von einigen Zentimetern bis wenigen Metern, typischerweise nicht mehr als 2 m. Das zweite Kommunikationsmodul ist daher bevorzugt für eine Nahfeldkommunikation (NFC) bzw. RFID-Kommunikation ausgelegt, insbesondere für eine bidirektionale Nahfeldkommunikation. Das dritte Kommunikationsmodul (Kurzstreckenkommunikationsmodul) erlaubt eine Kommunikation bis zu einer Entfernung von einigen Metern bis einigen Zehn Metern. Typischerweise kann eine ausreichend stabile Kommunikation bis ca. 30 m erreicht werden. Beispiele für das dritte Kommunikationsmodul (Kurzstreckenkommunikationsmodul) sind insbesondere EnOcean, DECT ULE, Bluetooth (LE-Bluetooth), ZigBee und Z-Wave. Das erste Kommunikationsmodul (Fernkommunikationsmodul) erlaubt eine Kommunikation über größere Entfernungen bis teilweise zu einigen zehn Kilometern. Das erste Kommunikationsmodul ermöglicht damit eine Kommunikation über eine größere Entfernung als das Datenkommunikationsmodul (drittes Kommunikationsmodul und/oder zweites Kommunikationsmodul), welches für den lokalen Datenaustausch vorgesehen ist. Das dritte Kommunikationsmodul ermöglicht eine Kommunikation über eine größere Entfernung als das zweite Kommunikationsmodul.

Unter einem Modul soll im Rahmen der vorliegenden Beschreibung eine Vorrichtung oder Einrichtung verstanden werden, welche eine bestimmte Funktion bereitstellt. Ein Modul kann dabei als eigenständige Einheit oder in Kombination mit einem weiteren Modul oder einer anderen Vorrichtung realisiert sein.

Das dritte Kommunikationsmodul (Kurzstreckenkommunikationsmodul) kann bevorzugt auch für die Positionsbestimmung der Nachverfolgungsvorrichtung in Innenräumen genutzt werden, da in Innenräumen die Positionsbestimmung über das Kommunikationsnetzwerk häufig zu ungenau oder gar nicht möglich ist. Zwar könnte auch ein zusätzliches Lokalisierungsmodul, beispielsweise ein GPS-Modul, verwendet werden. Ein solches Lokalisierungsmodul gestattet jedoch nur eine Bestimmung der globalen Position, wobei die Positionsbestimmung mittels Lokalisierungsmoduls innerhalb von Gebäuden oftmals zu ungenau ist oder aufgrund des schwachen Signalempfangs gar nicht möglich ist. Innerhalb von Gebäuden, beispielsweise bei der Nutzung der Nachverfolgungsvorrichtungen in Versandsystemen oder Verteilsystemen, ist oftmals auch nicht eine globale Position, sondern nur eine relative Position von Interesse. Ein Beispiel ist ein Versandsystem, bei dem eine automatische Zuordnung von Sendungskennung und eindeutiger Kennung erfolgt. Ein weiteres Beispiel ist ein zentrales Verteilsystem, beispielsweise ein Logistikhub. Bei Versand- und Verteilsystemen ist von Interesse, wo sich die einzelne Sendung bzw. die Nachverfolgungsvorrichtung innerhalb des Systems gerade befindet, da mit der aktuellen Position auch bestimmte Handlungen verbunden sein können. Für die relative Positionsbestimmung verfügen diese Systeme beispielsweise über festinstallierte Empfänger-Einheiten oder Empfänger-Sender-Einheiten, welche nur empfangen, nur senden, oder senden und empfangen können. Wird eine Sendung mit einer Nachverfolgungsvorrichtung beispielsweise zu einer Station innerhalb des Systems (Versandsystems oder Verteilsystems) geführt, kann die Nachverfolgungsvorrichtung mit der oder den (elektronischen) Empfänger-Sender-Einheit(en) kommunizieren und beispielsweise die eindeutige Kennung übermitteln. Damit ist dem System die Position der Nachverfolgungsvorrichtung innerhalb des Systems bekannt, da sich die Nachverfolgungsvorrichtung in der Nähe dieser (elektronischen) Empfänger-Sender-Einheit befindet. Die so ermittelte relative Position (Nähe zu einer bestimmten Empfänger-Sender-Einheit), kann für verschiedene Zwecke verwendet werden.

Nachfolgend wird ein Beispiel für eine automatische Zuordnung von Sendungskennung und eindeutiger Kennung erläutert. Beispielsweise kann eine Nachverfolgungseinrichtung bereits einer Sendung beigelegt sein. Die Nachverfolgungsvorrichtung kann sich bereits im Betriebszustand befinden, d. h. sie ist aktiviert. Im Versandsystem des Nutzers kann die Sendung beispielsweise automatisch einer Paketlabelstation zugeführt werden. Die Paketlabelstation ist dazu eingerichtet, das Paket, d. h. allgemein die Sendung, mit einem Paketlabel (Adressaufkleber) zu versehen. Die Paketlabelstation bzw. das Umfeld dieser Paketlabelstation kann beispielsweise mit einer oder mehreren Bluetooth-Empfänger-Sender-Einheiten ausgestattet sein, die mit dem Kurzstreckenkommunikationsmodul, im vorliegenden Beispiel ein Bluetooth-Modul, kommuniziert bzw. kommunizieren, wenn die Sendung mit der Nachverfolgungsvorrichtung in die Nähe der Bluetooth-Empfänger-Sender-Einheit gelangt. Dazu kann beispielsweise die Nachverfolgungsvorrichtung regelmäßig Bluetooth-Signale senden, welche von den beispielsweise räumlich verteilten Bluetooth-Empfänger-Sender-Einheiten empfangen werden und für die Ermittlung der Position der Nachverfolgungsvorrichtung verwendet werden können. Die Bluetooth-Empfänger-Sender-Einheiten können ihrerseits der Nachverfolgungsvorrichtung die ermittelte Position übermitteln und/oder bestimmte Anweisungen oder Daten mit der Nachverfolgungsvorrichtung austauschen. Bereits hier kann dann eine automatische Zuordnung zwischen eindeutiger Kennung der Nachverfolgungsvorrichtung und aufgedruckter Sendungskennung erfolgen. Oftmals erfolgt diese Zuordnung jedoch erst in einer weiteren Station. Dazu wird das mit der Sendungskennung und der Zieladresse markierte Paket automatisch einer weiteren Station zugeführt, die oder deren Umfeld ebenfalls mit einer oder mehreren Bluetooth-Empfänger-Sender-Einheiten ausgestattet ist. Bei dieser weiteren Station wird die aufgedruckte Sendungskennung optisch eingelesen. Dabei kann gleichzeitig überprüft werden, ob der Aufdruck, oder das aufgeklebte Label, lesbar ist. Mittels der Bluetooth-Empfänger-Sender-Einheiten ist dem System bekannt, welche Sendung (durch optische Erkennung) und welche Nachverfolgungsvorrichtung (durch Auslesen der eindeutigen Kennung mittels Bluetooth) gerade in dieser Station sind. Dadurch kann die Zuordnung erfolgen und der Kontrolleinrichtung übermittelt werden.

In einem Verteilzentrum kann die Sendung entweder durch optische Erkennung der Sendungskennung und/oder durch Auslesen der eindeutigen Kennung der Nachverfolgungsvorrichtung, welche der Sendung beigelegt ist, verfolgt werden. Damit kann auch das Handling von Sendungen angepasst werden.

Gemäß einer weiteren Ausführungsform, die mit jeder weiteren hier beschriebenen Ausführungsform allein oder in beliebiger Kombination realisiert werden kann, kann zur Aktivierung der Nachverfolgungsvorrichtung einer der folgenden Schritte, insbesondere durch den ersten Nutzer, durchgeführt werden: Betätigen eines Schaltelements der Nachverfolgungsvorrichtung, beispielsweise eines Piezoelements, eines Folienschalters oder eines Drucktasters; Zuführen der Nachverfolgungsvorrichtung zu einer Ladevorrichtung, beispielsweise durch Auflegen auf eine Ladevorrichtung zum kontaktlosen Aufladen; Entnehmen der Nachverfolgungsvorrichtung einer Ladevorrichtung; Entnehmen oder Ausgeben der Nachverfolgungsvorrichtung aus einem Magazin zur Aufbewahrung einer Vielzahl von Nachverfolgungsvorrichtungen.

Hiermit ist es möglich, der Nachverfolgungsvorrichtung Energie zuzuführen. Dabei wird unter Zufuhr von Energie auch die Aktivierung der Energiezufuhr in der Nachverfolgungsvorrichtung, z.B. durch Betätigen eines Schaltelements, verstanden.

Für die Sicherung der vollen Funktionsfähigkeit ist es gemäß einer Ausführungsform günstig, dass dem Nutzer eine Ladevorrichtung oder ein Magazin zur Aufbewahrung von Nachverfolgungsvorrichtungen zur Verfügung steht, in welcher die Nachverfolgungsvorrichtungen nicht nur aufbewahrt, sondern auch geladen werden bzw. deren Ladungszustand überwacht wird. Im einfachsten Fall können handelsübliche Ladevorrichtungen zum kontaktlosen Aufladen von Mobilfunkgeräten verwendet werden. Diese Lösung ist beispielsweise für Nutzer mit einem geringen Bedarf an Nachverfolgungsvorrichtungen geeignet. Bei Nutzern mit hohem täglichen Bedarf sind geeignete Magazine von Vorteil, da bei Entnahme einer Nachverfolgungsvorrichtung aus dem Magazin die Nachverfolgungsvorrichtung bereits geladen ist. Außerdem kann der Entnahmevorgang gleichzeitig zu einer automatischen Aktivierung der Nachverfolgungsvorrichtung führen, ohne dass hierzu der Nutzer anderweitig aktiv werden muss.

Bevorzugt stehen die Magazine über eine eigene Kommunikationsschnittstelle (Datenverbindung) mit der Kontrolleinrichtung in Verbindung und können dadurch die Aktivierung automatisch an die Kontrolleinrichtung übermitteln. Bei der Kommunikationsschnittstelle kann es sich um eine Schnittstelle zur Herstellung einer Mobilfunkverbindung, eine Schnittstelle zur Herstellung einer Festnetzverbindung, eine Schnittstelle zur Herstellung einer LAN-Verbindung oder um eine Schnittstelle zur Herstellung einer WLAN-Verbindung handeln, welche typischerweise für Datenkommunikation mit hohem Durchsatz genutzt werden.

Mittels der Magazine ist es auch möglich, dass die Kontrolleinrichtung leicht den Lagerbestand an Nachverfolgungsvorrichtungen bei dem Nutzer, welcher das Magazin benutzt, überwacht. Dazu kann vorgesehen sein, dass das Magazin an die Kontrolleinrichtung jedes Mal eine Statusinformation übermittelt, wenn eine Nachverfolgungsvorrichtung dem Magazin entnommen oder diesem hinzugeführt wurde.

Gemäß einer weiteren Ausführungsform, die mit jeder weiteren hier beschriebenen Ausführungsform allein oder in beliebiger Kombination realisiert werden kann, steht das Kommunikationsmodul (erstes Kommunikationsmodul bzw. Fernkommunikationsmodul) drahtlos über ein Kommunikationsnetzwerk mit der Kontrolleinrichtung in Verbindung. Die Kontrolleinrichtung kann die Position der aktivierten Nachverfolgungsvorrichtung wiederholt beim Kommunikationsnetzwerk, welches die Position der aktivierten Nachverfolgungsvorrichtung ermittelt, abfragen. Bevorzugt handelt es sich bei dem Kommunikationsnetzwerk um ein Low Power WAN (Low Power Wide-Area Network). Low Power WAN soll hier eine Gruppe aus unterschiedlichen stromsparenden WAN-Technologien bezeichnen, die in vielen Arten und Formen bestehen kann. Low Power WANs können lizenzierte oder nicht lizenzierte Frequenzen einsetzen und sowohl proprietäre als auch offene Standards benutzen. Das Kommunikationsmodul (erstes Kommunikationsmodul bzw. Fernkommunikationsmodul) ist ein Kommunikationsmodul, dass für die Kommunikation mit einem Low Power WAN Kommunikationsnetzwerk eingerichtet ist.

Beispiele für Low Power WAN sind DASH7, LoRaWAN, Sigfox, mioty, LTE-M, NB-IoT, Weightless-N, Weightless-P, Weightless-W, GreenOFDM, Symphony Link, ThingPark Wireless. Bevorzugt sind LoRaWAN, LTE-M, NB-IoT und Sigfox. Beispielsweise kann das Kommunikationsnetzwerk eine Kommunikation im sogenannten Short Range Device Frequenzband (SRD-Frequenzband) ermöglichen, beispielsweise im Bereich von 863 bis 870 MHz-Frequenzband, bevorzugt 868 MHz (primär in Europa), oder auch im Bereich 902 bis 928 MHz (primär in Nord- und Südamerika). Kommunikationsnetzwerke auf Basis von Low Power WAN zeichnen sich im Vergleich zu Mobilfunknetzen typischerweise durch eine geringe Bandbreite und geringe Bitrate aus, erlauben daher jedoch, das Kommunikationsmodul mit einer sehr geringen Leistungsaufnahme zu betreiben, wodurch die Betriebsdauer der Nachverfolgungsvorrichtung deutlich länger ausfällt als bei mobilen Endgeräten, die über Mobilfunknetze kommunizieren.

Zur Bestimmung der aktuellen Position bzw. des Standorts der aktivierten Nachverfolgungsvorrichtung kann insbesondere auf die Funktionalitäten des Kommunikationsnetzwerks zurückgegriffen werden. Zur Abfrage des aktuellen Standorts sendet die Kontrolleinrichtung einen entsprechenden Request an das Kommunikationsnetzwerk. Da das Kommunikationsnetzwerk verteilte Basisstationen aufweist, ist dem Kommunikationsnetzwerk bekannt, welche Basisstation gerade mit der Nachverfolgungsvorrichtung kommuniziert. Damit kennt das Kommunikationsnetzwerk den aktuellen Standort der Nachverfolgungsvorrichtung und kann diesen an die Kontrolleinrichtung übermitteln. Der mit dem Kommunikationsnetzwerk ermittelte Standort kann auch als ungefährer Standort bezeichnet werden, da die Genauigkeit der Standortbestimmung von den lokalen Gegebenheiten (räumlich Entfernung der Basisstationen, Empfangsqualität) beeinträchtigt werden kann. Dieser ungefähre Standort ist jedoch für die Positionsbestimmung im Rahmen der Nachverfolgung in den meisten Fällen ausreichend.

Auch wenn mittels des Kommunikationsnetzwerks in bestimmten Situationen nur ein ungefährer Standort übermittelt werden kann, ist diese Angabe in den meisten Fällen ausreichend. Für eine genauere Positionsbestimmung müsste die Nachverfolgungsvorrichtung ein eigenes Lokalisierungsmodul aufweisen bzw. dieses aktivieren. Damit verbunden ist jedoch ein höherer Energieverbrauch durch die Nachverfolgungsvorrichtung, was sich nachteilig auf die Einsatzdauer der Nachverfolgungsvorrichtung auswirkt. Daher wird typischerweise zunächst auf eine Standortermittlung durch das Kommunikationsnetzwerk zurückgegriffen.

Sowohl der Nutzer, der die Sendung versendet hat, als auch der Empfänger der Sendung, können über die Kontrolleinrichtung den aktuellen Standort der Nachverfolgungsvorrichtung und damit der Sendung abfragen.

Um den Energieverbrauch der Nachverfolgungsvorrichtung zu verringern, kann die aktivierte Nachverfolgungsvorrichtung, d.h. die im Sendungszustand befindliche Nachverfolgungsvorrichtung, ein Signal, z.B. eine Statusmitteilung, an das Kommunikationsnetzwerk senden, damit das Kommunikationsnetzwerk die Position der aktivierten Nachverfolgungsvorrichtung ermitteln kann. Dies kann beispielsweise dann erfolgen, wenn die Nachverfolgungsvorrichtung bewegt wird oder wenn sich ein Bewegungszustand der Nachverfolgungsvorrichtung ändert. Aufgrund dieser durch die Nachverfolgungsvorrichtung registrierten Zustandsänderung kann die Nachverfolgungsvorrichtung, d.h. das Kommunikationsmodul, in einen Sendemodus für eine gewisse Zeit überführt werden, damit die Nachverfolgungsvorrichtung mindestens ein Signal, z.B. eine Statusmitteilung in Form eines Datenpakets, sendet. Damit kann das Kommunikationsnetzwerk, welches das Signal empfängt, den Standort der Nachverfolgungsvorrichtung ermitteln. Da gemäß von Ausführungsformen das Senden des Signals ohne Bestätigung des Empfangs seitens des Kommunikationsnetzwerks erfolgen kann und dadurch der Nachverfolgungsvorrichtung nicht der Empfang bestätigt wird, kann vorgesehen sein, dass die Nachverfolgungsvorrichtung mehrfach ein Signal sendet. Zu diesem Zweck kann die Nachverfolgungsvorrichtung für einen bestimmte Zeitraum im Sendemodus verbleiben. Dies ist im Fall von lokal ungünstigen Empfangs- und Sendesituationen von Vorteil.

Die zeitliche Begrenzung des Sendemodus ist insbesondere für die Verringerung des Energieverbrauchs von Vorteil. Da die Nachverfolgungsvorrichtung bevorzugt nur in größeren zeitlichen Abständen mit dem Kommunikationsnetzwerk kommuniziert, in der übrigen Zeit bevorzugt jedoch weder im Sendemodus noch in einem Empfangsmodus ist, ist der Energieverbrauch sehr gering. Beispielsweise ist es möglich, dass die Nachverfolgungsvorrichtung, wenn Sie im Sendungszustand ist, d.h. zusammen mit einer ihr zugeordneten Sendung transportiert wird, einmal alle Stunde für eine kurze Zeit, z.B. für eine Minute, in den Sendemodus versetzt wird und mit dem Kommunikationsnetzwerk kommuniziert, sodass das Kommunikationsnetzwerk den aktuellen Standort der Nachverfolgungsvorrichtung ermitteln kann.

Der Sendemodus beschreibt, im Gegensatz zum Sendungszustand der Nachverfolgungsvorrichtung, lediglich den Zustand der Sendebereitschaft des Kommunikationsmoduls der Nachverfolgungsvorrichtung. Die Nachverfolgungsvorrichtung kann daher, wenn sie im Sendungszustand ist, d. h. zusammen mit einer Sendung transportiert wird, zeitweilig in einen Sendemodus und/oder einen Empfangsmodus versetzt werden. Auch im Betriebszustand und/oder Ruhezustand kann die Nachverfolgungsvorrichtung zeitweilig in den Sendemodus und/oder den Empfangsmodus versetzt sein. Der Sendemodus wird typischerweise dazu genutzt, dass die Nachverfolgungsvorrichtung Datenpakete an das Kommunikationsnetzwerk und/oder die Kontrolleinrichtung versendet, damit dann über das Kommunikationsnetzwerk die aktuelle Position der Nachverfolgungsvorrichtung ermittelt werden kann. Darüber hinaus können natürlich auch andere spezifische Informationen an die Kontrolleinrichtung übermittelt werden.

Gemäß einer weiteren Ausführungsform, die mit jeder weiteren hier beschriebenen Ausführungsform allein oder in beliebiger Kombination realisiert werden kann, sendet die aktivierte Nachverfolgungsvorrichtung ein Signal an das Kommunikationsnetzwerk, damit das Kommunikationsnetzwerk die Position der aktivierten Nachverfolgungsvorrichtung ermitteln kann, wenn die Nachverfolgungsvorrichtung bewegt wird oder wenn sich ein Bewegungszustand der aktivierten Nachverfolgungsvorrichtung ändert. Dadurch erfolgt dann eine zustandsbezogene Standortbestimmung, sofern die aktivierte Nachverfolgungsvorrichtung bewegt wird. Ist beispielsweise das Transportfahrzeug über Nacht auf einem Parkplatz abgestellt, bedarf es keiner regelmäßigen Standortbestimmung, da die letzte Standortbestimmung immer noch in der Kontrolleinrichtung gespeichert und dort abrufbar ist.

Es ist jedoch auch möglich, die regelmäßige Standortbestimmung durch kurzzeitige Kommunikation der Nachverfolgungsvorrichtung in periodischen Abständen mit der zustandsbezogenen Standortbestimmung, welche durch Bewegung der Nachverfolgungsvorrichtung aktiviert wird, d. h. aufgrund einer registrierten Zustandsänderung, zu kombinieren. So ist es möglich, dass die regelmäßige Standortbestimmung nach einer gewissen Zeit aktiviert wird, wenn die Nachverfolgungsvorrichtung über einen längeren Zeitraum nicht bewegt wird. Durch Bewegen der Nachverfolgungsvorrichtung kann die regelmäßige Standortbestimmung auch wieder deaktiviert werden.

Gemäß einer weiteren Ausführungsform, die mit jeder weiteren hier beschriebenen Ausführungsform allein oder in beliebiger Kombination realisiert werden kann, weisen die Nachverfolgungsvorrichtungen weiterhin jeweils ein Lokalisierungsmodul auf, um die Position der Nachverfolgungsvorrichtungen zu ermitteln, wobei die Ermittlung der Position durch das Lokalisierungsmodul unabhängig von der Ermittlung der Position durch das Kommunikationsnetzwerk ist. Das Lokalisierungsmodul kann insbesondere ein GPS-, und/oder ein Glonass- und/oder Beidou- und/oder ein Galileo-Modul aufweisen.

Sofern eine genauere Positionsbestimmung erforderlich ist, können die Nachverfolgungsvorrichtungen jeweils ein eigenes Lokalisierungsmodul aufweisen. Die jeweilige Nachverfolgungsvorrichtung kann dann entweder selbst wiederholt, z.B. periodisch, ihre aktuelle Position bestimmen und an die Kontrolleinrichtung übermitteln oder in einen internen Speicher für spätere Zwecke ablegen, oder nach Aufforderung durch die Kontrolleinrichtung ihre aktuelle Position bestimmen und an die Kontrolleinrichtung übermitteln.

Gemäß einer weiteren Ausführungsform, die mit jeder weiteren hier beschriebenen Ausführungsform allein oder in beliebiger Kombination realisiert werden kann, wird das Lokalisierungsmodul aktiviert, wenn die aktivierte Nachverfolgungsvorrichtung ein vorbestimmtes Gebiet erreicht. Die aktivierte Nachverfolgungsvorrichtung kann dann ihre durch das aktivierte Lokalisierungsmodul ermittelte Position an die Kontrolleinrichtung übermitteln.

Das vorbestimmte Gebiet kann beispielsweise das Zielgebiet des Empfängers sein. Dazu genügt es, wenn die Position zunächst durch das Kommunikationsnetzwerk überwacht und an die Kontrolleinrichtung regelmäßig übermittelt wird, und/oder auf Aufforderung durch die Kontrolleinrichtung übermittelt wird. Dabei kann vorgesehen sein, dass die Kontrolleinrichtung die Position auch an die Nachverfolgungsvorrichtung übermittelt. Erreicht die Sendung mit der Nachverfolgungsvorrichtung das Zielgebiet des Empfängers, kann beispielsweise durch die Kontrolleinrichtung an die Nachverfolgungsvorrichtung eine Anweisung zur Aktivierung des Lokalisierungsmoduls gesendet werden. Alternativ aktiviert die Nachverfolgungsvorrichtung selbstständig das Lokalisierungsmodul, wenn sie das Zielgebiet erreicht. Beispielsweise ist es möglich, dass der Nachverfolgungsvorrichtung vom Kommunikationsnetzwerk, ggf. nach Aufforderung durch die Kontrolleinrichtung, die aktuelle Position mitgeteilt wird und die Nachverfolgungsvorrichtung dann das Lokalisierungsmodul aktiviert, wenn die Nachverfolgungsvorrichtung das Zielgebiet erreicht. Alternativ kann die Nachverfolgungsvorrichtung selbständig ihre Position bestimmen, beispielsweise durch Triangulation unter Nutzung von Basisstationen des Kommunikationsnetzwerks. Das Zielgebiet bzw. dessen Größe kann zuvor festgelegt werden, beispielsweise automatisch von der Kontrolleinheit in Abhängigkeit von der Position des Empfängers, d.h. des Orts, an den die Sendung geschickt werden soll.

Gemäß einer weiteren Ausführungsform, die mit jeder weiteren hier beschriebenen Ausführungsform allein oder in beliebiger Kombination realisiert werden kann, weisen die Nachverfolgungsvorrichtungen weiterhin jeweils eine wiederaufladbare Energiequelle auf. Die Energiequelle kann beispielsweise bei der Aktivierung zumindest teilweise geladen werden. Die Energiequelle kann mit einer vergleichsweise geringen Kapazität ausgelegt werden, da der Energieverbrauch der Nachverfolgungsvorrichtungen gering ist. Dies liegt beispielsweise daran, dass die Nachverfolgungsvorrichtungen nur selten eine Kommunikation mit der Kontrolleinrichtung aufbauen. Wie weiter oben dargelegt, erfolgt die Lokalisation der Nachverfolgungsvorrichtungen, d.h. die Ermittlung der Position, mittels des Kommunikationsnetzwerkes, welches durch sporadischen Verbindungsaufbau in Kontakt mit den Nachverfolgungsvorrichtungen bleibt. Das Lokalisierungsmodul muss nicht aktiviert werden. Es kann erst bei Erreichen des Zielgebiets aktiviert werden. Als Energiequelle können beispielsweise wiederaufladbare Lithium-Ionen Knopfzellen zum Einsatz kommen.

Außerdem kommunizieren die Nachverfolgungsvorrichtungen insbesondere nur über Low Power WAN Kommunikationsnetzwerke, sodass der Energieverbrauch gegenüber Mobilfunknetzwerken deutlich geringer ist. Die Nachverfolgungsvorrichtungen verfügen daher bevorzugt nicht über ein Mobilfunkmodul (z.B. GSM, UMTS, LTE, GPRS, 5G), welches einen vergleichsweise hohen Energiebedarf hat.

Gemäß einer weiteren Ausführungsform, die mit jeder weiteren hier beschriebenen Ausführungsform allein oder in beliebiger Kombination realisiert werden kann, weisen die Nachverfolgungsvorrichtungen weiterhin jeweils einen maschinenlesbaren Code auf, der jeweils eine eindeutige Kennung umfasst. Der maschinenlesbare Code und damit die eindeutige Kennung wird durch den Nutzer bei der Aktivierung der jeweiligen Nachverfolgungsvorrichtung ausgelesen. Optional kann die eindeutige Kennung zusätzlich auch als durch Menschen auslesbare Schrift (z. B. Buchstaben, Zahlen und Sonderzeichen) auf der jeweiligen Nachverfolgungsvorrichtung sichtbar sein.

Die ausgelesene Kennung kann der Kontrolleinrichtung übermittelt werden. Weiterhin kann dadurch die aktivierte Nachverfolgungsvorrichtung einer konkreten Sendung zugeordnet werden, sodass die Sendung über die Nachverfolgungsvorrichtung verfolgt werden kann. Zusätzlich kann dem so gebildeten Paar aus Sendung und dieser Sendung zugeordneter Nachverfolgungsvorrichtung weiterhin auch die Zieladresse des Empfängers und/oder der Name und/oder eine Kundennummer des Empfängers zugeordnet werden. Die Zieladresse kann dann bei der Bestimmung des Zielgebiets genutzt werden.

Gemäß einer weiteren Ausführungsform, die mit jeder weiteren hier beschriebenen Ausführungsform allein oder in beliebiger Kombination realisiert werden kann, werden die Nachverfolgungsvorrichtungen den Nutzern durch einen Betreiber zur Verfügung gestellt.

Der Betreiber stellt den Nachverfolgungsdienst (Nachverfolgungssystem) zur Verfügung, d.h. er betreibt oder überwacht die Kontrolleinrichtung, welche mit den Nachverfolgungsvorrichtungen über das Kommunikationsnetzwerk kommuniziert. Über die Kontrolleinrichtung kann der aktuelle Standort der Nachverfolgungsvorrichtungen und damit der jeweiligen Sendung abgefragt werden. Hierzu kann der Betreiber den Nutzern, und ggf. den Empfängern, eine Schnittstelle oder einen Web-Zugang oder einen App-Zugang zur Verfügung stellen.

Der Betreiber stattet die Nutzer mit den Nachverfolgungsvorrichtungen aus. Der jeweilige Nutzer meldet seinen Bedarf an Nachverfolgungsvorrichtungen an den Betreiber. Dieser liefert dann die Nachverfolgungsvorrichtungen an den Nutzer. In Abhängigkeit von den Vorgaben der Nutzer liefert der Betreiber bei Bedarf weitere Nachverfolgungsvorrichtungen oder stellt sicher, dass Nachverfolgungsvorrichtungen, die gerade bei einem Empfänger eingetroffen sind, direkt zu den einzelnen Nutzern gesandt werden. Dazu werden dann die entsprechenden Zielanweisungen an die einzelnen Nachverfolgungsvorrichtungen übermittelt.

Gemäß einer weiteren Ausführungsform, die mit jeder weiteren hier beschriebenen Ausführungsform allein oder in beliebiger Kombination realisiert werden kann, werden die Zielanweisungen, nach Empfang der Sendung mit der Nachverfolgungsvorrichtung durch den Empfänger, zusätzlich in Abhängigkeit vom aktuellen Standort der Nachverfolgungsvorrichtung ermittelt. Damit wird ermöglicht, dass die jeweilige Nachverfolgungsvorrichtung zu dem bezüglich der aktuellen Position der Nachverfolgungsvorrichtung nächstliegenden Nutzer, bei dem ein hoher Bedarf an Nachverfolgungsvorrichtungen besteht, geschickt werden kann. Dies vermeidet lange Transportwege. Auch wenn beispielsweise ein weit entfernter Nutzer einen noch höheren Bedarf an Nachverfolgungsvorrichtungen haben sollte, kann es im Sinne einer optimalen Verteilung der Nachverfolgungsvorrichtungen sinnvoll sein, die Nachverfolgungsvorrichtungen nicht über weite Distanzen zu versenden, da dies die Transportwege und die Transportzeit erhöht und dadurch die Verfügbarkeit reduziert. Zusätzlich wird der ökologische Fußabdruck eines jeden Versandes verringert.

Gemäß einer weiteren Ausführungsform, die mit jeder weiteren hier beschriebenen Ausführungsform allein oder in beliebiger Kombination realisiert werden kann, übermittelt die Kontrolleinrichtung die Zielanweisungen an die Nachverfolgungsvorrichtung erst nach Empfang einer Bestätigung, dass ein vorbestimmtes Ereignis oder die Abfolge von mindestens zwei vorbestimmten Ereignissen aufgetreten ist. Beispielsweise kann das Einwerfen der Nachverfolgungsvorrichtung in einen Briefkasten oder die Rückgabe der Nachverfolgungsvorrichtung an einen Rücknahmeautomaten das oder die vorbestimmten Ereignisse umfassen oder darstellen.

Dadurch kann sichergestellt werden, dass die Zielanweisung erst dann übermittelt wird, wenn die Nachverfolgungsvorrichtung vom Empfänger dem Weiterverteilungskreislauf wieder zugeführt wurde. Beispielsweise kann ein Empfänger, beispielsweise eine Privatperson, die Nachverfolgungsvorrichtung erst nach einigen Tagen in einen Briefkasten einwerfen. Würde die Zielanweisung bereits bei Erhalt der Sendung durch den Empfänger übermittelt werden, dann könnte die Zielanweisung bei Einwurf in den Briefkasten einige Tage später bereits veraltet sein. Es ist daher aus Sicht der verbesserten Zurverfügungstellung von Nachverfolgungsvorrichtungen günstig, wenn die Zielanweisungen erst zu einem vergleichsweise späten Zeitpunkt übermittelt werden, beispielsweise, wenn die Nachverfolgungsvorrichtung vom Empfänger weiterversendet wurde. Es ist dabei möglich, dass der Nachverfolgungsvorrichtung zunächst eine allgemeine Zielanweisung (erste Zielanweisung) übermittelt wird, welche durch Ausgabe einer allgemeinen Zieladressinformation den Empfänger auffordert, die Nachverfolgungsvorrichtung beispielsweise in einen Briefkasten oder einen Rückgabeautomaten einzuwerfen. Weiterhin kann die Nachverfolgungsvorrichtung auch autonom allgemeine Anweisungen ausgeben, beispielsweise eine Aufforderung zur Rücksendung an den Betreiber, da die Batterie erneuert werden muss oder fast leer ist oder ein Softwareupdate durchgeführt werden muss, oder einfach eine Aufforderung, den Empfang der Sendung zu quittieren. Diese allgemeinen Anweisungen können in der Nachverfolgungsvorrichtung, beispielsweise im Speicher, hinterlegt sein. Erst nach Einwurf in den Briefkasten oder Rückgabeautomaten wird eine bestimmte Zielanweisung (zweite Zielanweisung) der Nachverfolgungsvorrichtung übermittelt und bewirkt, dass auf der grafischen Ausgabeeinheit Zieladressinformationen ausgegeben werden, beispielsweise die Adresse des zweiten Nutzers. Dies hat mehrere Vorteile.

Zum einen wird dem Empfänger nicht unmittelbar die Adresse des zweiten Nutzers mitgeteilt. Dies ist aus Datenschutzgründen sinnvoll. Zum anderen erfolgt die Übermittlung der Adresse des zweiten Nutzers erst zu einem Zeitpunkt, zu dem die Nachverfolgungsvorrichtung vom Empfänger bereist weiterversendet wurde. Dadurch kann die Kontrolleinrichtung an die Nachverfolgungsvorrichtung eine aktuell angepasste Zielanweisung übermitteln, welche die aktuellen Bedarfsanforderungen der Nutzer berücksichtigt. Beispielsweise ist es möglich, dass ein Empfänger der Nachverfolgungsvorrichtung diese nicht unmittelbar, sondern erst nach einigen Tagen in einen Briefkasten einwirft. War zum Zeitpunkt des Empfangs der Nachverfolgungsvorrichtung beim Empfänger der Bedarf an weiteren Nachverfolgungsvorrichtungen bei einem anderen Nutzer sehr hoch, kann sich diese Bedarfsanforderung bereits innerhalb von wenigen Tagen ändern. Würde die Kontrolleinrichtung bereits bei Empfang der Nachverfolgungsvorrichtung die Zielanweisungen festlegen, würde die Nachverfolgungsvorrichtung vom Empfänger auch noch Tage später an den anderen Nutzer gesendet werden, auch wenn dieser dann keinen hohen Bedarf mehr hat. Durch die Übermittlung der Zielanweisung erst nachdem die Nachverfolgungsvorrichtung vom Empfänger weiterversendet wurde, kann der aktuelle Bedarf berücksichtigt werden.

Wie weiter oben dargelegt, kann auch lediglich die zweite Zielanweisung übermittelt werden.

Anstelle eines Briefkastens kann die Nachverfolgungsvorrichtung vom Empfänger auch in einen speziellen Rücknahmeautomaten gegeben werden. Dadurch kann dem Empfänger beispielsweise ein Bonus gutgeschrieben werden. Dies stellt auch für den Empfänger einen Anreiz dar, die Nachverfolgungsvorrichtung wieder zur Verfügung zu stellen. Ein Bonus kann dem Empfänger auch bei Rücksendung über einen Briefkasten gutgeschrieben werden. Der Bonus kann beispielsweise bei Empfang der Nachverfolgungsvorrichtung durch den Nutzer (z.B. der zweite Nutzer), an den die Nachverfolgungsvorrichtung vom Empfänger weiterversendet wurde, gutgeschrieben werden.

Gemäß einer weiteren Ausführungsform, die mit jeder weiteren hier beschriebenen Ausführungsform allein oder in beliebiger Kombination realisiert werden kann, erfolgt die Bestätigung durch die Nachverfolgungsvorrichtung, dass das von der Nachverfolgungsvorrichtung erkannte Ereignis aufgetreten ist. Die Nachverfolgungsvorrichtung kann dazu über Sensoren verfügen, welche das Ereignis detektiert. Beispielsweise kann es sich dabei um einen Lichtsensor und einen Beschleunigungssensor handeln. Beim Einwerfen in einen Briefkasten ändern sich plötzlich die Helligkeitsverhältnisse, was durch den Lichtsensor erkannt werden kann. Bei Auftreffen der Nachverfolgungsvorrichtung auf den Boden des Briefkastens wird die Nachverfolgungsvorrichtung abrupt gestoppt. Hierzu dient der Beschleunigungssensor. Wenn beide Sensoren in einem zeitlich engen Abstand jeweils ein Ereignis (Lichtänderung, abruptes Stoppen) erkennen, dann wird von einem erkannten Ereignis ausgegangen.

Gemäß einer Ausführungsform, die mit jeder weiteren hier beschriebenen Ausführungsform allein oder in beliebiger Kombination realisiert werden kann, wird ein Verfahren zur Verteilung von Nachverfolgungsvorrichtungen vorgeschlagen, bei dem mehreren Nutzern jeweils eine Vielzahl von Nachverfolgungsvorrichtungen zur Verfügung steht, wobei die Nachverfolgungsvorrichtungen jeweils ein Kommunikationsmodul und eine grafische Ausgabeeinheit aufweisen und unabhängig voneinander über das Kommunikationsmodul drahtlos mit einer Kontrolleinrichtung kommunizieren können oder in Verbindung stehen. Die Nachverfolgungsvorrichtungen können wie weiter vorstehend beschrieben aufgebaut sein und über ein Kommunikationsnetzwerk mit der Kontrolleinrichtung kommunizieren. Die Kontrolleinrichtung überwacht den Lagerbestand der Nachverfolgungsvorrichtungen bei einigen oder allen Nutzern sowie den Bedarf an Nachverfolgungsvorrichtungen durch die Nutzer. Dazu kann beispielsweise die Kontrolleinrichtung die Position der einzelnen Nachverfolgungsvorrichtungen abfragen und dadurch erkennen, ob eine Nachverfolgungsvorrichtung gerade zur Nachverfolgung einer Sendung verwendet wird oder noch bei einem der Nutzer ist. Nach Nutzung einer Nachverfolgungsvorrichtung durch einen Nutzer zur Nachverfolgung einer Sendung an einen Empfänger übermittelt die Kontrolleinrichtung an diese Nachverfolgungsvorrichtung, nachdem diese Nachverfolgungsvorrichtung zusammen mit der Sendung bei dem Empfängern eingetroffen ist, Zielanweisungen, welche die Darstellung von Zieladressinformationen zum Weiterversenden an einen der Nutzer auf der grafischen Ausgabeeinheit bewirkt. Die Zielanweisungen werden durch die Kontrolleinheit in Abhängigkeit vom Bedarf an Nachverfolgungsvorrichtungen durch die Nutzer und/oder in Abhängigkeit vom Lagerbestand an Nachverfolgungsvorrichtungen bei den Nutzern ermittelt.

Das Verfahren zur Verteilung von Nachverfolgungsvorrichtungen kann unabhängig von der Art und Weise, ob und wie die Nachverfolgungsvorrichtungen aktiviert werden, zur Anwendung gelangen. Wesentlich ist lediglich, dass die Kontrolleinrichtung erkennt, dass die Nachverfolgungsvorrichtung beim Empfänger eingetroffen ist. Diese Erkennung kann durch Abfrage der Position und/oder durch Quittieren des Empfangs durch den Empfänger erfolgen, wie weiter oben beschrieben. Dann wird von der Kontrolleinrichtung ermittelt, an welchen Nutzer die Nachverfolgungsvorrichtung vom Empfänger weiterversendet werden soll. Dazu wird der Lagerbestand bei den einzelnen Nutzern, die geografische Verteilung der einzelnen Nutzer, sowie der aktuelle und aufgrund von Erfahrungswerten zu erwartende Bedarf an Nachverfolgungsvorrichtungen berücksichtigt. Der Lagerbestand ist der Kontrolleinrichtung entweder bekannt oder kann durch Abfrage der Position der Nachverfolgungsvorrichtungen ermittelt bzw. überprüft werden. Die geografische Verteilung ist der Kontrolleinrichtung ebenfalls bekannt. Der aktuelle Bedarf kann schwanken, und kann von den Nutzern als Bestandsmindestmenge fest vorgegeben oder von den Nutzern dynamisch angepasst werden. Der aktuelle Bedarf und der aktuelle Lagerbestand können als Kenngrößen verstanden werden, welche unter Berücksichtigung der geografischen Verteilung der Nutzer, d. h. insbesondere der Entfernung zwischen Empfänger und den einzelnen Nutzern, durch die Kontrolleinrichtung zur Ermittlung der Zieladressinformation herangezogen wird. Durch die Kontrolleinrichtung kann daher kontinuierlich eine Bewertung erfolgen, zu welchem Nutzer eine gerade bei einem Empfänger eingetroffene Nachverfolgungsvorrichtung weiterversendet werden soll. Damit ist ein effiziente, kostengünstige und ressourcenschonende Weiterverteilung der Nachverfolgungsvorrichtungen möglich.

Gemäß einer weiteren Ausführungsform, die mit jeder weiteren hier beschriebenen Ausführungsform allein oder in beliebiger Kombination realisiert werden kann, wird ein Verfahren zur Nachverfolgung von Transportbehältern offenbart, bei dem eine Vielzahl von Transportbehältern mit jeweils einer an dem jeweiligen Transportbehälter insbesondere lösbar befestigten Nachverfolgungsvorrichtung zur Nutzung an verschiedenen Standorten bereitgestellt wird, wobei die Nachverfolgungsvorrichtungen jeweils ein Kommunikationsmodul aufweisen und die Nachverfolgungsvorrichtungen unabhängig voneinander über das Kommunikationsmodul drahtlos mit einer Kontrolleinrichtung kommunizieren können, wobei die Transportbehälter zur Aufnahme eines oder mehrerer Transportgüter eingerichtet sind. Zum Versenden von Transportgütern zwischen den Standorten werden mindestens einige der Transportbehälter verwendet, wobei in einem Transportbehälter mindestens ein Transportgut aufgenommen wird, welches mittels des Transportbehälters von einem zu einem anderen Standort versendet wird. Der Kontrolleinrichtung wird wiederholt während des Transports der Transportbehälter zwischen den Standorten die Position der an den Transportbehältern befestigten Nachverfolgungsvorrichtungen und damit der Transportbehälter übermittelt. Die Position der an den Transportbehältern befestigten Nachverfolgungsvorrichtungen, und damit die Position der Transportbehälter beim Transport der Transportgüter, kann über die Kontrolleinrichtung nachverfolgt werden. Die Kontrolleinrichtung überwacht den Lagerbestand der Nachverfolgungsvorrichtungen und damit der Transportbehälter an einigen oder allen Standorten. Die Kontrolleinrichtung erstellt in Abhängigkeit vom Bedarf an Transportbehältern an den einzelnen Standorten und/oder in Abhängigkeit vom Lagerbestand an Transportbehältern an den einzelnen Standorten Anweisungen zum Versenden von leeren Transportbehältern ohne Transportgüter zwischen den Standorten. Die leeren Transportbehälter werden auf Basis der erstellten Anweisungen zwischen den Standorten versendet werden.

Bei diesem Verfahren ist eine einzelne Nachverfolgungsvorrichtung fest, bevorzugt lösbar, mit einem Transportbehälter verbunden. Bevorzugt ist die Nachverfolgungsvorrichtung an der Außenseite des Transportbehälters befestigt, sodass die Nachverfolgungsvorrichtung einfach ausgetauscht werden kann.

Bei dem Transportbehälter handelt es sich bevorzugt um einen formstabilen Behälter, beispielsweise aus Kunststoff oder Metall, der insbesondere mehrfach wiederverwendbar ist im Gegensatz zur Verpackungen aus Pappe und Papier, deren Haltbarkeit oftmals nur für wenige Verwendungen genügt. Die Transportbehälter sind nicht auf bestimmte Güter eingeschränkt. Beispielsweise kann ein Transportbehälter auch ein Behälterwagen oder auch spezielle Paletten zum Transport von Gütern, auch größeren Gütern (z.B. Motorräder) sein. Auch eine Getränkekiste kann ein Transportbehälter sein.

Der Transportbehälter kann eine verschließbare Öffnung aufweisen, durch welche das Transportgut in den Innenraum des Transportbehälters eingeführt und wieder entnommen werden kann. Beispielsweise kann der Transportbehälter einen Deckel aufweisen. Es ist jedoch auch möglich, dass der Transportbehälter einseitig offen ist und keinen Deckel aufweist.

Grundsätzlich kann das Verfahren nach dem gleichen Prinzip wie weiter vorstehend für die Sendungen durchgeführt werden, sodass hier auf eine Wiederholung verzichtet wird. Allerdings ist eine Aktivierung der Nachverfolgungsvorrichtung nicht jedes Mal unbedingt nötig. Die Nachverfolgungsvorrichtung kann dauerhaft aktiviert sein, da die Nachverfolgungsvorrichtung beispielsweise mit einer größeren Energiequelle ausgestattet werden kann. Auch muss die Form der Nachverfolgungsvorrichtung nicht der weiter oben beschriebenen entsprechen, da eine separate Rückführung der Nachverfolgungsvorrichtung nicht wie vorab beschrieben nötig ist.

Mittels eines Transportbehälters wird ein Transportgut beispielsweise von einem ersten Standort aus an einen zweiten Standort überführt. Am zweiten Standort wird das Transportgut aus dem Transportbehälter entnommen. Ebenso kann ein anderes Transportgut mit einem weiteren Transportbehälter beispielsweise von einem dritten Standort aus an einen vierten Standort überführt werden und dort aus dem weiteren Transportbehälter entnommen werden. Grundsätzlich können bedarfsweise zumindest einige der Transportbehälter zum Transport von Transportgütern, welche in die Transportbehälter aufgenommen wurden, zum Transport zwischen den Standorten verwendet werden. Nach Erreichen des Zielstandorts werden die jeweiligen Transportgüter den Transportbehältern entnommen und die dann leeren Transportbehälter stehen dann für die Aufnahme und den Transport von weiteren Transportgütern zur Verfügung.

Sowohl der erste, zweite, dritte als auch der vierte Standort, oder alle Standorte, können sich innerhalb eines Unternehmens befinden bzw. das Unternehmen hat Zugang zu diesen Standorten. Das Verfahren zur Nachverfolgung von Transportbehältern kann daher auch innerhalb eines Unternehmens, oder innerhalb einer Unternehmensgruppe, genutzt werden. Alternativ kann der erste Standort auch ein Ort sein, der einem ersten Nutzer (z. B. ein erstes Unternehmen) zugeordnet ist und der zweite Standort ein Ort, der einem zweiten Nutzer (z. B. ein zweites Unternehmen) zugeordnet ist. Die Transportbehälter können über verschiedene Standorte bei einem Nutzer, d. h. innerhalb eines Unternehmens, oder über verschiedene Standorte bei unterschiedlichen Nutzern, d. h. bei unterschiedlichen Unternehmen, verteilt sein. Die Ermittlung des Bedarfs und die Weiterversendung der Transportbehälter nach Nutzung kann wie im Zusammenhang mit den Nachverfolgungsvorrichtungen bei Nachverfolgung einer Sendung erfolgen.

Im Unterschied zur Nachverfolgung von Sendungen, bei denen es sich um verschiedene Sendungen handeln kann, erfolgt die Nachverfolgung der Transportbehälter und Weiterverteilung der leeren Transportbehälter nur innerhalb einer Klasse von gleichen Transportbehältern. Beispielsweise werden nur Transportbehälter mit gleichem Aufbau, gleicher Größe und gleicher Verwendungsart überwacht. Nutzt ein Unternehmen beispielsweise zwei verschiedene Klassen von Transportbehältern, die sich beispielsweise in ihrer Größe und oder Aufbau unterscheiden, wird die Verteilung der leeren Transportbehälter nur innerhalb der gleichen Klassen ermittelt. Der Bedarf und/oder der Lagerbestand an den einzelnen Standorten wird daher nur innerhalb einer Klasse von Transportbehältern ermittelt und zum Erstellen der Anweisungen für die bedarfsabhängige bzw. lagerbestandsabhängige Weiterverteilung von leeren Transportbehältern in dieser Klasse verwendet. Verschiedene Klassen von Transportbehältern können beispielsweise offene Transportkisten mit einem einheitlichen Aufbau und Größe, Paletten mit einem einheitlichen Aufbau und Größe, und verschließbare Transportkisten mit einem einheitlichen Aufbau und Größe sein.

Es ist jedoch möglich, dass die Kontrolleinrichtung den Bedarf und/oder den Lagerbestand von Transportbehältern von zwei oder mehr unterschiedlichen Klassen an den einzelnen Standorten überwacht und für jede Klasse von Transportbehältern eigene Anweisungen zum Versenden der jeweils leeren Transportbehälter erstellt. Die Überwachung des Bedarf und/oder des Lagerbestands von Transportbehältern sowie die Erstellung von Anweisungen zum Versenden der leeren Transportbehälter dieser Klasse erfolgen unabhängig von den Transportbehältern einer anderen Klasse. An den Transportbehältern der unterschiedlichen Klassen können aber die gleichen Nachverfolgungsvorrichtungen befestigt sein, so dass mit einem einheitlichen System, d. h. insbesondere mit einer Kontrolleinrichtung, zwei oder mehrere Klassen an Transportbehälter überwacht werden können.

Im Gegensatz zur Nachverfolgung von Sendungen ist eine Zuordnung zwischen der eindeutigen Kennung der Nachverfolgungsvorrichtung und einer Kennung des Transportguts, welches mit einem Transportbehälter befördert wird, nicht unbedingt nötig, da hier die Verfolgung und nachfolgende Weiterversendung der Transportbehälter im Vordergrund steht, damit ein Transportbehälter nach dessen Nutzung für den Transport von Transportgütern von einem Standort zu einem anderen Standort möglichst schnell und effizient wieder zur Verfügung gestellt werden kann, d. h. insbesondere an einen Standort weiterversendet wird, an dem gerade ein hoher Bedarf an Transportbehältern besteht. Es ist jedoch möglich, dass eine Zuordnung von eindeutiger Kennung der Nachverfolgungsvorrichtung zur Behälterkennung des Transportbehälters erfolgt und der Kontrolleinrichtung übermittelt wird.

Auch bei der Nachverfolgung und anschließenden Weitersendung der Transportbehälter erfolgt die Erstellung von Anweisungen zum Versenden von leeren Transportbehältern in Abhängigkeit vom Bedarf an Transportbehältern an den einzelnen Standorten und/oder in Abhängigkeit vom Lagerbestand an Transportbehältern an den einzelnen Standorten. Optional kann auch hier die geografische Verteilung, d. h. die Entfernung der Standorte voneinander berücksichtigt werden.

Bei den Transportbehältern handelt es sich bevorzugt um Transportbehälter, welche im lokalen oder innerbetrieblichen Warenverkehr verwendet werden, beispielsweise Transportboxen, die von einer Person bewegt werden können. Container für den Fernverkehr, beispielsweise 20 foot oder 40 foot Container, werden dagegen nicht als Transportbehälter für den lokalen oder innerbetrieblichen Warenverkehr angesehen. Bevorzugt überschreitet die größte Ausdehnung (Länge, Breite, oder Höhe) eines Transportbehälters nicht 2 m.

Gemäß einer weiteren Ausführungsform, die mit jeder weiteren hier beschriebenen Ausführungsform allein oder in beliebiger Kombination realisiert werden kann, kann das Verfahren zur Nachverfolgung von Transportbehältern mindestens eines der folgenden Merkmale, oder eine Kombination dieser Merkmale, umfassen:
(1) Die Nachverfolgungsvorrichtungen weisen jeweils eine grafische Ausgabeeinheit auf, wobei die Kontrolleinrichtung an die Nachverfolgungsvorrichtungen Zielanweisungen übermittelt, welche die Darstellung von Zieladressinformationen zum Versenden der leeren Transportbehälter mit der jeweiligen Nachverfolgungsvorrichtung an einen anderen Standort auf der grafischen Ausgabeeinheit bewirkt, wobei die Kontrolleinrichtung die Zielanweisungen in Abhängigkeit vom Bedarf an Transportbehältern an den einzelnen Standorten und/oder in Abhängigkeit vom Lagerbestand an Transportbehältern an den einzelnen Standorten ermittelt.
(2) Die Nachverfolgungsvorrichtungen weisen jeweils ein Datenkommunikationsmodul, beispielsweise ein Nahfeldkommunikationsmodul und/oder ein Kurzstreckenkommunikationsmodul, auf, um kontaktlos mit einem Bediengerät zu kommunizieren, wobei die Kontrolleinrichtung an die Nachverfolgungsvorrichtung Zielanweisungen übermittelt, welche mittels eines Bediengeräts über das Datenkommunikationsmodul kontaktlos auslesbar sind und die Ausgabe von Zieladressinformationen zum Versenden der leeren Transportbehälter mit der Nachverfolgungsvorrichtung an andere Standorte auf dem Bediengerät bewirkt, wobei die Kontrolleinrichtung die Zielanweisungen in Abhängigkeit vom Bedarf an Transportbehältern an den einzelnen Standorten und/oder in Abhängigkeit vom Lagerbestand an Transportbehältern an den einzelnen Standorten ermittelt.
(3) Die Nachverfolgungsvorrichtungen weisen jeweils ein Datenkommunikationsmodul, beispielsweise ein Nahfeldkommunikationsmodul und/oder ein Kurzstreckenkommunikationsmodul, auf, welches mit an den einzelnen Standorten verteilten Empfänger-Sender-Einheiten zur Positionsbestimmung der Nachverfolgungsvorrichtungen, und damit zur Positionsbestimmung der Transportbehälter, kommunizieren können, wobei mittels der Empfänger-Sender-Einheiten die Positionen von Transportbehältern ermittelt und an die Kontrolleinrichtung übermittelt werden, wobei die Kontrolleinrichtung auf Basis der ermittelten Positionen überprüft, ob leere Transportbehälter gemäß der von der Kontrolleinrichtung erstellten Anweisungen zur Versendung bereitgestellt und/oder bereits versendet wurden.

Gemäß einer weiteren Ausführungsform, die mit jeder weiteren hier beschriebenen Ausführungsform allein oder in beliebiger Kombination realisiert werden kann, wird ein Verfahren zur Nachverfolgung von Transportbehältern und zur Verteilung von Transportbehältern vorgeschlagen, wobei eine Vielzahl von Transportbehältern mit jeweils einer an dem jeweiligen Transportbehälter befestigten Nachverfolgungsvorrichtung zur Nutzung an verschiedenen Standorten bereitgestellt wird. Die Nachverfolgungsvorrichtungen weisen jeweils ein Kommunikationsmodul, ein Prozessormodul und eine grafische Ausgabeeinheit auf und können unabhängig voneinander über das Kommunikationsmodul drahtlos mit einer Kontrolleinrichtung kommunizieren oder in Verbindung stehen. Die Transportbehälter sind zur Aufnahme eines oder mehrerer Transportgüter eingerichtet, wobei von einem ersten Standort aus mittels eines Transportbehälters mit einer daran befestigten Nachverfolgungsvorrichtung mindestens ein Transportgut, welches in dem Transportbehälter aufgenommen wurde, an einen zweiten Standort versendet wird. Der Kontrolleinrichtung wird wiederholt während des Transports des Transportbehälters zur Zieladresse die Position der Nachverfolgungsvorrichtung übermittelt. Die Position der am Transportbehälter befestigten Nachverfolgungsvorrichtung kann über die Kontrolleinrichtung nachverfolgt werden. Die Kontrolleinrichtung überwacht den Lagerbestand der Nachverfolgungsvorrichtungen und damit der Transportbehälter an einigen oder allen Standorten. Die Kontrolleinrichtung übermittelt an die Nachverfolgungsvorrichtung, nachdem der Transportbehälter zusammen mit dieser Nachverfolgungsvorrichtung am zweiten Standort eingetroffen ist, Zielanweisungen, welche die Darstellung von Zieladressinformationen zum Weiterversenden des Transportbehälters mit der Nachverfolgungsvorrichtung an einen anderen Standort auf der grafischen Ausgabeeinheit bewirkt, wobei die Kontrolleinrichtung die Zielanweisungen in Abhängigkeit vom Bedarf an Transportbehältern an den einzelnen Standorten und/oder in Abhängigkeit vom Lagerbestand an Transportbehältern an den einzelnen Standorten ermittelt.

Bei den auf der grafischen Ausgabeeinheit angegebenen Zieladressinformationen kann es sich auch nur um einen maschinenlesbaren Code, beispielsweise einen innerbetrieblichen Code, handeln, wenn die Transportbehälter nur innerhalb eines Unternehmens genutzt werden.

Die für die Nachverfolgung von Transportbehältern verwendeten Nachverfolgungsvorrichtungen können sich von den Nachverfolgungsvorrichtungen unterscheiden, die für die Nachverfolgung von Sendungen verwendet werden. Bei den für die Nachverfolgung von Sendungen verwendeten Nachverfolgungsvorrichtungen ist eine grafische Ausgabeeinheit von Bedeutung, da diese Nachverfolgungsvorrichtungen einzeln beispielsweise als Postsendung an einen anderen Nutzer weiterverteilt werden. Auf der grafischen Ausgabeeinheit wird daher die jeweilige Zieladressinformation für die Versendung über den Postweg angezeigt.

Bei den für die Nachverfolgung von Transportbehältern verwendeten Nachverfolgungsvorrichtungen ist eine grafische Ausgabeeinheit nicht zwingend erforderlich, kann jedoch vorteilhafterweise zur Anzeige von Zieladressinformationen oder anderen Informationen vorgesehen sein.

Alternativ oder zusätzlich können die für die Nachverfolgung von Transportbehältern verwendeten Nachverfolgungsvorrichtungen das oben beschriebene Datenkommunikationsmodul aufweisen, damit eine kontaktlose Kommunikation mit einem Bediengerät und/oder eine lokale Positionsbestimmung möglich ist. Über das Datenkommunikationsmodul können auch die Zielanweisungen kontaktlos von der Nachverfolgungsvorrichtung an das Bediengerät übermittelt werden, welche die Ausgabe von Zieladressinformationen zum Versenden der leeren Transportbehälter an andere Standorte auf dem Bediengerät, beispielsweise einer grafischen Ausgabeeinheit des Bediengeräts, bewirken. Ein Nutzer kann daher ein Bediengerät in die Nähe einer an einem Transportbehälter befestigten Nachverfolgungsvorrichtung führen und diese dadurch auslesen.

Das Datenkommunikationsmoduls kann weiterhin auch mit an den einzelnen Standorten verteilten Empfänger-Sender-Einheiten zur Positionsbestimmung der Nachverfolgungsvorrichtungen, und damit zur Positionsbestimmung der Transportbehälter, kommunizieren. Bei den Empfänger-Sender-Einheiten kann es sich bevorzugt um Bluetooth- Empfänger-Sender-Einheiten handeln, wie weiter oben beschrieben. Das Datenkommunikationsmodul umfasst daher bevorzugt ein Bluetooth-Modul.

Mittels der Empfänger-Sender-Einheiten können die Positionen von Transportbehältern ermittelt, beispielsweise innerhalb eines einzelnen Standorts, und an die Kontrolleinrichtung übermittelt werden. Dadurch kann die Kontrolleinrichtung auf Basis der ermittelten Positionen überprüfen, ob leere Transportbehälter gemäß der von der Kontrolleinrichtung erstellten Anweisungen zur Versendung bereitgestellt und/oder bereits versendet wurden.

Ein Standort kann beispielsweise ein Unternehmensgelände, ein einzelnes Gebäude, oder ein definiertes Gebiet sein. Beispielsweise können innerhalb eines Unternehmensgeländes zwei oder mehr Standorte vorhanden sein, beispielsweise ein Wareneingang und ein Warenausgang, ein Lagergebäude, ein Warenverteilgebäude, und ein Produktionsgebäude. Die Standorte können auch über mehrere voneinander entfernte Unternehmensgelände verteilt sein oder einzelne "Stützpunkte" betreffen. Ein illustratives Beispiel ist ein Postunternehmen, das mittels der Transportbehälter Postsendungen zu in einem Stadtgebiet verteilten lokalen Verteilzentren oder Briefpost-Verteilerkästen bringt. Die lokalen Verteilzentren / Depots und Briefpost-Ablagekästen können dann eigene Standorte darstellen.

Die für die Nachverfolgung von Sendungen verwendeten Nachverfolgungsvorrichtungen können bevorzugt zusätzlich das oben beschriebene Datenkommunikationsmodul aufweisen.

Bevorzugt weist die Nachverfolgungsvorrichtung für alle hier beschriebenen Verfahren insbesondere das Kommunikationsmodul (erstes Kommunikationsmodul) für die Kommunikation mit dem Kommunikationsnetzwerk, eine aufladbare Energiequelle sowie ein Prozessormodul aus. Das Prozessormodul kann beispielsweise Anweisungen (Software) zum Betreiben der Nachverfolgungsvorrichtung ausführen und dadurch die erforderlichen Funktionen der Nachverfolgungsvorrichtung bereitstellen. Insbesondere die für die Nachverfolgung von Sendungen benutzen Nachverfolgungsvorrichtungen weisen weiterhin eine grafische Ausgabeeinheit auf.

Weiterhin kann die Nachverfolgungsvorrichtung bevorzugt eine Eingabe- und Ausgabevorrichtung aufweisen. Diese kann ein Datenkommunikationsmodul, z. B. ein Nahfeldkommunikationsmodul (zweites Kommunikationsmodul) und/oder ein Kurzstreckenkommunikationsmodul (drittes Kommunikationsmodul), aufweisen bzw. das Datenkommunikationsmodul kann eine Eingabe- und Ausgabevorrichtung darstellen. Bei Verwendung der Nachverfolgungsvorrichtung kann für eine lokale Ein- und Ausgabe das Nahfeldkommunikationsmodul und/oder das Kurzstreckenkommunikationsmodul verwendet werden.

Beispielsweise werden Nutzer, welche lediglich über ein mobiles Endgerät, wie beispielsweise ein Mobiltelefon, als Bediengerät für die Nachverfolgungsvorrichtung verfügen und keinen sehr hohen Bedarf an Nachverfolgungsvorrichtungen haben, mit der Nachverfolgungsvorrichtung mittels des Nahfeldkommunikationsmodul kommunizieren, da dies eine vergleichsweise einfache und unmittelbare Kommunikation ohne vorheriges Pairing ermöglicht. Außerdem ist die weiter oben beschriebene Erkennung der relativen Position innerhalb von Gebäuden für diese Nutzer eher nicht von Interesse. Aus der Nachverfolgungsvorrichtung über das Bediengerät ausgelesene Informationen können dann auf einer grafischen Ausgabeeinheit des Bediengeräts dem Nutzer angezeigt werden.

Bei Nutzern mit hohem Bedarf an Nachverfolgungsvorrichtung, die über entsprechende Versandsysteme verfügen, oder bei Nutzern zur Nachverfolgung von Transportbehältern, ist dagegen die Kommunikation über das Kurzstreckenkommunikationsmodul oder zusätzlich über das Nahfeldkommunikationsmodul von Interesse, da aufgrund der etwas höheren Reichweite des Kurzstreckenkommunikationsmoduls hier eine schnelle Erkennung der Position der Nachverfolgungsvorrichtung möglich ist.

Über das Kurzstreckenkommunikationsmodul, insbesondere bei Ausgestaltung als Bluetooth-Modul, kann beispielsweise eine Aktualisierung der in der Nachverfolgungsvorrichtung abgelegten Software ermöglicht werden. Außerdem ist eine Lokalisierung der Nachverfolgungsvorrichtungen in Gebäuden, Verteilsystemen oder Versandsystemen, oder an den einzelnen Standorten mittels des Kurzstreckenkommunikationsmoduls möglich. Ebenso gestattet ein Bluetooth-Modul eine Kommunikation mit allen Bluetooth-fähigen Geräten, beispielsweise tragbaren Computern, Tablets und Mobiltelefonen.

Weiterhin kann die Nachverfolgungsvorrichtung bevorzugt mindestens zwei Sensoren ausgewählt aus einem Lichtsensor, einem Beschleunigungssensor, Biegesensor und einem Drehratensensor aufweisen. Diese Sensoren dienen zur Erkennung der weiter oben beschriebenen Ereignisse. Bei Nachverfolgungsvorrichtungen für Transportbehälter ist ein Biegesensor optional.

Die Nachverfolgungsvorrichtung, insbesondere für die Nachverfolgung von Sendungen, hat bevorzugt einen flächigen Grundkörper mit einem Mindestmaß von bevorzugt 7 cm x 10 cm und insbesondere von 9 cm x 14 cm. Das Mindestmaß ergibt sich aus den Anforderungen von Postunternehmen für die Versendung von Briefsendungen, da diese eine bestimmte Größe haben sollen. Diese Anforderungen können in verschiedenen Ländern und auch zwischen einzelnen Postunternehmen unterschiedlich sein. Die Länge beträgt bevorzugt mindestens das 1,4-fache der Breite. Bevorzugt hat der flächige Grundkörper eine Dicke von nicht mehr als 1 cm und insbesondere nicht mehr als 0,5 cm. Auch in derart dünnen Grundkörpern können die einzelnen Komponenten der Nachverfolgungsvorrichtung integriert werden. Bevorzugt hat die Nachverfolgungsvorrichtung eine Maximalgröße von (Länge x Breite x Dicke) von 235 mm x 125 mm x 5 mm.

Die für die Nachverfolgung von Transportbehältern verwendeten Nachverfolgungsvorrichtungen können auch andere Außenmaße aufweisen, da diese Nachverfolgungsvorrichtungen nicht separat weiterversendet werden und daher nicht notwendigerweise typische Abmessungen für Postsendungen aufweisen müssen. Auch können diese Nachverfolgungsvorrichtungen beispielsweise Energiequellen mit höherer Kapazität enthalten.

Im Folgenden soll die Erfindung anhand von Ausführungsbeispielen erläutert werden, ohne darauf beschränkt zu sein. Es zeigen:
Figur 1 zeigt eine Nachverfolgungsvorrichtung gemäß einer Ausführungsform.
Figur 2 zeigt eine Nachverfolgungsvorrichtung gemäß einer weiteren Ausführungsform.
Figur 3 zeigt schematisch den Ablauf eines Verfahrens zur Nachverfolgung von Sendungen gemäß einer Ausführungsform.
Figur 4 zeigt schematisch den Ablauf eines Verfahrens zur Nachverfolgung von Sendungen gemäß einer Ausführungsform unter Berücksichtigung von mehreren Nutzern.
Figur 5 zeigt schematisch eine Vorrichtung zur Aufbewahrung und Ausgabe einer Vielzahl von Nachverfolgungsvorrichtungen.
Figur 6 zeigt schematisch die Bedienung einer Nachverfolgungsvorrichtung mittels eines Mobiltelefons, welches mit der Nachverfolgungsvorrichtung über das Nahfeldkommunikationsmodul kommuniziert.
Figur 7 zeigt schematisch eine Ladevorrichtung für eine Nachverfolgungsvorrichtung.
Figur 8A zeigt schematisch einen Transportbehälter mit einer daran befestigten Nachverfolgungsvorrichtung, Figur 8B zeigt einen Transportbehälter in Form eines Transportwagens mit einer daran befestigten Nachverfolgungsvorrichtung.
Figur 9 zeigt schematisch ein Versandsystem mit einer Paketlabelstation und einer Station, bei welcher die Zuordnung zwischen eindeutiger Kennung und Sendungskennung unter Verwendung von Bluetooth-Empfänger-Sender-Einheiten vorgenommen wird.
Figur 10 zeigt schematisch ein Verfahren zur Nachverfolgung und Weiterverteilung von Transportbehältern zwischen verschiedenen Standorten.

Für die Nachverfolgung von Sendungen oder Transportbehältern werden Nachverfolgungsvorrichtungen vorgeschlagen, die besonders kompakt aufgebaut und leicht sind. Insbesondere können die Nachverfolgungsvorrichtungen in einer Dimension, welche als Dicke bezeichnet wird, gering ausgeführt sein. Bevorzugt haben die Nachverfolgungsvorrichtungen einen flächigen Grundkörper mit einer geringen Dicke, die beispielsweise nicht mehr als 5 mm betragen sollte. Bevorzugt beträgt die Dicke zwischen 1 mm und 5 mm. Für den Grundkörper wird ein flexibles aber formstabiles Material verwendet. Insbesondere ist das Material, aus dem der Grundkörper gebildet ist, biegefähig.

Für die Zwecke der einfachen Weiterversendung einer Nachverfolgungsvorrichtung von einem Empfänger zu einem anderen Nutzer ist es von Vorteil, wenn die äußere Form und Größe die Abmessungen eines C6/5 Briefumschlages (DIN 678-1:1998-01) nicht überschreitet. Günstig ist, wenn die Nachverfolgungsvorrichtung eine Größe von (Länge x Breite x Dicke) von 235 mm x 125 mm x 5 mm nicht übersteigt. Weiterhin ist es günstig, wenn das Gewicht der Nachverfolgungsvorrichtung 50 g nicht übersteigt. Bevorzugt ist ein Gewicht von nicht mehr als 20 g.

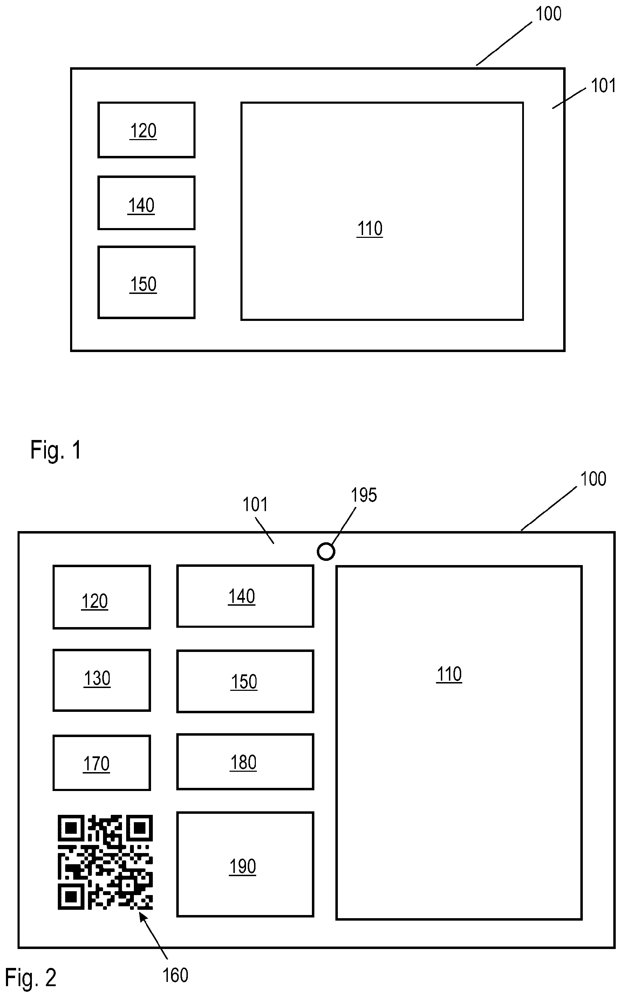

Figur 1 zeigt eine Nachverfolgungsvorrichtung 100 gemäß einer Ausführungsform. Die Nachverfolgungsvorrichtung 100 weist einen Grundkörper 101 mit den vorstehend beschriebenen Eigenschaften auf. Der Grundkörper 101 hat zwei gegenüberliegende Seitenflächen, wobei in Figur 1 nur die als Vorderseite bezeichnete Seitenfläche zu sehen ist. Weiterhin weist die Nachverfolgungsvorrichtung 100 zumindest eine grafische Ausgabeeinheit 110, ein Kommunikationsmodul (Fernkommunikationsmodul) 120, ein Prozessormodul 140, und eine Energiequelle 150 auf.

Das Kommunikationsmodul 120 ist eingerichtet und konfiguriert, eine Verbindung mit einem hier nicht dargestellten Kommunikationsnetzwerk herzustellen und zu kommunizieren. Kommunizieren umfasst hier sowohl das Senden von Daten von der Nachverfolgungsvorrichtung 100 zum Kommunikationsnetzwerk als auch der Empfang von Daten durch die Nachverfolgungsvorrichtung 100. Das Kommunikationsmodul 120 kann zeitweilig in unterschiedlichen Modi betrieben werden: Sendemodus, Empfangsmodus und Sende- und Empfangsmodus. Im Sendemodus ist der Empfang von Daten inaktiviert. Ebenso ist im Empfangsmodus das Senden von Daten inaktiviert. Lediglich im Sende- und Empfangsmodus ist sowohl das Senden als auch das Empfangen von Daten aktiviert.

Durch Senden von Daten mittels des Kommunikationsmoduls 120 kann das Kommunikationsnetzwerk die Position bzw. den Standort der Nachverfolgungsvorrichtung 100 ermitteln. Dazu genügt es, wenn über das Kommunikationsmodul 120 lediglich kurze Datenpakete versendet werden oder überhaupt eine Verbindung zum Kommunikationsnetzwerk hergestellt wird. Im einfachsten Fall genügt es hierzu, dass das Kommunikationsmodul 120 im Sendemodus betrieben wird. Im Sendemodus reagiert das Kommunikationsmodul 120 nicht auf vom Kommunikationsnetzwerk gesendete Daten. Beispielsweise wird nicht auf eine Empfangsbestätigung der vom Kommunikationsmodul 120 gesendeten Daten reagiert. In diesem ausschließlich auf Senden ausgerichteten Sendemodus wird das Senden von Daten häufig auch als unidirektional (uplink) bezeichnet.

Da das Kommunikationsmodul 120 selektiv im Sendemodus, Empfangsmodus und Sende- und Empfangsmodus betrieben werden kann, kann für den jeweiligen Zweck der geeignete Modus ausgewählt werden, um die Nachverfolgungsvorrichtung 100 möglichst energieverbrauchsschonend zu betreiben. Insbesondere soll der Energieverbrauch durch die einzelnen Komponenten der Nachverfolgungsvorrichtung 100 möglichst gering gehalten werden, um die Betriebszeit der Nachverfolgungsvorrichtung 100 zu verlängern. Das Kommunikationsmodul 120 kann weiterhin eine Antenne umfassen. Alternativ ist eine Antenne in den Grundkörper 101 geeignet integriert und mit dem Kommunikationsmodul 120 verbunden.

Mittels der grafischen Ausgabeeinheit 110 können Informationen visuell dargestellt werden. Die grafische Ausgabeeinheit 110 kann in Form eines zweidimensionalen Displays realisiert sein. Die grafische Ausgabeeinheit 110 sollte ebenfalls biegefähig sein. Beispielsweise kann die grafische Ausgabeeinheit 110 als e-Paper Display, Foliendisplay, LCD, LED oder OLED ausgeführt sein. Die Verwendung derartiger Displays ermöglicht es, die grafische Ausgabeeinheit 110 relativ dünn auszugestalten, sodass die Nachverfolgungsvorrichtung insgesamt eine geringe Dicke aufweist.

Bei der Energiequelle 150 kann es sich beispielsweise um eine wiederaufladbare Batterie handeln. Bevorzugt werden nicht biegefähige Energiequellen 150, beispielsweise wiederaufladbare Knopfzellen, eingesetzt, da diese ausreichend stabil und sicher sind. Die wiederaufladbare Batterie kann beispielsweise kontaktlos aufgeladen werden. Alternativ oder zusätzlich ist es möglich, dass eine Kontaktvorrichtung vorgesehen ist, um der Batterie Energie extern zuzuführen und diese dabei zu laden. Beispielsweise kann an einem Seitenrand des Grundkörpers 101 eine Steckverbindung als Kontaktvorrichtung vorgesehen sein. Die Steckverbindung kann sowohl zum Laden der Energiequelle 150 als auch als Datenschnittstelle dienen.

Mit Bezug auf Figur 2 wird eine Nachverfolgungsvorrichtung gemäß einer weiteren Ausführungsform beschrieben, welche die Ausführungsform gemäß Figur 1 erweitert. Zusätzlich zur grafischen Ausgabeeinheit 110, Energiequelle 150, Prozessormodul 140 und Kommunikationsmodul 120 weist die Nachverfolgungsvorrichtung 100 insbesondere noch ein Speichermodul 190 sowie einen maschinenlesbaren Code 160 auf. Das Prozessormodul 140 und das Speichermodul 190 können auch als eine Einheit, d.h. Prozessor mit integriertem Speicher, ausgebildet sein.

Der maschinenlesbare Code 160 ist in der hier gezeigten Ausführungsform als QR-Code ausgebildet, welcher auf der Vorderseite der Nachverfolgungsvorrichtung 100 aufgedruckt oder aufgeklebt ist. Andere Formen des maschinenlesbaren Codes, z. B. als 1D- oder 2D Barcode, sind ebenfalls möglich. Der QR-Code kann beispielsweise mittels eines mobilen Endgerätes, beispielsweise eines Mobiltelefons, optisch ausgelesen werden. Der QR-Code codiert eine für die jeweilige Nachverfolgungsvorrichtung 100 spezifische Kennung, mit deren Hilfe die jeweilige Nachverfolgungsvorrichtung 100 eindeutig identifizierbar ist. Die Kennung kann zusätzlich auch als für Menschen lesbare Schrift auf der Nachverfolgungsvorrichtung 100 angebracht sein. Anstelle eines QR-Codes, oder zusätzlich zu einem QR-Code, kann der maschinenlesbare Code 160 auch in Form einer RFID-Kennung hinterlegt sein, sodass der maschinenlesbare Code 160 per Funk ausgelesen werden kann. Beispielsweise kann die Nachverfolgungsvorrichtung 100 einen Near Field Communication Chip aufweisen, in dem die Kennung der Nachverfolgungsvorrichtung 100 hinterlegt ist. Diese Kennung kann kontaktlos beispielsweise mittels eines mobilen Endgerätes ausgelesen werden. Auch bei einer RFID-Kennung kann auf der Nachverfolgungsvorrichtung 100 die Kennung zusätzlich als für Menschen lesbare Schrift angebracht sein.

In dem Speichermodul 190 sind die Instruktionen für die grundlegenden Funktionen der Nachverfolgungsvorrichtung 100 in Form einer Software sowie Daten abgespeichert. Bevorzugt handelt es sich bei dem Speichermodul 190 um einen nicht-flüchtigen Speicher, beispielsweise Flash-Speicher, um den Energiebedarf für die Speicherung von Instruktionen und Daten zu minimieren. Bei dem nicht-flüchtigen Speicher kann es sich um einen permanenten Speicher oder einen semi-permanenten Speicher handeln. Ein permanenter Speicher ist lediglich einmal programmierbar und dann nicht mehr veränderbar. Ein semipermanenter Speicher kann dagegen umprogrammiert werden. Es ist auch möglich, eine Kombination von einem permanenten und einem semi-permanenten Speicher zu verwenden. In beiden Fällen wird der Vorteil ausgenutzt, dass der Speicherinhalt auch ohne Energiezufuhr erhalten bleibt.

Die in dem Speichermodul 190 hinterlegten Instruktionen werden von dem Prozessormodul 140 ausgelesen und ausgeführt. Dadurch können alle Funktionen der Nachverfolgungsvorrichtung 100 gesteuert werden, beispielsweise das Kommunikationsmodul 120 sowie die grafische Ausgabeeinheit 110.

Weiterhin kann die Nachverfolgungsvorrichtung eine Eingabe- und Ausgabevorrichtung 170 sowie mindestens ein, bevorzugt mindestens zwei, insbesondere mindestens drei Sensoren 180 aufweisen. Bei den Sensoren 180 kann es sich insbesondere um einen Lichtsensor, einen Beschleunigungssensor, Biegesensor und einen Drehratensensor handeln. Mittels dieser Sensoren ist es möglich, bestimmte Ereignisse zu registrieren, die auf dem Transport einer Sendung auftreten können.

Die Eingabe- und Ausgabevorrichtung 170 kann als Datenkommunikationsmodul ausgebildet sein. Das Datenkommunikationsmodul kann ein Nahfeldkommunikationsmodul 170 und/oder ein Kurzstreckenkommunikationsmodul aufweisen, um eine kontaktlose Kommunikation der Nachverfolgungsvorrichtung 100 mit einem Bediengerät oder anderen Empfänger-Sender-Einheiten zu ermöglichen. Bei dem Bediengerät kann es sich beispielsweise um ein mobiles Endgerät, eine Ladevorrichtung oder ein Magazin zur Aufbewahrung einer Vielzahl von Nachverfolgungsvorrichtungen 100 handeln. Das Nahfeldkommunikationsmodul 170 kann den weiter oben genannten Near Field Communication Chip umfassen, damit über das Nahfeldkommunikationsmodul 170 der maschinenlesbare Code kontaktlos ausgelesen werden kann. Das Kurzstreckenkommunikationsmodul kann ein Bluetooth-Modul sein.

Bevorzugt ist die Nachverfolgungsvorrichtung 100 so ausgestaltet, dass sie die folgenden Funktionen ausführen kann oder ermöglicht: Positionsbestimmung, Registrierung von Bewegungsänderungen und Änderungen des Umfelds, grafische Ausgabe von Informationen, drahtlose Kommunikation mit einem Kommunikationsnetzwerk, Bereitstellen einer kontaktlosen Datenschnittstelle.

Für die Positionsbestimmung wird insbesondere auf die Möglichkeiten des Kommunikationsnetzwerkes zurückgegriffen. Da mittels des Kommunikationsmoduls 120 bei Kommunikation mit dem Kommunikationsnetzwerk die Position der Nachverfolgungsvorrichtung 100 ermittelt werden kann, stellt das Kommunikationsmodul 120 ein Mittel bereit, um die Position zu bestimmen. Zusätzlich kann die Nachverfolgungsvorrichtung 100 auch über ein vom Kommunikationsmodul 120 separates Lokalisierungsmodul 130 verfügen. Die Art der Positionsbestimmung unterscheidet sich jedoch, ob die Position mittels des Kommunikationsnetzwerks oder mittels des Lokalisierungsmoduls 130 erfasst wird. Im einfachsten Fall wird die Funktionalität des Kommunikationsnetzwerkes ausgenutzt, da das Kommunikationsnetzwerk bei Empfang von Daten, welche die Nachverfolgungsvorrichtung 100 sendet, auf die Position der Nachverfolgungsvorrichtung 100 schließen kann. Die Nachverfolgungsvorrichtung 100 kann in diesem Fall nicht unabhängig von dem Kommunikationsnetzwerk seine eigene Position bestimmen. Dies ist nur möglich, wenn das Lokalisierungsmodul 130 aktiviert wird, welches dann Signale von globalen Positionsbestimmungssystemen (GPS, Glonass, Beidou, Galileo) auswertet und so die eigene Position bestimmt.

Für die Registrierung von Bewegungsänderungen und Änderungen des Umfelds verfügt die Nachverfolgungsvorrichtung 100 über geeignete Sensorik, insbesondere über einen oder mehrere Lichtsensoren, einen oder mehrere Beschleunigungssensoren, einen oder mehrere Biegesensoren, und/oder einen oder mehrere Drehratensensoren. Weiterhin kann die Nachverfolgungsvorrichtung über einen oder mehrere Drucksensoren zur Erfassung des barometrischen Drucks aufweisen. Bevorzugt ist, dass die Nachverfolgungsvorrichtung 100 mindestens zwei verschiedene Sensoren aufweist. Beispielsweise kann die Nachverfolgungsvorrichtung 100 einen Biegesensor und einen Beschleunigungssensor aufweisen. Mittels des Biegesensors kann beispielsweise registriert werden, ob die Sendung 230 und damit die Nachverfolgungsvorrichtung 100 einer mechanischen Beanspruchung unterworfen ist. Spezifische mechanische Beanspruchungen treten beispielsweise innerhalb von Postverteilzentren beim Sortieren von Sendungen auf. Beispielsweise durchlaufen Briefsendungen Sortiermaschinen, welche die Briefsendungen über Walzen führen. Dabei werden die Briefsendungen zu einem gewissen Grade einer Biegung unterworfen. Gleichzeitig erfolgt aufgrund der Bewegung entlang eines Teils einer Kreisbahn eine Drehbeschleunigung, welche durch einen Drehratensensor und/oder Beschleunigungssensor registriert werden kann. Aufgrund der zeitlich gekoppelten Detektion von Biegung und Drehbeschleunigung kann beispielsweise darauf geschlossen werden, dass sich die Nachverfolgungsvorrichtung gerade in einem Postverteilerzentrum befindet.

Eine andere Kombination von Ereignissen, die durch mehrere Sensoren 180 registriert werden kann, ist beispielsweise der Einwurf in einen Briefkasten. Dabei ändern sich die Umgebungslichtverhältnisse, die Postsendung wird beim Einwerfen möglicherweise leicht gebogen, und beim Erreichen des Bodens des Briefkastens wird die Postsendung abrupt gestoppt. Zur Erfassung dieser Ereignisse werden beispielsweise die Erfassungssignale des Lichtsensors, des Biegesensors und des Beschleunigungssensors genutzt. Treten diese Ereignisse in zeitlich engem Zusammenhang auf, kann darauf geschlossen werden, dass die Postsendung möglicherweise in einen Briefkasten eingeworfen wurde.

Für die grafische Ausgabe von Informationen dient insbesondere die grafische Ausgabeeinheit 110. Diese kann zusätzlich auch als Eingabeeinheit ausgestaltet sein, beispielsweise indem Bereiche der grafischen Ausgabeeinheit drucksensitiv ausgestaltet sind und dadurch bei Berühren Steuersignale erzeugen. Alternativ können für die Bedienung der Nachverfolgungsvorrichtung 100 auch eine oder mehrere Schaltelemente, beispielsweise in Form von Folienschaltern, vorgesehen sein. Zusätzlich kann für die Signalisierung von bestimmten Ereignissen, beispielsweise die erfolgreiche Aktivierung, eine optische Anzeigevorrichtung 195, beispielsweise in Form einer LED, vorgesehen sein. Dies ist beispielsweise in Figur 2 gezeigt.

Für die drahtlose Kommunikation mit einem Kommunikationsnetzwerk dient insbesondere das Kommunikationsmodul 120. Unter Berücksichtigung eines möglichst geringen Energieverbrauchs und langer Laufzeit der Nachverfolgungsvorrichtung 100 ist das Kommunikationsmodul 120 insbesondere für die Kommunikation mit Low Power WAN-Netzen ausgebildet.

Für die Bereitstellung einer kontaktlosen Datenschnittstelle dient insbesondere das Datenkommunikationsmodul 170, beispielsweise das Nahfeldkommunikationsmodul, welches beispielsweise einen RFID Chip aufweisen kann. Über das Datenkommunikationsmodul 170 können Daten aus der Nachverfolgungsvorrichtung 100, insbesondere aus dem Speicher 190 oder anderen speziellen Speicherchips ausgelesen und gegebenenfalls eingespeichert werden. Darüber hinaus kann die in dem Speicher 190 abgelegte Software, welche zum Betreiben der Nachverfolgungsvorrichtung 100 vorgesehen ist, aktualisiert werden. Die eindeutige Kennung bzw. der maschinenlesbare Code 160 kann im Speicher 190 oder in einem speziellen RFID Chip hinterlegt sein. Da jede Nachverfolgungsvorrichtung 100 eine eindeutige Kennung in Form eines maschinenlesbaren Codes aufweist, sollte dieser Code nicht überschreibbar abgelegt sein. Die Kommunikation mit einem Bediengerät oder anderen Geräten kann kontaktlos über das Datenkommunikationsmodul 170 erfolgen.

Weiterhin kann die Nachverfolgungsvorrichtung 100 eine hier nicht dargestellte Leiterplatte umfassen, welche alle wesentlichen elektronischen Bauteile und Module trägt und die entsprechenden elektrischen Verbindungen zwischen den einzelnen Bauteilen und Modulen herstellt. Außerdem kann in der Leiterplatte eine Antenne integriert sein.

Die beschriebenen Komponenten der Nachverfolgungsvorrichtung 100 sind in den flächigen Grundkörper 101 integriert. Die gegenüberliegenden Seitenflächen des Grundkörpers 101 sind bevorzugt eben, d. h. einzelne Komponenten ragen nicht über die Seitenflächen hinaus. Beispielsweise ist es möglich, die einzelnen Komponenten in ein Kunststoffmaterial einzubetten, welches das Grundmaterial des Grundkörpers 101 bildet. Beispiele für geeignete Kunststoffmaterialien sind Polyimid. Weiterhin ist es möglich, den Grundkörper 101 in Form eines Laminat aus unterschiedlichen Schichten herzustellen, wobei einzelne Schichten unterschiedliche Funktionen übernehmen. So können die äußeren Schichten jeweils als Schutzschicht dienen, um weiter innen liegende Schichten vor Feuchtigkeit und Schmutz zu schützen. Eine der innen liegenden Schichten kann beispielsweise die Funktion einer Verdrahtungsebene übernehmen, um die einzelnen Komponenten miteinander elektrisch zu verbinden. Der Grundkörper 101 kann beispielsweise in handelsübliche Laminierfolien eingearbeitet sein. Alternativ ist es möglich, dass der Grundkörper 101 einseitig oder beidseitig eine Papieroberfläche aufweist.

Eingebettet in den Grundkörper 101, oder einen Teil des Grundkörpers 101 bildend, kann eine voll flexible Leiterbahn aus beispielsweise Polyimid oder eine Starr-Flex-Platine aus beispielsweise FR4 (schwer entflammbarer Verbundwerkstoff aus Epoxidharz und Glasfasergewebe) vorgesehen sein. Um eine ausreichende Flexibilität der Starr-Flex-Platine zu gewährleisten kann diese eine Dicke von etwa 200 µm bis etwa 500 µm, bevorzugt etwa 250 µm bis 400 µm, und beispielsweise etwa 300 µm aufweisen.

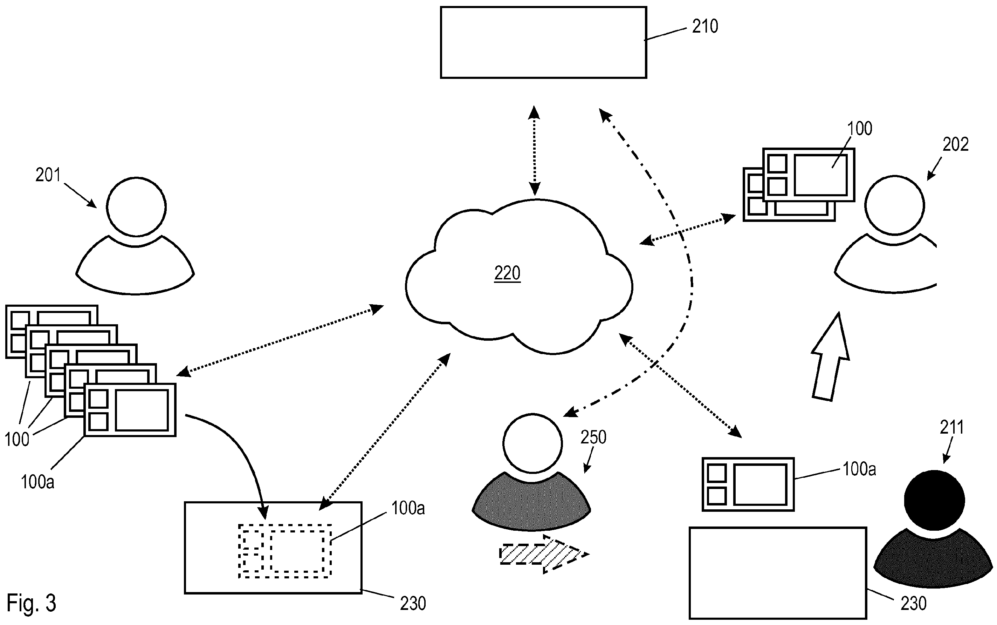

Mit Bezug auf Figur 3 wird ein Verfahren zur Nachverfolgung von Sendungen gemäß einer Ausführungsform erläutert. Für die Nachverfolgung von Sendungen können die zuvor beschriebenen Nachverfolgungsvorrichtungen 100 verwendet werden. Mit diesem Verfahren kann ein Nutzer 201, welcher im weiteren als erster Nutzer bezeichnet wird, Sendungen an einen oder mehrere Empfänger 211 versenden und dabei den Verlauf der Sendung bis zum Empfang bei dem Empfänger 211 mittels einer der Nachverfolgungsvorrichtungen 100 überwachen. Dazu legt der erste Nutzer 201 der jeweiligen Sendung eine Nachverfolgungsvorrichtung 100 bei.

Der in Figur 3 konkret gezeigte Ablauf veranschaulicht den Verlauf einer Sendung 230 vom ersten Nutzer 201 zu einem Empfänger 211, sowie die Weiterversendung einer Nachverfolgungsvorrichtung von dem Empfänger 211 an einen zweiten Nutzer 202, welcher einen Bedarf an Nachverfolgungsvorrichtungen hat. Anhand des Schaubildes in Figur 3 sollen einige Aspekte des Verfahrens erläutert werden, ohne darauf beschränkt zu sein.

Wie in Figur 3 angedeutet, verfügt der erste Nutzer 201 über eine Vielzahl von Nachverfolgungsvorrichtungen 100, welche dem ersten Nutzer 201 von einem hier nicht dargestellten Betreiber zur Verfügung gestellt wurden. Der Betreiber hat weiterhin eine Kontrolleinrichtung 210 bereitgestellt, welche über ein Kommunikationsnetzwerk 220 unabhängig voneinander mit den einzelnen Nachverfolgungsvorrichtungen 100 kommunizieren kann. Die Kommunikation ist in Figur 3 mittels der gepunkteten Pfeile angedeutet, wobei die Kommunikation abhängig vom Zustand der Nachverfolgungsvorrichtung und der aktuellen Situation unidirektional oder bidirektional sein kann.

Der erste Nutzer 201 will eine Sendung 230 an den Empfänger 211 versenden und dabei den Verlauf der Sendung während des Transports verfolgen. Gleichzeitig möchte der erste Nutzer 201 dem Empfänger 211 die Möglichkeit einräumen, dass auch der Empfänger 211 den Verlauf der Sendung 230 verfolgen kann. Zu diesem Zweck nutzt der erste Nutzer 201 eine der Nachverfolgungsvorrichtungen 100, welche ihm von dem Betreiber zur Verfügung gestellt wurden. Im einfachsten Fall hat der erste Nutzer 201 lediglich eine einzige Nachverfolgungsvorrichtung 100, da er lediglich eine einzige Sendung 230 versenden möchte. In einem typischen Anwendungsfall hat der erste Nutzer 201 jedoch eine Vielzahl von Nachverfolgungsvorrichtungen 100, von denen er eine beliebige Nachverfolgungsvorrichtung für die Nachverfolgung der Sendung 230 auswählt.

Bei den Sendungen kann es sich um eine Postsendung, eine Speditionssendung oder um eine Kuriersendung, oder um eine beliebige andere Sendung handeln, deren Verlauf nachverfolgt werden soll. Da die Nachverfolgungsvorrichtungen 100 eine flächige Form aufweisen und eher dünn sind, kann eine Nachverfolgungsvorrichtung 100 auch für die Nachverfolgung von Briefsendungen verwendet werden.

Bevor der erste Nutzer 201 eine Nachverfolgungsvorrichtung 100 der Sendung 230 beilegt, wird die Nachverfolgungsvorrichtung 100 zunächst aktiviert. Durch die Aktivierung wird die Nachverfolgungsvorrichtung 100 zunächst aus einem Ruhezustand in einen Betriebszustand oder aus einem Auszustand in den Betriebszustand überführt. Es liegt dann eine aktivierte Nachverfolgungsvorrichtung 100a vor. Die erfolgreiche Aktivierung kann durch die LED 195 angezeigt werden. Für die Überführung in den Betriebszustand kann der Nachverfolgungsvorrichtung 100 beispielsweise Energie zugeführt werden, beispielsweise durch Auflegen der Nachverfolgungsvorrichtung 100 auf eine Ladevorrichtung, um die wiederaufladbare Energiequelle 150 der Nachverfolgungsvorrichtung 100 kontaktlos aufzuladen. Alternativ ist es möglich, dass die Nachverfolgungsvorrichtung 100 von dem Betreiber bereits geladen dem ersten Nutzer 210 zur Verfügung gestellt wurde, sodass sich die Nachverfolgungsvorrichtung 100 beispielsweise vor ihrer Aktivierung in einem Ruhezustand befindet.

Weiterhin ist es möglich, dass die Nachverfolgungsvorrichtung 100 über ein Schaltelement verfügt, bei dessen Betätigung durch den ersten Nutzer 201 die Nachverfolgungsvorrichtung 100 entweder aus dem Auszustand in den Betriebszustand oder aus dem Ruhezustand in den Betriebszustand überführt werden kann. In Abhängigkeit von dem aktuellen Zustand, in dem sich die Nachverfolgungsvorrichtung 100 befindet, können bei Betätigung des Schaltelements unterschiedliche Funktionen ausgelöst werden. Beispielsweise ist es möglich, dass eine sich in einem Betriebszustand befindliche Nachverfolgungsvorrichtung 100 bei Betätigung des Schaltelements in den Auszustand oder den Ruhezustand überführt wird. Wie später noch erläutert wird, kann bei Empfang der Sendung 230 der Empfänger 211 den Empfang der Sendung 230 durch Betätigung des Schaltelements quittieren.

Die Nachverfolgungsvorrichtung 100 kann auch bei Entnahme aus einer Ladevorrichtung automatisch aktiviert werden, oder bei Entnahme oder Ausgabe aus einem Magazin zur Aufbewahrung einer Vielzahl von Nachverfolgungsvorrichtungen. Auch ein derartiges Magazin kann eine Ladevorrichtung aufweisen, beispielsweise eine kontaktlose Ladevorrichtung, mit welcher die einzelnen Nachverfolgungsvorrichtungen 100 bei Aufbewahrung im Magazin kontaktlos geladen werden. Sowohl das Auflegen auf eine Ladevorrichtung als auch das Entnehmen von der Ladevorrichtung führt zu einer von der Nachverfolgungsvorrichtung 100 registrierbaren Änderung (Ladestrom AN oder Ladestrom AUS), welche zur automatischen Aktivierung der Nachverfolgungsvorrichtung 100 genutzt werden kann. Weiterhin kann bei der Entnahme oder Ausgabe der Nachverfolgungsvorrichtung 100 aus dem Magazin die Nachverfolgungsvorrichtung 100 an einem RFID-Lesekopf vorbeigeführt werden, welcher einerseits die für die Nachverfolgungsvorrichtung 100 spezifische Kennung ausliest und andererseits ein Signal an die Nachverfolgungsvorrichtung für deren Aktivierung abgibt. RFID-Leseköpfe können auch in den Ladevorrichtungen integriert sein und somit eine automatische Kommunikation mit der Nachverfolgungsvorrichtung 100 ermöglichen.

Die erfolgreiche Aktivierung der Nachverfolgungsvorrichtung 100a kann dem ersten Nutzer 201 beispielsweise auf der grafischen Ausgabeeinheit 110 oder einer optionalen weiteren optischen Ausgabeeinheit, beispielsweise einer LED, angezeigt werden. Alternativ oder zusätzlich ist es möglich, dass die Nachverfolgungsvorrichtung 100a die Aktivierung über das Kommunikationsmodul 120 und das Kommunikationsnetzwerk 220 an die Kontrolleinrichtung 210 übermittelt wird, bei dem dann der erste Nutzer 201 die Aktivierung abfragen kann.

Erfolgt die Aktivierung durch Auflegen oder Entfernen auf die Ladevorrichtung oder Entnahme oder Ausgabe aus dem Magazin, kann die Nachverfolgungsvorrichtung 100 ihre Aktivierung auch kontaktlos an die Ladevorrichtung oder das Magazin melden, welche dann die Information über die Aktivierung an die Kontrolleinrichtung 210 weiterleiten.

Das hier beschriebene Verfahren kann auch in ein Versandsystem integriert sein, bei dem beispielsweise Sendungen automatisch verpackt und verschickt werden. In diesem Fall können Nachverfolgungsvorrichtungen 100 automatisch den Sendungen zugeführt und dabei gleichzeitig aktiviert werden.

Nachdem die Nachverfolgungsvorrichtung 100 geeignet aktiviert wurde und nun als aktivierte Nachverfolgungsvorrichtung 100a vorliegt, erfolgt gemäß einer Ausführungsform eine Zuordnung der aktivierten Nachverfolgungsvorrichtung 100a zur konkreten Sendung 230, welche an den Empfänger 211 versendet werden soll. Der Sendung 230 ist eine eindeutige Sendungskennung zugeordnet, welche mit der Kennung der Nachverfolgungsvorrichtung 100 verknüpft wird. Die eindeutige Sendungskennung wird entweder vom ersten Nutzer 201 vergeben oder er erhält sie von einem Frachtführer, an den der ersten Nutzer 201 die Sendung zum Transport an den Empfänger 211 übergibt. Die Zuordnung der eindeutigen Sendungskennung und der Kennung der Nachverfolgungsvorrichtung 100 wird an die Kontrolleinrichtung 210 übermittelt, sodass die Zuordnung dem System bekannt ist. Damit kann dann auch über die Abfrage der Position der Nachverfolgungsvorrichtung 100 auf die Position der zugeordneten Sendung 230 geschlossen werden.

Die Zuordnung von eindeutiger Sendungskennung der Sendung 230 und der Kennung der Nachverfolgungsvorrichtung 100 kann vor der Aktivierung oder nach der Aktivierung der Nachverfolgungsvorrichtung 100 erfolgen. Bevorzugt erfolgt die Zuordnung jedoch nach der Aktivierung, da hiermit ein kontaktloses Auslesen der Kennung der Nachverfolgungsvorrichtung möglich ist. Beispielsweise kann der erste Nutzer 201 mittels eines geeignet eingerichteten Bediengeräts die Kennung der aktivierten Nachverfolgungsvorrichtung 100a kontaktlos auslesen. Ebenso kann mittels des Bediengeräts die Sendungskennung vom Frachtführer empfangen oder vom ersten Nutzer 201 eingelesen werden. In einem möglichen Anwendungsfall ist das Bediengerät ein mobiles Endgerät, beispielsweise ein Mobiltelefon oder ein Tablet, auf dem eine geeignete Software, beispielsweise eine spezifische App (Software-Application) installiert ist, wodurch das mobile Endgerät eingerichtet ist, kontaktlos über das Datenkommunikationsmodul 170 (beispielsweise Nahfeldkommunikation oder Bluetooth) mit der aktivierten Nachverfolgungsvorrichtung 100a zu kommunizieren sowie eine beispielsweise auf der Sendung 230 aufgedruckte oder aufgeklebte Sendungskennung optisch einzulesen. Die Zuordnung der Kennung der Nachverfolgungsvorrichtung 100a zur Sendungskennung erfolgt dann durch die Software im mobilen Endgerät, welche gleichzeitig einen Kontakt zur Kontrolleinrichtung 210 herstellen kann, um diese Zuordnung an die Kontrolleinrichtung 210 zu übermitteln.

Nutzt beispielsweise der ersten Nutzer 201 ein Versandsystem mit automatischer Verpackung der Sendungen, kann die Zuordnung von Sendungskennung und Kennung der aktivierten Nachverfolgungsvorrichtung 100a auch automatisch beim physischen Zusammenführen von Nachverfolgungsvorrichtung 100a und Sendung 230 erfolgen. Die Zuordnung kann dann auch automatisch von dem Versandsystem an die Kontrolleinrichtung 210 übermittelt werden. Die automatische Zuordnung kann beispielsweise dadurch erfolgen, dass die Nachverfolgungsvorrichtung 100a in dem Versandsystem einer Vorrichtung (Paketlabelstation) zum Anbringen eines Sendungslabels an der Außenseite einer Sendung 230 zugeführt wird und diese Vorrichtung eine für diese Vorrichtung spezifische Bluetooth-Empfänger-Sender-Einheit aufweist oder eine oder mehrere Bluetooth-Empfänger-Sender-Einheiten in der Umgebung dieser Vorrichtung angeordnet sind, welche Signale vom Datenkommunikationsmodul 170 (Bluetooth-Modul) erfasst bzw. erfassen. Die Bluetooth-Empfänger-Sender-Einheit kann die Kennung der Nachverfolgungsvorrichtung 100a kontaktlos auslesen und zusammen mit der Sendungskennung an die Kontrolleinrichtung 210 übermitteln. Alternativ kann das Versandsystem für diese Zuordnung auch eine separate Station mit mindestens einer weiteren Bluetooth-Empfänger-Sender-Einheit, oder mit einem oder mehreren Bluetooth-Empfänger-Sender-Einheiten in der Umgebung dieser separaten Station, sowie einer optischen Erfassungsvorrichtung aufweisen, bei der sowohl die aufgebrachte Sendungskennung optisch eingelesen als auch die eindeutige Kennung kontaktlos abgefragt werden kann.

Wenn die aktivierte Nachverfolgungsvorrichtung 100a einer Sendung 230 zugeordnet ist, befindet sich die Nachverfolgungsvorrichtung 100a in einem Sendungszustand. Dieser Sendungszustand bezeichnet den Zeitraum ab der Zuordnung von Nachverfolgungsvorrichtung zur Sendung bis zum Empfang der Sendung beim Empfänger 211 und insbesondere bis der Empfänger 211 den Empfang quittiert hat oder der Empfang automatisch durch die Nachverfolgungsvorrichtung 100a registriert wurde. Innerhalb dieses Zeitraums können der Empfänger 211 und/oder der erste Nutzer 201 und/oder der Betreiber die Position der Nachverfolgungsvorrichtung 100a bei der Kontrolleinrichtung 210 abfragen, um damit die aktuelle Position der Sendung 230 zu erfahren. Nachdem die Sendung 230 beim Empfänger 211 angekommen ist und der Empfang geeignet registriert wurde, wird die Zuordnung zwischen der Sendungskennung und der Kennung der Nachverfolgungsvorrichtung 100a aufgehoben, wobei dann der Empfänger 211 nicht mehr die Position der Nachverfolgungsvorrichtung 100a abfragen kann. Der erste Nutzer 211 kann die Position noch nachverfolgen, insbesondere um die erfolgte Weitersendung zu erkennen und einen möglichen Bonus dem Empfänger gutzuschreiben. Der Betreiber kann ebenfalls weiterhin die Position nachverfolgen.

Bestimmte Funktionen der Nachverfolgungsvorrichtung 100a können erst im Sendungszustand aktiviert sein, beispielsweise die Erfassung von Daten durch die Sensoren 180 oder die Erfassung der Position durch das Lokalisierungsmodul 130. Außerdem kann vorgesehen sein, dass die Nachverfolgungsvorrichtung 100a im Sendungszustand häufiger Kontakt mit dem Kommunikationsnetzwerk aufnimmt als im Ruhezustand oder Betriebszustand, da im Sendungszustand über das Kommunikationsnetzwerk regelmäßiger die Position der Nachverfolgungsvorrichtung 100a durch die Kontrolleinrichtung 210 abgefragt wird. Es ist allerdings auch möglich, dass die Nachverfolgungsvorrichtung 100a sowohl im Betriebszustand als auch im Sendungszustand mit gleicher Häufigkeit Kontakt zum Kommunikationsnetzwerk 220 aufnimmt.

Der erste Nutzer 201 führt die aktivierte Nachverfolgungsvorrichtung 100a, welche der Sendung 230 zugeordnet wurde, und die Sendung 230 physisch zusammen, insbesondere legt der erste Nutzer 201 die Nachverfolgungsvorrichtung 100a der Sendung 230 bei. Im Falle von Briefsendungen wird die Nachverfolgungsvorrichtung 100a in den Briefumschlag eingelegt. Bei Paketsendungen kann die Nachverfolgungsvorrichtung 100a ebenfalls in das Paket gelegt oder an der Außenseite geeignet befestigt werden. Dies gilt ebenso für Kuriersendungen. Wesentlich ist nur, dass die Nachverfolgungsvorrichtung 100a für die Zwecke des Transports der Sendung 230 ausreichend fest und sicher mit der Sendung 230 verbunden ist, damit sich die Nachverfolgungsvorrichtung 100a nicht von der Sendung 230 löst.

In Figur 3 ist eine Sendung 230 mit beigelegter aktivierter Nachverfolgungsvorrichtung 100a angedeutet, wobei die in der Sendung 230 befindliche Nachverfolgungsvorrichtung 100a gestrichelt dargestellt ist. Die Sendung 230 wird dann von einem Frachtführer 250 zusammen mit der Nachverfolgungsvorrichtung 100a zum Empfänger 211 transportiert. Während dieser Zeit empfängt die Kontrolleinrichtung 210 wiederholt während des Transports der Sendung 230 zum Empfänger 211 die Position der aktivierten Nachverfolgungsvorrichtung 100a, insbesondere durch Abfragen der aktuellen Position beim Kommunikationsnetzwerk 220. Dadurch ist es dem ersten Nutzer 201 und dem Empfänger 211 möglich, über die Kontrolleinrichtung 210 die Position der Sendung 230 abzufragen. Der erste Nutzer 201 kann diese Abfrage beispielsweise über sein mobiles Endgerät vornehmen, auf welchem die weiter oben beschriebene spezifische App ausgeführt wird. Alternativ oder zusätzlich kann von dem Betreiber der Kontrolleinrichtung 210 ein Web-Interface bereitgestellt werden, welches nach Eingabe der Sendungskennung oder der Kennung der Nachverfolgungsvorrichtung 100a, gegebenenfalls unter zusätzlicher Eingabe der Empfangsadresse oder Teilen dieser (z. B. nur Postleitzahl), die aktuelle Position der Sendung 230 ausgibt.

Zusätzlich oder alternativ zur periodischen Kommunikation von Nachverfolgungsvorrichtung 100a und Kommunikationsnetzwerk 220 kann die Nachverfolgungsvorrichtung 100a mit dem Kommunikationsnetzwerk 220 nach Erkennen von spezifischen Ereignissen Kontakt aufnehmen. Zum Erkennen dieser spezifischen Ereignisse werden die Sensoren 180 regelmäßig abgefragt bzw. es werden Signale von den Sensoren 180 abgegeben, sobald bestimmte Veränderungen erfasst werden.

Die erfassten Signale der Sensoren 180 werden von der Software der Nachverfolgungsvorrichtung 100a ausgewertet und bei Erkennung von bestimmten Mustern vorbestimmten Ereignissen zugeordnet. Wie bereits weiter oben erläutert, kann das Einwerfen der Sendung 230 in einen Briefkasten bestimmte Ereignisse umfassen, welche durch (praktisch) zeitgleichem Auftreten einer Helligkeitsänderung von hell zu dunkel, Biegung und abruptem Abstoppen gekennzeichnet sind.

Für das Erkennen der vorbestimmten Ereignisse können klassische Verfahren der Signalverarbeitung, Methoden aus dem Maschine-Learning-Bereich wie SVM (Support-Vector-Machines) bis hin zu optimierten neuronalen Netzen zum Einsatz kommen. Support Vector Machines beschreiben mathematische Verfahren zur Mustererkennung, welche beispielsweise computerimplementiert sein können. SMVs können auch als Teil des sogenannten maschinellen Lernens betrachtet werden. Alternativ ist es möglich, dass ein regelbasiertes System zum Erkennen der vorbestimmten Ereignisse im Speicher 190 hinterlegt ist.

Zusätzlich oder alternativ kann die Nachverfolgungsvorrichtung 100a mittels des Lokalisierungsmoduls 130 periodisch oder bei Erkennen von bestimmten Ereignissen die eigene Position bestimmen und an die Kontrolleinrichtung 210 übermitteln.

Darüber hinaus ist es möglich, dass in Verteilzentren der Frachtführer 250, und/oder in Fahrzeugen der Frachtführer 250, Basisstationen und/oder Repeater installiert sind, über welche die Nachverfolgungsvorrichtung 100a die eigene Position abfragen oder ermitteln kann. Beispielsweise kann in einem Verteilzentrum eine Basisstation des Kommunikationsnetzwerks 220 installiert sein, mit welcher dann die Nachverfolgungsvorrichtung 100a kommuniziert.

Die Nachverfolgungsvorrichtung 100a kann das Lokalisierungsmodul 130 auch erst bei Erkennen von vorbestimmten Ereignissen durch die Sensoren 180 oder bei Erreichen des Zielgebiets aktivieren. Für das Erkennen des Zielgebiets genügt es gemäß einer Ausführungsform, dass die Nachverfolgungsvorrichtung 100a ihren ungefähren Standort erkennen kann. Dazu genügt häufig die Kommunikation mit dem Kommunikationsnetzwerk 220. Alternativ kann die Aktivierung des Lokalisierungsmoduls 130 auch durch die Kontrolleinrichtung 210 bewirkt werden, wenn diese nach Abfrage des Standorts der Nachverfolgungsvorrichtung 100a erkennt, dass sich die Nachverfolgungsvorrichtung 100a dem Zielgebiet des Empfängers 211 nähert oder bereits in dem Zielgebiet ist. Die Kontrolleinrichtung 210 sendet dann ein entsprechendes Kontrollsignal an die Nachverfolgungsvorrichtung 100a.

Die Nachverfolgungsvorrichtung 100a kann das Lokalisierungsmodul 130 auch regelmäßig nach Verstreichen eines Zeitintervalls aktivieren. Beispielsweise kann das Lokalisierungsmodul 130 24 Stunden nach dem Versenden für eine gewisse Zeit aktiviert werden.

Nach Aktivierung des Lokalisierungsmoduls 130 kann die Nachverfolgungsvorrichtung 100a dann ihre genaue Position bestimmen und an die Kontrolleinrichtung 210 übermitteln. Damit können sowohl der erste Nutzer 201 als auch der Empfänger 211 über den genauen Standort der Nachverfolgungsvorrichtung 100a und damit der Sendung 230 informiert werden. Der Empfänger 211 kann dann Maßnahmen ergreifen, um die Sendung 230 in Empfang zu nehmen oder dem Frachtführer 250 über die Kontrolleinrichtung 210 mitteilen, wo er die Sendung 230 abgeben oder ablegen soll, wenn der Empfänger 211 die Sendung 230 nicht persönlich entgegennehmen kann. Der Frachtführer 250 kann direkt mit der Kontrolleinrichtung 210 über andere Kommunikationsnetzwerke kommunizieren und ist nicht auf das Kommunikationsnetzwerk 220 beschränkt. Das ist mit dem strich-punktierten Pfeil angedeutet.

Nach Empfang der Sendung 230 durch den Empfänger 211 entnimmt der Empfänger 211 die Nachverfolgungsvorrichtung 100a der Sendung 230 und quittiert den Empfang, beispielsweise durch Betätigen des Schaltelements oder mittels der im mobilen Endgerät des Empfängers ausgeführten App, wobei der Empfänger zum Quittieren des Erhalt das mobile Endgerät auf die Nachverfolgungsvorrichtung auflegt und dabei einen NFC-Datenaustausch bewirkt. Da sich die Nachverfolgungsvorrichtung 100a im Sendungszustand befand, wird das Betätigen des Schaltelements als Empfangsbestätigung seitens des Empfängers 211 interpretiert, die Nachverfolgungsvorrichtung 100a aber nicht ausgeschaltet.

Das Quittieren des Empfangs wird an die Kontrolleinrichtung 210 übermittelt und dem ersten Nutzer 201 mitgeteilt. Dies kann beispielsweise über das Kommunikationsnetzwerk 220 oder beispielsweise über ein mobiles Endgerät des Empfängers 211 erfolgen, welches die bereits weiter oben beschriebene App, oder eine an App ausführt.

Der Empfänger 211 versendet nun die Nachverfolgungsvorrichtung 100a ohne die Sendung 230 weiter. Dazu kann zunächst auf der grafischen Ausgabeeinheit 110 dem Empfänger 211 mitgeteilt werden, dass er die Nachverfolgungsvorrichtung 100a zunächst in einen Briefkasten einwerfen oder einer dazu vorgesehenen Rückgabestation zuführen soll.

Konkret kann nach Quittieren des Empfangs der Nachverfolgungsvorrichtung 100a beispielsweise eine erste Zielanweisung übermittelt werden, welche die Darstellung einer ersten Zieladressinformation zum Weiterversenden der Nachverfolgungsvorrichtung 100a auf der grafischen Ausgabeeinheit 110 bewirkt. Die erste Zielanweisung kann beispielsweise die allgemeine Anweisung umfassen, die Nachverfolgungsvorrichtung 100a in einen Briefkasten einzuwerfen. Beispielsweise können dem Empfänger 211 mehrere Briefkästen in seiner Umgebung oder nahegelegene Rückgabeautomaten aufgelistet werden. Aufgrund der vorhandenen Sensoren 180 kann die Nachverfolgungsvorrichtung 100a erkennen, ob sie in einen Briefkasten eingeworfen wurde. Wird die Nachverfolgungsvorrichtung 100a einem Rückgabeautomaten zugeführt, kann der Rückgabeautomat die Rückgabe erfassen oder diese Information kontaktlos an die Nachverfolgungsvorrichtung 100a und/oder an die Kontrolleinrichtung 210 übermitteln.

Nachdem die Nachverfolgungsvorrichtung 100a in einen Briefkasten eingeworfen oder einem Rückgabeautomaten zugeführt wurde, kann der Nachverfolgungsvorrichtung 100a eine zweite Zielanweisung übermittelt werden, welche die Darstellung von zweiten Zieladressinformationen zum Weiterversenden der Nachverfolgungsvorrichtung 100a auf der grafischen Ausgabeeinheit 110 bewirkt. Bei den zweiten Zieladressinformationen kann es sich um die Adresse eines zweiten Nutzers 202 handeln, welcher gerade einen hohen Bedarf an Nachverfolgungsvorrichtungen 100 hat. Damit ist es möglich, eine zuvor benutzte Nachverfolgungsvorrichtung 100 zielgerichtet dorthin zu versenden, wo gerade ein erhöhter Bedarf besteht. Eine Rücksendung zu einem vom Betreiber betriebenem Verteilzentrum ist nicht erforderlich, sodass die Nachverfolgungsvorrichtung 100a, welche der Empfänger 211 erhalten hat, relativ schnell wieder verwendet werden kann.

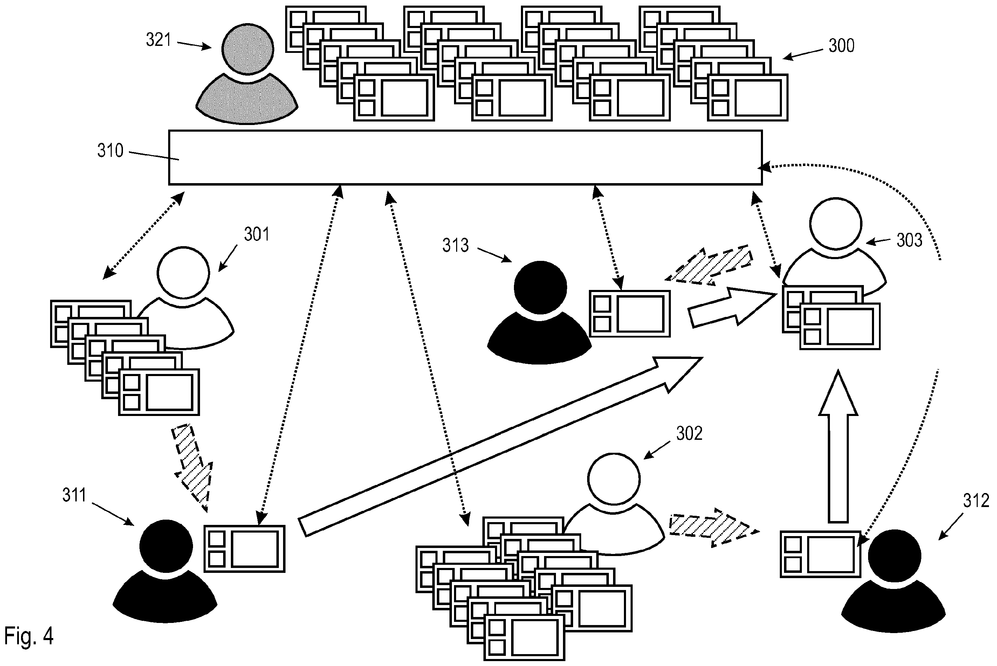

Mittels der Kontrolleinrichtung 210 kann der Betreiber die Lagerbestände an Nachverfolgungsvorrichtungen 100 bei den einzelnen Nutzern überwachen. Für eine bessere Erläuterung wird nachfolgend auf die Figur 4 verwiesen.

In Figur 4 ist der Betreiber mit 321 bezeichnet, welcher die Nachverfolgungsvorrichtungen 300 auf Anforderung an die einzelnen Nutzer 301, 302 und 303 liefert. Die Nutzer 301, 302, 303 des Nachverfolgungssystems haben beispielsweise eine vertragliche Vereinbarung mit dem Betreiber 321 über die Bereitstellung von Nachverfolgungsvorrichtungen 300 abgeschlossen. Der Betreiber 321 stellt dann den einzelnen Nutzern 301, 302 und 303 die gewünschte Menge an Nachverfolgungsvorrichtungen 300 bereit. Darüber hinaus können die einzelnen Nutzer 301, 302, 303 mit dem Betreiber 321 eine Mindestmenge an Nachverfolgungsvorrichtungen 300 vereinbaren, die bei den einzelnen Nutzern 301, 302, 303 nicht unterschritten werden soll. Die Mindestmenge kann natürlich bei den einzelnen Nutzern 301, 302, 303 unterschiedlich sein.

Die einzelnen Nutzer übergeben Sendungen, welche an Empfänger gerichtet sind, wie vorstehend beschrieben an einen in Figur 4 nicht gezeigten Frachtführer. Dazu aktivieren die Nutzer jeweils eine Nachverfolgungsvorrichtung 300, ordnen die aktivierte Nachverfolgungsvorrichtung 300 der Sendung zu, und legen die aktivierte und zugeordnete Nachverfolgungsvorrichtung 300 der Sendung bei, bevor sie diese an den Frachtführer übergeben. In Figur 4 ist das Versenden einer Sendung zusammen mit einer Nachverfolgungsvorrichtung 300 durch die schraffierten dicken Pfeile dargestellt. Die Kommunikation zwischen den Nachverfolgungsvorrichtungen und der Kontrolleinrichtung 310 ist durch dünne gestrichelte Pfeile angedeutet. Dagegen ist das Weiterversenden der Nachverfolgungsvorrichtungen 300 ohne Sendung von den Empfängern zu jeweiligen Nutzern mit den nicht gefüllten dicken Pfeilen angedeutet.

Beispielsweise sendet der Nutzer 301, im Folgenden der erste Nutzer 301, eine Sendung zusammen mit einer Nachverfolgungsvorrichtung 300 an einen ersten Empfänger 311. Ein zweiter Nutzer 302 sendet eine andere Sendung zusammen mit einer Nachverfolgungsvorrichtung 300 an einen zweiten Empfänger 312. Ein dritter Nutzer 303 sendet wiederum eine andere Sendung zusammen mit einer Nachverfolgungsvorrichtung 300 an einen Dritten Empfänger 313. Wie in Figur 4 angedeutet, verfügt der dritte Nutzer 303, im Vergleich zum ersten Nutzer 301 und dem zweiten Nutzer 302, lediglich über einen geringen Lagerbestand an Nachverfolgungsvorrichtungen 300. Es wird hier angenommen, dass der dritte Nutzer 303 jedoch einen hohen Bedarf an Nachverfolgungsvorrichtungen 300 hat, der seinen aktuellen Lagerbestand übersteigt. Beispielsweise kann der aktuelle Lagerbestand an Nachverfolgungsvorrichtungen 300 beim dritten Nutzer 303 kleiner sein als der vereinbarte Mindestbestand, oder der dritte Nutzer 303 hat kurzfristig einen höheren Bedarf an Nachverfolgungsvorrichtungen 300 und hat diesen höheren Bedarf dem Betreiber 321 gemeldet.

Der Betreiber 321 kennt die aktuellen Bestände an Nachverfolgungsvorrichtungen 300 bei den einzelnen Nutzern und kennt darüber hinaus die Zahl der derzeit aktuell benutzten Nachverfolgungsvorrichtungen 300, die für die Nachverfolgung von Sendungen verwendet werden. Konkret ist diese Übersicht beispielsweise in der Kontrolleinrichtung 310 für den Betreiber 321 abrufbar. Erkennt nun der Betreiber 321, oder automatisiert die Kontrolleinrichtung 310, dass der dritte Nutzer 303 einen akuten Bedarf an Nachverfolgungsvorrichtungen 300 hat, kann die Kontrolleinrichtung 310 an die Nachverfolgungsvorrichtungen 300, welche gerade bei den Empfängern 311, 312 und 313 eingetroffen sind oder demnächst eintreffen werden, Zielanweisungen übermitteln, welche dann zur Ausgabe von Zieladressinformationen zum Weiterversenden der jeweiligen Nachverfolgungsvorrichtung 300 an den dritten Nutzer auf der grafischen Ausgabeeinheit führen. Damit können dem dritten Nutzer 303 relativ schnell zusätzliche Nachverfolgungsvorrichtungen 300 zugesandt werden.

Wie in Figur 4 erkennbar, übersenden der erste Empfänger 311 und der zweite Empfänger 312 die erhaltenen Nachverfolgungsvorrichtungen 300 nicht wieder zurück an den ersten Nutzer 301 bzw. den zweiten Nutzer 302, sondern an den dritten Nutzer 303. Der dritte Empfänger 313, der eine Sendung vom dritten Nutzer erhalten hat, wird durch die Kontrolleinrichtung 310 aufgefordert, die Nachverfolgungsvorrichtung wieder an den dritten Nutzer 303 zurückzusenden.

Die in Figur 4 dargestellte Situation dient lediglich zur Darstellung einiger Aspekte des hierin beschriebenen Verfahrens, ohne darauf beschränkt zu sein. Hat beispielsweise auch der zweite Nutzer 302 einen hohen Bedarf an Nachverfolgungsvorrichtungen 300, auch wenn der dritte Nutzer 303 bereits einen hohen Bedarf an Nachverfolgungsvorrichtungen 300 hat, kann durch die Kontrolleinrichtung 310 bewirkt werden, dass beispielsweise der erste Empfänger 311 die bei ihm eingetroffene Nachverfolgungsvorrichtung 300 an den zweiten Nutzer 302 und nicht an den dritten Nutzer 303 übersendet.

Bei der Bewertung, welche Nachverfolgungsvorrichtung 300 zu welchem Nutzer gesendet werden soll, kann die Kontrolleinrichtung 310 neben dem aktuellen Bedarf und dem Lagerbestand an Nachverfolgungsvorrichtungen 300 bei den einzelnen Nutzern auch die räumliche Verteilung der Empfänger 311, 312, 313 und der Nutzer 301, 302, 303 berücksichtigen. Ist beispielsweise die räumliche Entfernung zwischen dem ersten Empfänger 311 und dem zweiten Nutzer 302 gering, zwischen dem ersten Empfänger 311 und dem dritten Nutzer 303 dagegen groß, dann bietet es sich beispielsweise an, die Nachverfolgungsvorrichtung 300 vom ersten Empfänger 311 zum zweiten Nutzer 302 zu senden, auch wenn der Bedarf beim dritten Nutzer 303 höher sein sollte. Die Kontrolleinrichtung 310 ist daher bevorzugt so eingerichtet, dass sie die Weiterversendung der Nachverfolgungsvorrichtungen von den einzelnen Empfängern zu den Nutzern unter Berücksichtigung der räumlichen Entfernung und des aktuellen Bedarfs optimiert. Die räumliche Entfernung hat natürlich auch einen Einfluss darauf, wie schnell eine Nachverfolgungsvorrichtung zu einem Nutzer gelangen kann.

Bei einem Empfänger kann es sich jedoch auch um einen Nutzer handeln. In diesem Fall wird auch berücksichtigt, ob der Nutzer, der gerade mittels einer Sendung eine Nachverfolgungsvorrichtung von einem anderen Nutzer erhält, einen Bedarf an weiteren Nachverfolgungsvorrichtungen hat oder nicht. Hat dieser Nutzer (der gerade die Sendung erhalten hat) einen Bedarf, dann werden an die Nachverfolgungsvorrichtung keine Zielanweisungen übermittelt oder lediglich eine Mitteilung übermittelt, dass die Nachverfolgungsvorrichtung bei diesem Nutzer verbleiben kann. Hat dieser Nutzer dagegen aktuellen keinen Bedarf an weiteren Nachverfolgungsvorrichtungen, dann kann an die Nachverfolgungsvorrichtung eine Zielanweisung für die Weiterversendung der Nachverfolgungsvorrichtung an einen anderen Nutzer übermittelt werden.

Um die Bestände bei den einzelnen Nutzern sicher zu ermitteln, kann gemäß einer Ausführungsform vorgesehen sein, dass die Nachverfolgungsvorrichtungen 300, welche bei den einzelnen Nutzern vorrätig sind, in regelmäßigen Abständen ihren Status an die Kontrolleinrichtung 310 übermitteln. Dies kann beispielsweise einmal täglich durch Übersenden eines kurzen Datenpakets erfolgen. Gleichzeitig kann dadurch die Kontrolleinrichtung 310 über das in Figur 4 nicht gezeigte Kommunikationsnetzwerk den Standort der einzelnen Nachverfolgungsvorrichtungen verifizieren und überprüfen, ob die einem bestimmten Nutzer bereitgestellten Nachverfolgungsvorrichtungen auch tatsächlich noch bei diesem vorrätig sind. Dadurch ist es möglich, regelmäßig oder kontinuierlich eine Inventur bezüglich der Nachverfolgungsvorrichtungen vorzunehmen.

Bei Nutzern, die regelmäßig relativ viele Nachverfolgungsvorrichtungen 300 einsetzen, bietet es sich an, dass diesen geeignete Vorrichtungen zur Aufbewahrung und Ausgabe von Nachverfolgungsvorrichtungen 300 vom Betreiber 321 zur Verfügung gestellt werden. Bei diesen Vorrichtungen kann es sich beispielsweise um die weiter oben beschriebenen Magazine handeln. Die Vorrichtungen können so ausgestaltet sein, dass die Information über den Lagerbestand an Nachverfolgungsvorrichtungen auch von den Vorrichtungen an die Kontrolleinrichtung 310 übermittelt wird. Die Vorrichtungen können dazu beispielsweise geeignete Lesevorrichtungen zum kontaktlosen Kommunizieren mit den in der Vorrichtung aufbewahrten Nachverfolgungsvorrichtungen 300 aufweisen. Gleichzeitig können die Vorrichtungen geeignete Ladevorrichtungen zum kontaktlosen Aufladen der Nachverfolgungsvorrichtungen aufweisen.

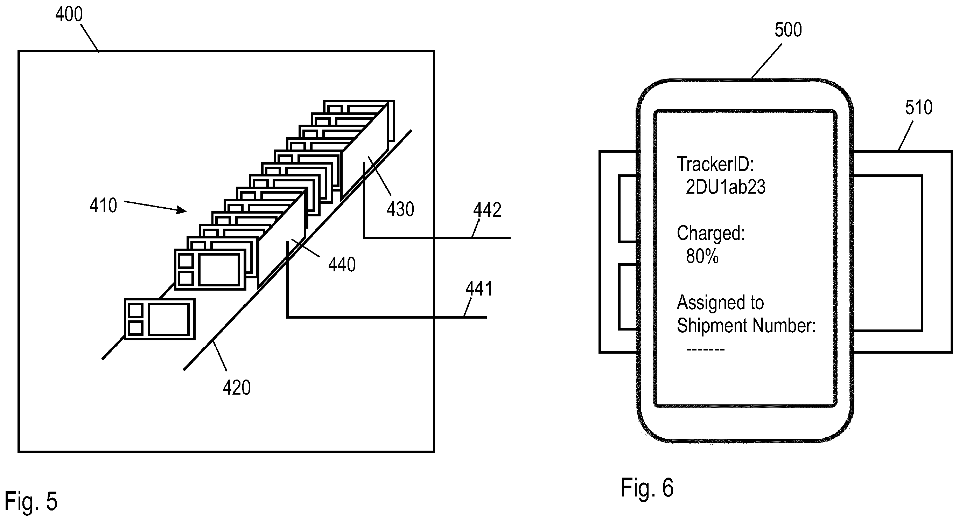

Eine derartige Vorrichtung am Beispiel eines Magazins ist beispielsweise in Figur 5 dargestellt. Die Vorrichtung 400 kann dazu beispielsweise eine Transportvorrichtung 420 aufweisen, mit welcher die einzelnen Nachverfolgungsvorrichtungen 410 bis zu einem Ausgabefach, an dem eine Entnahme erfolgt, bewegt werden können. Gleichzeitig weist die Vorrichtung 400 eine Ladevorrichtung 430 sowie eine Lesevorrichtung 440 zum kontaktlosen Kommunizieren mit den einzelnen Nachverfolgungsvorrichtungen 410 auf. Die Lesevorrichtung 440 kann beispielsweise über eine Kommunikationsschnittstelle des Magazins, welche mit einer hier schematisch angedeuteten Datenverbindung 441 verbunden ist, mit der Kontrolleinrichtung kommunizieren, um den aktuellen Lagerbestand an die Kontrolleinrichtung zu übersenden. Die Ladevorrichtung 430 kann über ein Ladekabel 442 mit Energie versorgt werden.

Eine weitere Möglichkeit, den aktuellen Lagerbestand an Nachverfolgungsvorrichtungen an die Kontrolleinrichtung zu übersenden, ist die Nutzung eines mobilen Endgerätes, beispielsweise eines Mobiltelefons 500, wie in Figur 6 dargestellt. Auf dem Mobiltelefon 500 kann beispielsweise eine geeignete Software (App) installiert sein und ausgeführt werden. Diese Software wird beispielsweise vom Betreiber des Nachverfolgungssystems bereitgestellt.

Der Nutzer kann dazu das Mobiltelefon 500 in unmittelbare Nähe der Nachverfolgungsvorrichtung 510 bringen, damit das Mobiltelefon 500 kontaktlos mit dem Nahfeldkommunikationsmodul der Nachverfolgungsvorrichtung 510 kommunizieren kann. Dabei kann beispielsweise die eindeutige Kennung der Nachverfolgungsvorrichtung 510, hier als TrackerlD bezeichnet, ausgelesen und auf dem Mobiltelefon 500 dargestellt werden. Gleichzeitig kann der Ladezustand der wiederaufladbaren Batterie angezeigt werden. Unter dem Eintrag "Assigned to Shipment Number" würde die Sendungskennung angezeigt werden, sofern die Nachverfolgungsvorrichtung 510 einer spezifischen Sendung zugeordnet wäre. Das ist in dem vorliegenden Ausführungsbeispiel nicht der Fall, da es hier nur über die Überprüfung des Lagerbestands bei dem jeweiligen Nutzer geht.

Die auf dem mobilen Endgerät 500 installierte Software kann weiterhin dazu eingerichtet sein, unter Verwendung der hier nicht gezeigten Kamera des mobilen Endgerätes 500 die beispielsweise auf einem Paket aufgeklebt oder aufgedruckte Sendungskennung optisch zu erfassen und zu dekodieren, sodass die Sendungskennung dann der TrackerID der Nachverfolgungsvorrichtung 510 vor der Übergabe an den Frachtführer zugeordnet werden kann. Diese Zuordnung kann dann direkt von dem mobilen Endgerät 500 an die Kontrolleinrichtung übermittelt werden.

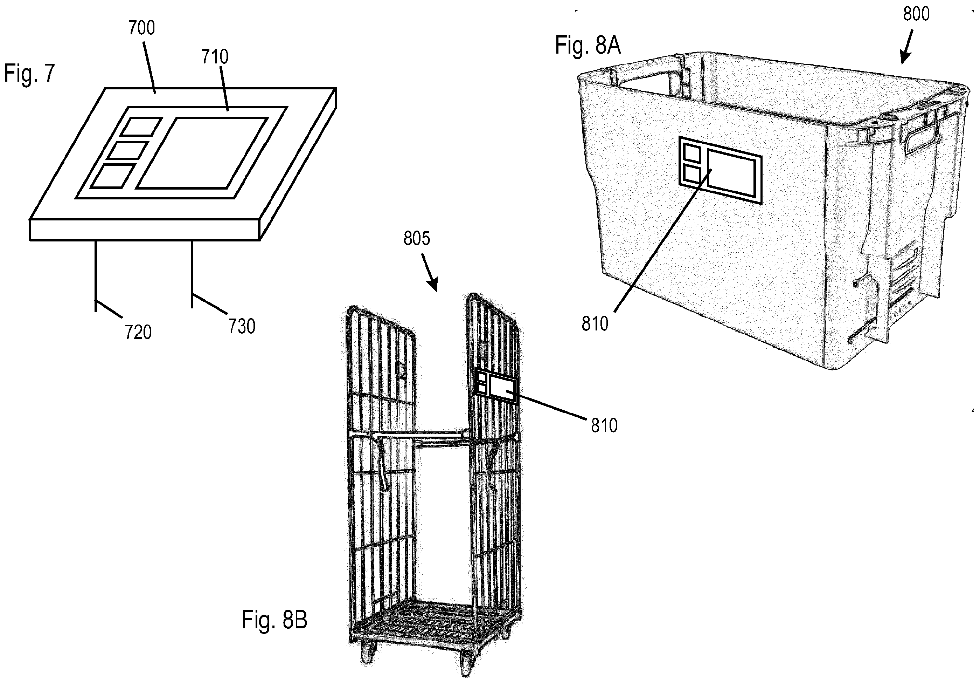

In Figur 7 ist eine Ladevorrichtung 700 für das kontaktlose Laden einer Nachverfolgungsvorrichtung 710 gezeigt. Die Nachverfolgungsvorrichtung 710 wird lediglich auf die Ladevorrichtung 700 aufgelegt und wird dann induktiv geladen. Zusätzlich kann auch eine NFC-Kommunikation zwischen Ladevorrichtung 700 und Nachverfolgungsvorrichtung 710 aufgebaut werden. Die Energiezufuhr zur Ladevorrichtung 700 erfolgt über ein Ladekabel 720. Mittels einer Kommunikationsschnittstelle, welches mit einer Datenverbindung 730 verbunden ist, kann die Ladevorrichtung 700 über ein geeignetes Datennetzwerk mit der Kontrolleinrichtung 210 kommunizieren und Daten austauschen. Anstelle einer NFC-Kommunikation kann auch eine Bluetooth-Kommunikation zwischen Ladevorrichtung 700 und Nachverfolgungsvorrichtung 710 aufgebaut werden. Eine Bluetooth-Kommunikation erlaubt eine höhere Datenübertragungsrate als NFC und eignet sich daher eher für das Aufspielen eines Softwareupdates.

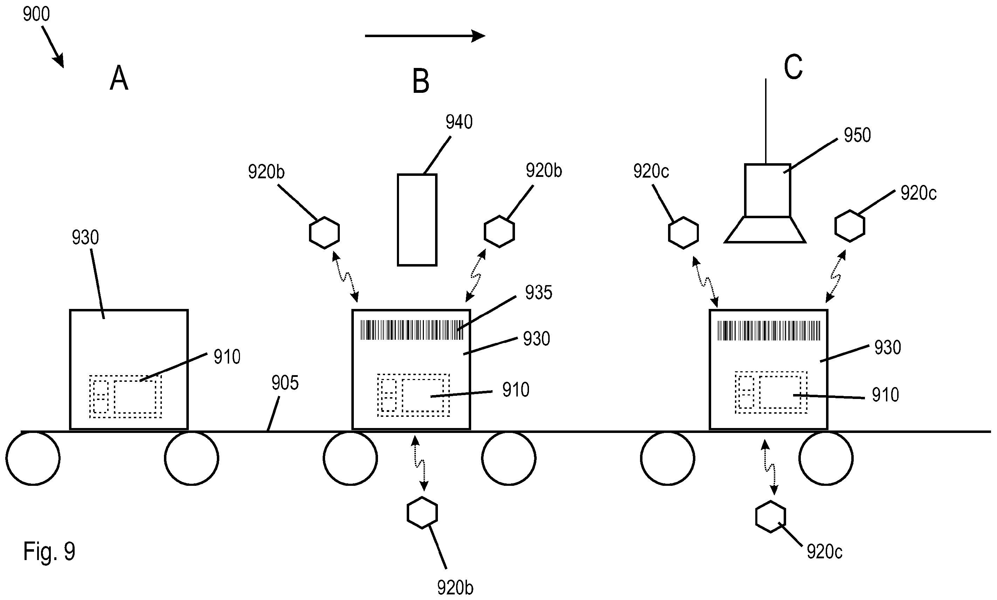

Figur 8A zeigt schematisch einen Transportbehälter 800 mit einer daran lösbar befestigten Nachverfolgungsvorrichtung 810. Figur 9B zeigt einen Transportbehälter 805 in Form eines Transportwagens mit einer daran lösbar befestigten Nachverfolgungsvorrichtung 810.

Grundsätzlich kann jeder Behälter, Wagen oder Container, der zum wiederholten Aufnehmen und Entnehmen von Transportgütern geeignet ist und einen ausreichend sicheren Transport der Transportgüter gewährleistet, als Transportbehälter dienen. Figuren 8A und 8B zeigen lediglich typische Beispiele.

Mittels des Transportbehälters 800 oder 805 wird ein Transportgut, beispielsweise verschiedene Kisten oder auch Kleinteile (nicht gezeigt), von einem ersten Standort zu einem zweiten Standort bewegt. Nach Erreichen des zweiten Standorts wird das oder die Transportgüter dem Transportbehälter 800, 805 entnommen. In Abhängigkeit des Bedarfs und der räumlichen Verteilung von einzelnen Standorten, an denen Transportbehälter 800, 805 benötigt werden, übermittelt die Kontrolleinrichtung analog zu den vorstehend beschriebenen Ausführungsformen geeignete Zielanweisungen an die einzelnen Nachverfolgungsvorrichtungen 810. Dadurch können die Transportbehälter 800, 805 zu den Standorten überführt werden, an denen gerade ein hoher Bedarf an Transportbehältern herrscht.

Figur 9 zeigt schematisch ein Versandsystem 900 mit einer Paketlabelstation B und einer Station, bei welcher die Zuordnung zwischen eindeutiger Kennung und Sendungskennung unter Verwendung von Bluetooth-Empfänger-Sender-Einheiten vorgenommen wird. Das Versandsystem 900 umfasst eine Transportvorrichtung 905, beispielsweise ein Transportband 905, welche die einzelnen Sendungen 930 von Station zu Station bewegt. Die Bewegung ist hier mit dem Pfeil nach rechts angedeutet. An der Verpackungsstation A wird eine Nachverfolgungsvorrichtung 910 einer Sendung 930, im vorliegenden Ausführungsbeispiel einem Paket, beigelegt. Dies kann automatisch oder manuell erfolgen. Danach wird das Paket verschlossen. Mittels der Transportvorrichtung 905 wird das Paket 930 dann zu einer Paketlabelstation B bewegt. Dort wird ein Paketlabel 935 mittels eines Druckers auf das Paket 930 gedruckt oder mittels einer Appliziervorrichtung ein Paketlabel aufgeklebt. Drucker bzw. Appliziervorrichtung sind mit 940 angedeutet. Das Paketlabel enthält die Zieladresse sowie eine Sendungskennung 935, in der hier gezeigten Ausführungsform als Barcode. Andere maschinenlesbare Codes sind ebenfalls möglich.

Im unmittelbaren Umfeld der Paketlabelstation B können Bluetooth-Empfänger-Sender-Einheiten 920b angeordnet sein, welche Signale (Datenpakete) der Nachverfolgungsvorrichtung 910 empfangen werden. Aufgrund der räumlichen Verteilung der Bluetooth-Empfänger-Sender-Einheiten 920b kann eindeutig auf die Position der Nachverfolgungsvorrichtung 910 geschlossen werden und diese in der Paketlabelstation B lokalisiert werden.

Nachdem das Pakte 930 mit dem Paketlabel 935 versehen wurde, wird das Paket 930 mittels der einen Transportvorrichtung 905 zu einer Zuordnungsstation oder Verifizierungsstation C bewegt. Dort wird das Paketlabel optisch erfasst und die Sendungskennung 935 ausgelesen. Dabei kann überprüft werden, ob das Paketlabel sicher optisch erfassbar ist oder in der Paketlabelstation B nicht richtig gedruckt oder appliziert wurde. Zusätzlich können im unmittelbaren Umfeld der Zuordnungsstation/Verifizierungsstation C Bluetooth-Empfänger-Sender-Einheiten 920c angeordnet sein, welche Signale (Datenpakete) der Nachverfolgungsvorrichtung 910 empfangen. Aufgrund der räumlichen Verteilung der Bluetooth-Empfänger-Sender-Einheiten 920c kann eindeutig auf die Position der Nachverfolgungsvorrichtung 910 geschlossen werden und diese in der Zuordnungsstation C lokalisiert werden. Dadurch ist es möglich, dass in der Zuordnungsstation C sowohl die Sendungskennung 935 des Pakets 930 (der Sendung) als auch die eindeutige Kennung der Nachverfolgungsvorrichtung 910 erfasst und einander zugeordnet werden. Diese Zuordnung erfolgt automatisch durch das Versandsystem und wird an die Kontrolleinrichtung übermittelt.

Alternativ ist es möglich, dass zwar das Paketlabel optisch erfasst wird, die Sendungskennung jedoch nicht ausgelesen wird. Die Erfassung des Paketlabels dient dann nur zum Überprüfen, ob das Paketlabel optisch erfassbar ist. Die Position der Pakets 930 kann auch anderweitig bestimmt werden bzw. ist dem Versandsystem bekannt, da auch der Paketlabelstation B bereits bekannt sein muss, welches Paket 930 aktuell bei der Paketlabelstation B ist. Grundsätzlich ist in einem Versandsystem die logische Position der einzelnen Pakete durch die Transportgeschwindigkeit und Verweildauer bei den einzelnen Stationen bekannt. Ein explizites optisches Erfassen und Auslesen der Sendungskennung ist daher nicht nötig.

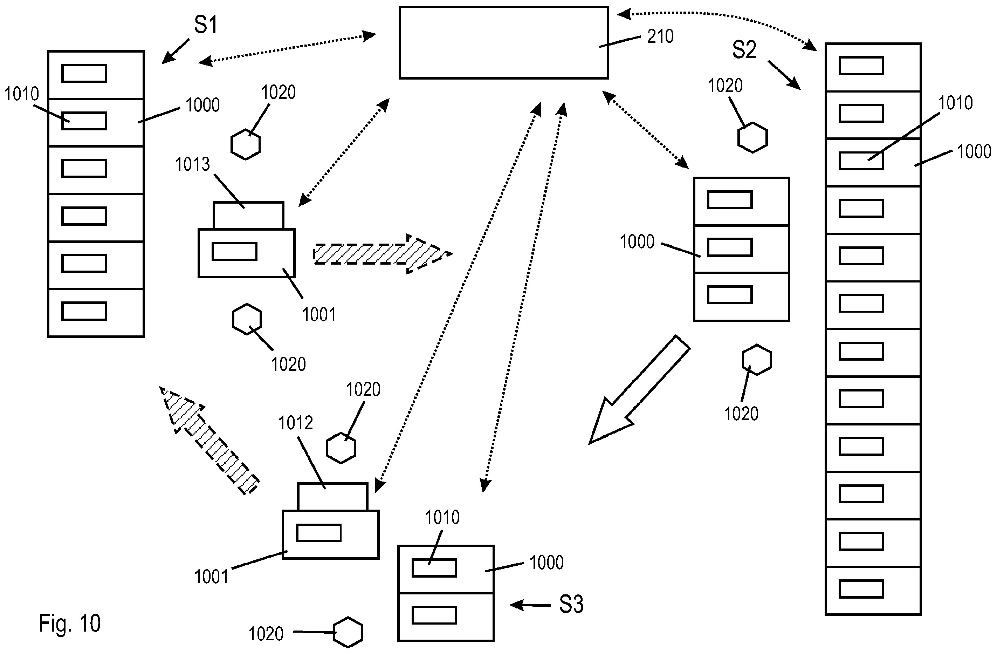

Mit Verweis auf Figur 10 wird ein Verfahren zur Nachverfolgung und Weiterverteilung von Transportbehältern 1000, 1001 zwischen verschiedenen Standorten beschrieben. Konkret sind in Figur 10 drei Standorte S1, S2 und S3 gezeigt, ohne darauf beschränkt zu sein. Die drei Standorte S1, S2 und S3 haben aktuell jeweils einen unterschiedlich hohen Lagerbestand an leeren Transportbehältern 1000. Die Transportbehälter 1000, 1001 sind im vorliegenden Ausführungsbeispiel alle identisch, d. h. sie gehören zur gleichen Klasse an Transportbehältern.

Mittels der Transportbehälter werden Transportgüter zu anderen Standorten transportiert. Im vorliegenden Ausführungsbeispiel sind Transportbehälter, in welchen ein Transportgut aufgenommen ist, mit 1001 bezeichnet, leere Transportbehälter dagegen mit 1000 bezeichnet. Mittels eines Transportbehälters 1001 wird ein Transportgut 1013 vom Standort (erster Standort) S1 zum Standort (zweiter Standort) S2, und mittels eines anderen Transportbehälters 1001 ein anderes Transportgut 1012 vom Standort (dritter Standort) S3 zum Standort S1 bewegt angedeutet durch die schraffierten dicken Pfeile.

Jeder Transportbehälter 1000, 1001 hat eine Nachverfolgungsvorrichtung 1010, welche beispielsweise lösbar an einer Außenseite des jeweiligen Transportbehälters 1000, 1001 befestigt ist. Bei den Nachverfolgungsvorrichtungen 1010 kann es sich um die weiter oben beschriebenen Nachverfolgungsvorrichtungen handeln. Im vorliegenden Ausführungsbeispiel verfügen die Nachverfolgungsvorrichtungen 1010 über eine hier nicht gezeigte Energiequelle, ein Prozessormodul, ein Speichermodul, ein Kommunikationsmodul und ein Datenkommunikationsmodul. Optional können die Nachverfolgungsvorrichtungen auch eine grafische Ausgabeeinheit, Sensoren sowie ein Lokalisierungsmodul aufweisen. Bei dem Datenkommunikationsmodul kann es sich insbesondere um ein Bluetooth-Modul handeln.

Während des Transports der Transportbehälter 1001 stehen die Nachverfolgungsvorrichtungen 1010 mit der Kontrolleinrichtung 210 in Verbindung, wie bereits weiter oben ausführlich beschrieben. Dies erfolgt ebenfalls über ein hier nicht dargestelltes Kommunikationsnetzwerk, wie weiter oben beschrieben. Dadurch kann die Position der Nachverfolgungsvorrichtungen 1010 und damit der Transportbehälter 1001 ermittelt und nachverfolgt werden. Ebenso können die Nachverfolgungsvorrichtungen 1010 der derzeit nicht genutzten leeren Transportbehälter 1000 mit der Kontrolleinrichtung 210 kommunizieren oder in Verbindung stehen, hier durch dünne gestrichelte Pfeile angedeutet, analog zu den weiter oben beschriebenen Nachverfolgungsvorrichtungen, die noch nicht aktiviert sind, sodass die Kontrolleinrichtung 210 in regelmäßigen Abständen den Bestand an leeren Transportbehältern 1000 überprüfen kann.

Da die Nachverfolgungsvorrichtungen 1010 an den einzelnen Transportbehältern 1000, 1001 befestigt sind, können die Nachverfolgungsvorrichtungen 1010 auch größer ausgeführt werden und insbesondere über eine Energiequelle mit größerer Kapazität verfügen. Dadurch können die Nachverfolgungsvorrichtungen 1010 dauerhaft aktiviert bleiben, was eine vergleichsweise häufige Kommunikation mit der Kontrolleinrichtung 210 ermöglicht.

Zusätzlich sind an den einzelnen Standorten S1, S2 und S3 jeweils mehrere Empfänger-Sender-Einheiten 1020 installiert, bei denen es sich bevorzugt um Bluetooth-Empfänger-Sender-Einheiten handelt. Diese können kontaktlos mit dem Datenkommunikationsmodul der Nachverfolgungsvorrichtungen 1010 kommunizieren. Dadurch kann, wie beispielsweise konkret im Zusammenhang mit Figur 9 beschrieben, die Position der einzelnen Nachverfolgungsvorrichtungen 1010, und damit der Transportbehälter 1000, 1001, an den einzelnen Standorten S1, S2 und S3 ermittelt und an die Kontrolleinrichtung 210 übermittelt werden.

Wie in Figur 10 angedeutet, ist der Lagerbestand an leeren Transportbehältern 1000 am Standort S3 deutlich geringer als beispielsweise am Standort S2. Der Lagerbestand wird durch die Höhe der übereinandergestapelten leeren Transportbehälter 1000 angedeutet. Die Kontrolleinrichtung 210 überwacht den Bestand sowie den Bedarf an Transportbehältern 1000 an den einzelnen Standorten. Da im vorliegenden Ausführungsbeispiel der Standort S3 einen geringen Lagerbestand an Transportbehältern 1000 hat, was einem erhöhten Bedarf an Transportbehältern 1000 entsprechen kann, werden durch die Kontrolleinrichtung 210 Anweisungen zum Versenden von leeren Transportbehältern 1000 erstellt und beispielsweise an den Standort S2 übermittelt. Dort werden diese Anweisungen registriert, beispielsweise durch einen hier nicht gezeigten Dispatcher. Dieser veranlasst dann, dass basierend auf den erstellten Anweisungen leere Transportbehälter 1000 zum Standort S3 transportiert werden. Im konkreten Ausführungsbeispiel werden drei leere Transportbehälter 1000 zum Standort S3 transportiert, angedeutet durch den nicht gefüllten dicken Pfeil.

Über die Empfänger-Sender-Einheiten 1020 können an die Kontrolleinheit 210 Angaben zur Position der leeren Transportbehälter 1000 übermittelt werden. Dadurch kann die Kontrolleinrichtung 210 überwachen, ob die leeren Transportbehälter 1000 gemäß der erstellten Anweisungen beispielsweise einem Warenausgang des Standorts S2 zugeführt wurden, oder ob diese leeren Transportbehälter 1000 beim Wareneingang des Standorts S3 bereits angekommen sind.

Grundsätzlich können daher mittels des hier beschriebenen Nachverfolgungssystems die Transportbehälter 1000, 1001 nachverfolgt, und effizient die Verteilung von leeren Transportbehältern 1000 zu den Standorten bewirkt werden, die derzeit einen hohen Bedarf an Transportbehälter 1000 haben. Die mit der Nachverfolgung von Sendungen und Weiterverteilung der dabei genutzten Nachverfolgungsvorrichtungen erreichten Vorteile gelten auch für das Verfahren zur Nachverfolgung und Weiterverteilung von Transportbehältern.

Bei dem Verfahren zur Nachverfolgung und Weiterverteilung von Transportbehältern kann die Kontrolleinrichtung 210 auch durch das Unternehmen, welches die Transportbehälter nutzt, kontrolliert werden. Die Kontrolleinrichtung 210 muss daher nicht, kann aber durch einen externen Betreiber kontrolliert werden.

Wenngleich vorstehend konkrete Ausführungsformen beschrieben sind, ist die vorliegende Erfindung nicht darauf beschränkt und kann geeignet modifiziert werden.

### Bezugszeichenliste

- 100: Nachverfolgungsvorrichtung
- 100a: aktivierte Nachverfolgungsvorrichtung
- 101: Grundkörper
- 110: grafische Ausgabeeinheit / Display
- 120: Kommunikationsmodul / Fernkommunikationsmodul
- 130: Lokalisierungsmodul
- 140: Prozessormodul
- 150: Energiequelle
- 160: Kennung / maschinenlesbarer Code
- 170: Datenkommunikationsmodul (Kurzdistanzkommunikationsmodul / Nahfeldkommunikationsmodul) Eingabe- und Ausgabevorrichtung
- 180: Sensor / Sensoren
- 190: Speichermodul
- 195: optische Anzeigevorrichtung / LED
- 201, 202: Nutzer
- 210: Kontrolleinrichtung
- 211: Empfänger
- 220: Kommunikationsnetzwerk
- 230: Sendung
- 250: Frachtführer
- 300: Nachverfolgungsvorrichtung
- 301, 302, 303: Nutzer
- 310: Kontrolleinrichtung
- 311, 312, 313: Empfänger
- 321: Betreiber
- 400: Vorrichtung / Magazin
- 410: Nachverfolgungsvorrichtung
- 420: Transportvorrichtung
- 430: Ladevorrichtung
- 500: mobiles Endgerät
- 510: Nachverfolgungsvorrichtung
- 700: Ladevorrichtung
- 710: Nachverfolgungsvorrichtung
- 720: Ladekabel
- 730: Datenverbindung
- 800,805: Transportbehälter
- 810: Nachverfolgungsvorrichtung
- 900: Versandsystem
- 905: Transportvorrichtung
- 910: Nachverfolgungsvorrichtung
- 920b, 920c: Bluetooth-Empfänger-Sender-Einheit
- 930: Sendung
- 935: Sendungskennung
- 940: Drucker, Appliziervorrichtung
- 950: optische Erfassungseinheit
- 1000, 1001: Transportbehälter
- 1010: Nachverfolgungsvorrichtung
- 1012, 1013: Transportgut
- 1020: Bluetooth-Empfänger-Sender-Einheit
- A: Verpackungsstation
- B: Paketlabelstation
- C: Zuordnungsstation / Verifizierungsstation

## Patentansprüche

1. Verfahren zur Nachverfolgung von Sendungen (230) wie Post-, Paket-, Päckchen-, Speditions- und Kuriersendungen, bei dem mehreren Nutzern (201, 202) jeweils mindestens eine Nachverfolgungsvorrichtung (100), insbesondere jeweils eine Vielzahl von Nachverfolgungsvorrichtungen (100) bereitgestellt wird, welche jeweils ein Kommunikationsmodul (120) und eine grafische Ausgabeeinheit (110) aufweisen und welche unabhängig voneinander über das Kommunikationsmodul (120) drahtlos mit einer Kontrolleinrichtung (210) kommunizieren können, wobei die Nachverfolgungsvorrichtungen (100) von einem Betreiber bereitgestellt werden, welcher den Nutzern auf Anfrage die Nachverfolgungsvorrichtungen (100) zur Verfügung stellt und die Kontrolleinrichtung (120) betreibt oder überwacht, wobei einige oder alle Nutzer ihren Bedarf an Nachverfolgungsvorrichtungen (100) und/oder eine Bestandsmindestmenge festlegen, die in der Kontrolleinrichtung hinterlegt ist, wobei
eine der Nachverfolgungsvorrichtungen (100, 100a) zur Verwendung durch einen ersten der mehreren Nutzer (201) zur Nachverfolgung einer Sendung (230) vom ersten Nutzer (201) an einen Empfänger (211) aktiviert wird, um die aktivierte Nachverfolgungsvorrichtung (100a) zusammen mit der Sendung (230) an den Empfänger (211) zu versenden, wobei die Aktivierung der Nachverfolgungsvorrichtung (100a) an die Kontrolleinrichtung (210) übermittelt wird;
die Kontrolleinrichtung (210) wiederholt während des Transports der Sendung (230) zum Empfänger (211) die Position der aktivierten Nachverfolgungsvorrichtung (100a) empfängt;
der erste Nutzer (201) und/oder der Empfänger (211) über die Kontrolleinrichtung (210) die Position der Sendung (230) nachverfolgen kann;
die Kontrolleinrichtung (210) den Lagerbestand der Nachverfolgungsvorrichtungen (100) bei einigen oder allen Nutzern (201, 202) überwacht, wobei zur Überwachung des Lagerbestands der Nachverfolgungsvorrichtungen (100) bei den Nutzern (201, 202) die Kontrolleinrichtung (210) regelmäßig die Position der Nachverfolgungsvorrichtungen (100) empfängt, insbesondere die Position der nicht-aktivierten Nachverfolgungsvorrichtungen; und
die Kontrolleinrichtung (210) an die aktivierte Nachverfolgungsvorrichtung (100a), nachdem diese Nachverfolgungsvorrichtung (100a) zusammen mit der Sendung (230) beim Empfänger (211) eingetroffen ist, Zielanweisungen übermittelt, welche die Darstellung von Zieladressinformationen zum Weiterversenden der Nachverfolgungsvorrichtung (100a) an einen zweiten der mehreren Nutzer (201, 202) auf der grafischen Ausgabeeinheit (110) bewirkt, wobei die Kontrolleinrichtung (210) die Zielanweisungen in Abhängigkeit vom Bedarf an Nachverfolgungsvorrichtungen (100) durch die Nutzer (201, 202) und in Abhängigkeit vom Lagerbestand an Nachverfolgungsvorrichtungen (100) bei den Nutzern (201, 202) ermittelt.

2. Verfahren nach Anspruch 1, wobei zur Aktivierung der Nachverfolgungsvorrichtung (100) der erste Nutzer der Nachverfolgungsvorrichtung (100) Energie zuführt, insbesondere kontaktlos Energie zuführt, und dadurch die Nachverfolgungsvorrichtung (100) aus einem Ruhezustand in einen Betriebszustand überführt.

3. Verfahren nach Anspruch 1 oder 2, wobei zur Aktivierung der Nachverfolgungsvorrichtung (100) einer der folgenden Schritte, insbesondere durch den ersten Nutzer, durchgeführt wird:
Betätigen eines Schaltelements, beispielsweise eines Piezoelements, eines Folienschalters oder eines Drucktasters, der Nachverfolgungsvorrichtung (100);
Zuführen der Nachverfolgungsvorrichtung (100) zu einer Ladevorrichtung, beispielsweise durch Auflegen auf eine Ladevorrichtung zum kontaktlosen Aufladen;
Entnehmen der Nachverfolgungsvorrichtung (100) von einer Ladevorrichtung;
Entnehmen oder Ausgeben der Nachverfolgungsvorrichtung (100) von einem Magazin zur Aufbewahrung einer Vielzahl von Nachverfolgungsvorrichtungen (100).

4. Verfahren nach einem der vorherigen Ansprüche, wobei das Kommunikationsmodul (120) drahtlos über ein Kommunikationsnetzwerk (220) mit der Kontrolleinrichtung (210) in Verbindung steht und die Kontrolleinrichtung (210) die Position der aktivierten Nachverfolgungsvorrichtung (100a) wiederholt beim Kommunikationsnetzwerk (220), welches die Position der aktivierten Nachverfolgungsvorrichtung (100a) ermittelt, abfragt, wobei es sich bei dem Kommunikationsnetzwerk insbesondere um ein Low Power WAN handelt,
wobei optional die aktivierte Nachverfolgungsvorrichtung (100) mindestens ein Datenpaket an das Kommunikationsnetzwerk (220) senden kann, damit das Kommunikationsnetzwerk (220) die Position der aktivierten Nachverfolgungsvorrichtung (100) ermitteln kann, wenn die Nachverfolgungsvorrichtung (100) bewegt wird oder wenn sich ein Bewegungszustand der Nachverfolgungsvorrichtung (100) ändert.

5. Verfahren nach einem der vorherigen Ansprüche, wobei die Nachverfolgungsvorrichtungen (100) weiterhin jeweils ein Lokalisierungsmodul (130) aufweisen, um die Position der Nachverfolgungsvorrichtungen (100) zu ermitteln, wobei die Ermittlung der Position durch das Lokalisierungsmodul (130) unabhängig von der Ermittlung der Position durch das Kommunikationsnetzwerk (220) ist, wobei das Lokalisierungsmodul (130) insbesondere ein GPS-, und/oder ein Glonass- und/oder Beidou- und/oder ein Galileo-Modul aufweist.

6. Verfahren nach Anspruch 5, wobei das Lokalisierungsmodul (130) aktiviert wird, wenn die aktivierte Nachverfolgungsvorrichtung (100a) ein vorbestimmtes Gebiet erreicht, und dann die aktivierte Nachverfolgungsvorrichtung (100a) ihre durch das aktivierte Lokalisierungsmodul (130) ermittelte Position an die Kontrolleinrichtung (210) übermittelt.

7. Verfahren nach einem der vorherigen Ansprüche, wobei die Nachverfolgungsvorrichtungen (100) weiterhin jeweils eine wiederaufladbare Energiequelle (150) aufweisen.

8. Verfahren nach einem der vorherigen Ansprüche, wobei die Nachverfolgungsvorrichtungen (100) weiterhin jeweils einen maschinenlesbaren Code aufweisen, der jeweils eine eindeutige Kennung (160) umfasst, wobei der maschinenlesbare Code und damit die eindeutige Kennung (160) durch den ersten Nutzer (201) bei, vor oder nach der Aktivierung der jeweiligen Nachverfolgungsvorrichtung (100) ausgelesen wird, wobei die eindeutige Kennung optional zusätzlich auch als durch Menschen auslesbare Schrift auf der jeweiligen Nachverfolgungsvorrichtung (100) sichtbar ist.

9. Verfahren nach Anspruch 8, wobei die Sendung (230) eine eindeutige Sendungskennung hat und die Sendungskennung und die eindeutige Kennung (160) der Nachverfolgungsvorrichtung (100) an die Kontrolleinrichtung (210) übermittelt und einander zugeordnet werden, um dadurch die Nachverfolgung der Sendung (230) zu ermöglichen,
wobei optional die Zuordnung von Sendungskennung und eindeutiger Kennung (160) der Nachverfolgungsvorrichtung (100) aufgehoben werden kann, nachdem die aktivierte Nachverfolgungsvorrichtung (100a) zusammen mit der Sendung (230) beim Empfänger (211) eingetroffen ist.

10. Verfahren nach einem der vorhergehenden Ansprüche, wobei die Nachverfolgungsvorrichtungen (100) weiterhin ein Datenkommunikationsmodul (170), beispielsweise ein Nahfeldkommunikationsmodul und/oder ein Kurzstreckenkommunikationsmodul, aufweisen, um kontaktlos mit einem Bediengerät (500) zu kommunizieren, wobei der maschinenlesbare Code von dem ersten Nutzern über das Datenkommunikationsmodul (170) ausgelesen wird.

11. Verfahren nach einem der vorherigen Ansprüche, wobei durch einen Betreiber (321) die Nachverfolgungsvorrichtungen (100) den Nutzern (201, 202) zur Verfügung gestellt werden.

12. Verfahren nach einem der vorherigen Ansprüche, wobei die Zielanweisungen, nach Empfang der Sendung (230) durch den Empfänger (211), zusätzlich in Abhängigkeit vom aktuellen Standort der Nachverfolgungsvorrichtung (100) ermittelt werden.

13. Verfahren nach einem der vorherigen Ansprüche, wobei die Kontrolleinrichtung (210) die Zielanweisungen an die Nachverfolgungsvorrichtung (100) übermittelt, nachdem die Kontrolleinrichtung (210) eine Bestätigung erhalten hat, dass ein vorbestimmtes Ereignis oder die Abfolge von mindestens zwei vorbestimmten Ereignissen aufgetreten ist,
wobei optional die Bestätigung durch die Nachverfolgungsvorrichtung (100), dass das von der Nachverfolgungsvorrichtung (100) erkannte Ereignis aufgetreten ist, erfolgen kann.

14. Verfahren nach einem der vorhergehenden Ansprüche, wobei die Zielanweisungen weiterhin in Abhängigkeit von der geografischen Verteilung der Nutzer (201, 202) ermittelt wird.

15. Verfahren nach einem der vorhergehenden Ansprüche, wobei der Bedarf an Nachverfolgungsvorrichtungen (100) und/oder die Bestandsmindestmenge durch die Nutzer angepasst werden können.

16. Verfahren zur Nachverfolgung von Transportbehältern, bei dem eine Vielzahl von Transportbehältern (800, 805) mit jeweils einer an dem jeweiligen Transportbehälter (800, 805) insbesondere lösbar befestigten Nachverfolgungsvorrichtung (810) zur Nutzung an verschiedenen Standorten bereitgestellt wird, wobei die Nachverfolgungsvorrichtungen (810) jeweils ein Kommunikationsmodul (120) aufweisen und die Nachverfolgungsvorrichtungen (810) unabhängig voneinander über das Kommunikationsmodul (120) drahtlos mit einer Kontrolleinrichtung (210) kommunizieren können, und wobei die Transportbehälter (800, 805) zur Aufnahme eines oder mehrerer Transportgüter eingerichtet sind, wobei
zum Versenden von Transportgütern zwischen den Standorten mindestens einige der Transportbehälter (800, 805) verwendet werden, wobei in einem Transportbehälter (800, 805) mindestens ein Transportgut aufgenommen wird, welches mittels des Transportbehälters (800, 805) von einem zu einem anderen Standort versendet wird;
der Kontrolleinrichtung (210) wiederholt während des Transports der Transportbehälter (800, 805) zwischen den Standorten die Position der an den Transportbehältern (800, 805) befestigten Nachverfolgungsvorrichtungen (810) und damit der Transportbehälter (800, 805) übermittelt wird;
die Position der an den Transportbehältern (800, 805) befestigten Nachverfolgungsvorrichtungen (810), und damit die Position der Transportbehälter (800, 805) beim Transport der Transportgüter, über die Kontrolleinrichtung (210) nachverfolgt werden kann;
die Kontrolleinrichtung (210) den Lagerbestand der Nachverfolgungsvorrichtungen (810) und damit der Transportbehälter (800, 805) an einigen oder allen Standorten überwacht; und
die Kontrolleinrichtung (210) in Abhängigkeit vom Bedarf an Transportbehältern (800, 805) an den einzelnen Standorten und in Abhängigkeit vom Lagerbestand an Transportbehältern (800, 805) an den einzelnen Standorten Anweisungen zum Versenden von leeren Transportbehältern (800, 805) ohne Transportgüter zwischen den Standorten erstellt und die leeren Transportbehälter (800, 805) auf Basis der erstellten Anweisungen zwischen den Standorten versendet werden.

17. Verfahren nach Anspruch 16, weiter umfassend mindestens eines der folgenden Merkmale:
- wobei die Nachverfolgungsvorrichtungen (810) jeweils eine grafische Ausgabeeinheit (110) aufweisen, wobei die Kontrolleinrichtung (210) an die Nachverfolgungsvorrichtungen (810) Zielanweisungen übermittelt, welche die Darstellung von Zieladressinformationen zum Versenden der leeren Transportbehälter (800, 805) mit der jeweiligen Nachverfolgungsvorrichtung (810) an einen anderen Standort auf der grafischen Ausgabeeinheit (110) bewirkt, wobei die Kontrolleinrichtung (210) die Zielanweisungen in Abhängigkeit vom Bedarf an Transportbehältern (800, 805) an den einzelnen Standorten und/oder in Abhängigkeit vom Lagerbestand an Transportbehältern (800, 805) an den einzelnen Standorten ermittelt;
- wobei die Nachverfolgungsvorrichtungen (810) jeweils ein Datenkommunikationsmodul (170), beispielsweise ein Nahfeldkommunikationsmodul und/oder ein Kurzstreckenkommunikationsmodul, aufweisen, um kontaktlos mit einem Bediengerät (500) zu kommunizieren, wobei die Kontrolleinrichtung (210) an die Nachverfolgungsvorrichtung (810) Zielanweisungen übermittelt, welche mittels eines Bediengeräts (500) über das Datenkommunikationsmodul (170) kontaktlos auslesbar sind und die Ausgabe von Zieladressinformationen zum Versenden der leeren Transportbehälter (800, 805) mit der Nachverfolgungsvorrichtung (800) an andere Standorte auf dem Bediengerät (500) bewirkt, wobei die Kontrolleinrichtung (210) die Zielanweisungen in Abhängigkeit vom Bedarf an Transportbehältern (800, 805) an den einzelnen Standorten und/oder in Abhängigkeit vom Lagerbestand an Transportbehältern (800, 805) an den einzelnen Standorten ermittelt;
- wobei die Nachverfolgungsvorrichtungen (810) jeweils ein Datenkommunikationsmodul (170), beispielsweise ein Nahfeldkommunikationsmodul und/oder ein Kurzstreckenkommunikationsmodul, aufweisen, welches mit an den einzelnen Standorten verteilten Empfänger-Sender-Einheiten zur Positionsbestimmung der Nachverfolgungsvorrichtungen (810), und damit zur Positionsbestimmung der Transportbehälter (800, 805), kommunizieren können, wobei mittels der Empfänger-Sender-Einheiten die Positionen von Transportbehältern (800, 805) ermittelt und an die Kontrolleinrichtung (210) übermittelt werden, wobei die Kontrolleinrichtung (210) auf Basis der ermittelten Positionen überprüft, ob leere Transportbehälter (800, 805) gemäß der von der Kontrolleinrichtung (210) erstellten Anweisungen zur Versendung bereitgestellt und/oder bereits versendet wurden.

## Claims

1. A method for tracking shipments (230) such as postal items, parcels, small parcels, freight and courier shipments, in which each of a plurality of users (201, 202) is provided with at least one tracking device (100), in particular a plurality of tracking devices (100), each comprising a communication module (120) and a graphic output unit (110), and each of which can communicate wirelessly with a control unit (210) via the communication module (120) independently of one another, wherein the tracking devices (100) are provided by an operator who makes the tracking devices (100) available to users on request and operates or monitors the control unit (120), wherein some or all users specify their requirement for tracking devices (100) and/or a minimum stock level, which is stored in the control unit, wherein
one of the tracking devices (100, 100a), for use by a first of the multiple users (201), is activated to track a shipment (230) from the first user (201) to a recipient (211) in order to send the activated tracking device (100a) together with the shipment (230) to the recipient (211), wherein the activation of the tracking device (100a) is transmitted to the control unit (210);
the control unit (210) repeatedly receives the position of the activated tracking device (100a) during the transport of the shipment (230) to the recipient (211);
the first user (201) and/or the recipient (211) can track the position of the shipment (230) via the control unit (210);
the control unit (210) monitors the stock levels of the tracking devices (100) at some or all users (201, 202), wherein, for the purpose of monitoring the stock levels of the tracking devices (100) at the users (201, 202), the control unit (210) regularly receives the position of the tracking devices (100), in particular the position of the non-activated tracking devices; and
the control unit (210) transmits to the activated tracking device (100a), after this tracking device (100a) has arrived at the recipient (211) together with the shipment (230), destination instructions which cause the display of destination address information for forwarding the tracking device (100a) to a second of the plurality of users (201, 202) on the graphic output unit (110), wherein the control unit (210) determines the destination instructions according to the demand for tracking devices (100) by the users (201, 202) and according to the stock level of tracking devices (100) at the users (201, 202).

2. The method according to claim 1, wherein, in order to activate the tracking device (100), the first user supplies power to the tracking device (100), in particular via contactless power transfer, thereby switching the tracking device (100) from an idle state to an operating state.

3. The method according to claim 1 or 2, wherein, to activate the tracking device (100), one of the following steps is performed, in particular by the first user:
actuating a switching element, for example a piezoelectric element, a membrane switch or a pushbutton, on the tracking device (100);
supplying the tracking device (100) on a charging device, for example by placing it on a charging device for contactless charging;
removing the tracking device (100) from a charging device;
removing or dispensing the tracking device (100) from a magazine for storing a plurality of tracking devices (100).

4. The method according to any one of the preceding claims, wherein the communication module (120) is in wireless connection with the control unit (210) via a communication network (220), and the control unit (210) repeatedly queries the communication network (220), which determines the position of the activated tracking device (100a), wherein the communication network is, in particular, a low-power WAN,
wherein, optionally, the activated tracking device (100) may send at least one data packet to the communication network (220) so that the communication network (220) can determine the position of the activated tracking device (100) when the tracking device (100) is moved or when a motion state of the tracking device (100) changes.

5. The method according to any one of the preceding claims, wherein the tracking devices (100) each further comprise a localisation module (130) for determining the position of the tracking devices (100), wherein the determination of the position by the localisation module (130) is independent of the determination of the position by the communication network (220), wherein the localisation module (130) comprises, in particular, a GPS, and/or a Glonass, and/or a Beidou, and/or a Galileo module.

6. The method according to claim 5, wherein the localisation module (130) is activated when the activated tracking device (100a) reaches a predetermined area, and the activated tracking device (100a) then transmits its position, as determined by the activated localisation module (130), to the control unit (210).

7. The method according to any of the preceding claims, wherein the tracking devices (100) each further comprise a rechargeable power source (150).

8. The method according to any one of the preceding claims, wherein the tracking devices (100) each further comprise a machine-readable code, each of which comprises a unique identifier (160), wherein the machine-readable code and thus the unique identifier (160) are read by the first user (201) upon, prior to or following the activation of the respective tracking device (100), wherein the unique identifier is optionally also visible as human-readable text on the respective tracking device (100).

9. The method according to claim 8, wherein the shipment (230) has a unique shipment identifier, and the shipment identifier and the unique identifier (160) of the tracking device (100) are transmitted to the control unit (210) and assigned to each another, thereby enabling the tracking of the shipment (230),
wherein, optionally, the assignment of the shipment identifier and the unique identifier (160) of the tracking device (100) may be canceled after the activated tracking device (100a) has arrived at the recipient (211) together with the shipment (230).

10. The method according to any one of the preceding claims, wherein the tracking devices (100) further comprise a data communication module (170), for example a near-field communication module and/or a short-range communication module, for communicating contactlessly with an operating device (500), wherein the machine-readable code is read by the first user via the data communication module (170).

11. The method according to any of the preceding claims, wherein the tracking devices (100) are made available to the users (201, 202) by an operator (321).

12. The method according to any of the preceding claims, wherein, following reception of the shipment (230) by the recipient (211), the destination instructions are additionally determined according to the current location of the tracking device (100).

13. The method according to any of the preceding claims, wherein the control unit (210) transmits the destination instructions to the tracking device (100), after the control unit (210) has received confirmation that a predetermined event or the sequence of at least two predetermined events has occurred,
wherein, optionally, the confirmation by the tracking device (100) that the event detected by the tracking device (100) has occurred, can take place.

14. The method according to one of the preceding claims, wherein the destination instructions are further determined according to the geographical distribution of the users (201, 202).

15. The method according to any of the preceding claims, wherein the requirement for tracking devices (100) and/or the minimum stock level can be adapted by the users.

16. A method for tracking transport containers, in which a plurality of transport containers (800, 805) are provided, each with a tracking device (810) attached to the respective transport container (800, 805), in particular in a detachable manner, for use at various locations, wherein the tracking devices (810) each comprise a communication module (120) and the tracking devices (810) can communicate wirelessly with a control unit (210) independently of one another via the communication module (120), and wherein the transport containers (800, 805) are configured to hold one or more transport goods, wherein
at least some of the transport containers (800, 805) are used for sending transport goods between the locations, wherein at least one transport good is accommodated in a transport container (800, 805), which is sent by means of the transport container (800, 805) from one location to another;
the position of the tracking devices (810) attached to the transport containers (800, 805) and thus of the transport containers (800, 805) is repeatedly transmitted to the control unit (210) during the transport of the transport containers (800, 805) between the locations;
the position of the tracking devices (810) attached to the transport containers (800, 805), and thus the position of the transport containers (800, 805) during the transport of the transport goods, can be tracked via the control unit (210);
the control unit (210) monitors the stock level of the tracking devices (810) and thus of the transport containers (800, 805) at some or all locations; and
the control unit (210), according to the demand for transport containers (800, 805) at the individual locations and according to the stock level of transport containers (800, 805) at the individual locations, generates instructions for sending empty transport containers (800, 805) without transport goods between the locations, and the empty transport containers (800, 805) are sent between the locations on the basis of the instructions generated.

17. The method according to claim 16, further comprising at least one of the following features:
- wherein the tracking devices (810) each comprise a graphic output unit (110), wherein the control unit (210) transmits to the tracking devices (810) destination instructions which cause the display of destination address information for the sending of the empty transport containers (800, 805) with the respective tracking device (810) to another location on the graphic output unit (110), wherein the control unit (210) determines the destination instructions according to the demand for transport containers (800, 805) at the individual locations and/or according to the stock level of transport containers (800, 805) at the individual locations;
- wherein the tracking devices (810) each comprise a data communication module (170), for example a near-field communication module and/or a short-range communication module, for communicating contactlessly with an operating device (500), wherein the control unit (210) transmits to the tracking device (810) destination instructions which can be read contactlessly via the data communication module (170) using an operating device (500) and which cause the output of destination address information on the operating device (500) for sending empty transport containers (800, 805) with the tracking device (800) to other locations, wherein the control unit (210) determines the destination instructions according to the demand for transport containers (800, 805) at the individual locations and/or according to the stock level of transport containers (800, 805) at the individual locations;
- wherein the tracking devices (810) each comprise a data communication module (170), for example a near-field communication module and/or a short-range communication module, which can communicate with receiver-transmitter-units distributed at the individual locations for determining the position of the tracking devices (810), and thus for determining the position of the transport containers (800, 805), wherein the positions of the transport containers (800, 805) are determined using the receiver-transmitter units and transmitted to the control unit (210), wherein the control unit (210) checks, on the basis of the determined positions, whether empty transport containers (800, 805) have been made available for sending and/or have already been sent in accordance with the instructions generated by the control unit (210).

## Revendications

1. Procédé de suivi d'envois (230) tels que des envois postaux, des colis, des paquets, des envois par transporteur et par messagerie, dans lequel de multiples utilisateurs (201, 202) se voient attribuer respectivement au moins un dispositif de suivi (100), en particulier respectivement une pluralité de dispositifs de suivi (100), lesquels présentent chacun un module de communication (120) et une unité d'affichage graphique (110) et peuvent communiquer indépendamment les uns des autres, par le biais du module de communication (120), sans fil avec une unité de contrôle (210), les dispositifs de suivi (100) étant fournis par un opérateur qui met à disposition des utilisateurs, sur demande, les dispositifs de suivi (100) et exploite ou surveille l'unité de contrôle (120), certains ou tous les utilisateurs définissant leur besoin en dispositifs de suivi (100) et/ou une quantité minimale de stock, laquelle est enregistrée dans l'unité de contrôle, dans lequel
un des dispositifs de suivi (100, 100a) est activé pour être utilisé par un premier des multiples utilisateurs (201) pour le suivi d'un envoi (230) par le premier utilisateur (201) à un destinataire (211), afin d'envoyer le dispositif de suivi activé (100a) avec l'envoi (230) au destinataire (211), l'activation du dispositif de suivi (100a) étant transmise à l'unité de contrôle (210) ;
l'unité de contrôle (210) reçoit de manière répétée, pendant le transport de l'envoi (230) vers le destinataire (211), la position du dispositif de suivi activé (100a) ;
le premier utilisateur (201) et/ou le destinataire (211) peut suivre la position de l'envoi (230) par le biais de l'unité de contrôle (210) ;
l'unité de contrôle (210) surveille le stock des dispositifs de suivi (100) chez certains ou tous les utilisateurs (201, 202), la surveillance du stock des dispositifs de suivi (100) chez les utilisateurs (201, 202) étant réalisée par le fait que l'unité de contrôle (210) reçoit régulièrement la position des dispositifs de suivi (100), en particulier la position des dispositifs de suivi non activés ; et
l'unité de contrôle (210) transmet au dispositif de suivi activé (100a), après que ce dispositif de suivi (100a) est arrivé avec l'envoi (230) chez le destinataire (211), des instructions de destination qui provoquent l'affichage d'informations d'adresse de destination pour la réexpédition du dispositif de suivi (100a) à un deuxième des multiples utilisateurs (201, 202) sur l'unité d'affichage graphique (110), l'unité de contrôle (210) déterminant les instructions de destination en fonction du besoin en dispositifs de suivi (100) par les utilisateurs (201, 202) et en fonction du stock de dispositifs de suivi (100) chez les utilisateurs (201, 202).

2. Procédé selon la revendication 1, dans lequel, pour activer le dispositif de suivi (100), le premier utilisateur alimente le dispositif de suivi (100) en énergie, en particulier alimente sans contact en énergie, et ainsi fait passer le dispositif de suivi (100) d'un état de repos à un état de fonctionnement.

3. Procédé selon la revendication 1 ou la revendication 2, dans lequel, pour activer le dispositif de suivi (100), l'une des étapes suivantes, en particulier par le premier utilisateur, est effectuée :
actionnement d'un élément de commutation, par exemple d'un élément piézoélectrique, d'un interrupteur à membrane ou d'un bouton-poussoir, du dispositif de suivi (100) ;
placement du dispositif de suivi (100) sur un dispositif de charge, par exemple en le posant sur un dispositif de charge pour une recharge sans contact ;
retrait du dispositif de suivi (100) d'un dispositif de charge ;
retrait ou distribution du dispositif de suivi (100) d'un magasin destiné à stocker une pluralité de dispositifs de suivi (100).

4. Procédé selon l'une des revendications précédentes, dans lequel le module de communication (120) est connecté sans fil à l'unité de contrôle (210) par le biais d'un réseau de communication (220) et l'unité de contrôle (210) interroge de manière répétée la position du dispositif de suivi activé (100a) auprès du réseau de communication (220), lequel détermine la position du dispositif de suivi activé (100a), le réseau de communication étant en particulier un réseau étendu à basse consommation (LPWAN, Low Power WAN),
le dispositif de suivi activé (100) pouvant facultativement envoyer au moins un paquet de données au réseau de communication (220) afin que le réseau de communication (220) puisse déterminer la position du dispositif de suivi activé (100) lorsque le dispositif de suivi (100) est déplacé ou lorsque l'état de mouvement du dispositif de suivi (100) change.

5. Procédé selon l'une des revendications précédentes, dans lequel les dispositifs de suivi (100) comportent en outre chacun un module de localisation (130) pour déterminer la position des dispositifs de suivi (100), la détermination de la position par le module de localisation (130) étant indépendante de la détermination de la position par le réseau de communication (220), le module de localisation (130) comportant en particulier un module GPS et/ou un module Glonass et/ou Beidou et/ou Galileo.

6. Procédé selon la revendication 5, dans lequel le module de localisation (130) est activé lorsque le dispositif de suivi activé (100a) atteint une zone prédéterminée et le dispositif de suivi activé (100a) transmet alors sa position déterminée par le module de localisation activé (130) à l'unité de contrôle (210).

7. Procédé selon l'une des revendications précédentes, dans lequel les dispositifs de suivi (100) comportent en outre chacun une source d'énergie rechargeable (150).

8. Procédé selon l'une des revendications précédentes, dans lequel les dispositifs de suivi (100) comportent en outre chacun un code lisible par machine, lequel comprend respectivement un identifiant unique (160), le code lisible par machine et donc l'identifiant unique (160) étant lus par le premier utilisateur (201) lors de, avant ou après l'activation du dispositif de suivi respectif (100), l'identifiant unique étant facultativement visible également sous forme d'écriture lisible par l'homme sur le dispositif de suivi respectif (100).

9. Procédé selon la revendication 8, dans lequel l'envoi (230) possède un identifiant d'envoi unique et l'identifiant d'envoi et l'identifiant unique (160) du dispositif de suivi (100) sont transmis à l'unité de contrôle (210) et associés l'un à l'autre afin de permettre ainsi le suivi de l'envoi (230),
l'association de l'identifiant d'envoi et de l'identifiant unique (160) du dispositif de suivi (100) pouvant facultativement être annulée après que le dispositif de suivi activé (100a) est arrivé avec l'envoi (230) chez le destinataire (211).

10. Procédé selon l'une des revendications précédentes, dans lequel les dispositifs de suivi (100) comportent en outre un module de communication de données (170), par exemple un module de communication en champ proche et/ou un module de communication à courte portée, pour communiquer sans contact avec un appareil de commande (500), le code lisible par machine étant lu par le premier utilisateur par le biais du module de communication de données (170).

11. Procédé selon l'une des revendications précédentes, dans lequel les dispositifs de suivi (100) sont mis à disposition des utilisateurs (201, 202) par un opérateur (321).

12. Procédé selon l'une des revendications précédentes, dans lequel les instructions de destination, après réception de l'envoi (230) par le destinataire (211), sont en outre déterminées en fonction de la position actuelle du dispositif de suivi (100).

13. Procédé selon l'une des revendications précédentes, dans lequel l'unité de contrôle (210) transmet les instructions de destination au dispositif de suivi (100) après que l'unité de contrôle (210) a reçu une confirmation qu'un événement prédéterminé ou la séquence d'au moins deux événements prédéterminés s'est produit(e),
la confirmation que l'événement détecté par le dispositif de suivi (100) s'est produit pouvant facultativement être effectuée par le dispositif de suivi (100).

14. Procédé selon l'une des revendications précédentes, dans lequel les instructions de destination sont en outre déterminées en fonction de la répartition géographique des utilisateurs (201, 202).

15. Procédé selon l'une des revendications précédentes, dans lequel le besoin en dispositifs de suivi (100) et/ou la quantité minimale de stock peuvent être ajustés par les utilisateurs.

16. Procédé de suivi de conteneurs de transport, dans lequel une pluralité de conteneurs de transport (800, 805) sont équipés chacun d'un dispositif de suivi (810) fixé, en particulier de manière amovible, sur le conteneur de transport respectif (800, 805) pour une utilisation à différents emplacements, les dispositifs de suivi (810) comportant chacun un module de communication (120) et les dispositifs de suivi (810) pouvant communiquer indépendamment les uns des autres, par le biais du module de communication (120), sans fil avec une unité de contrôle (210), et les conteneurs de transport (800, 805) étant conçus pour recevoir un ou plusieurs produits transportés, dans lequel
pour l'envoi de produits transportés entre les emplacements, au moins certains des conteneurs de transport (800, 805) sont utilisés, au moins un produit transporté étant placé dans un conteneur de transport (800, 805), lequel produit est envoyé d'un emplacement à un autre à l'aide du conteneur de transport (800, 805) ;
l'unité de contrôle (210) reçoit de manière répétée, pendant le transport des conteneurs de transport (800, 805) entre les emplacements, la position des dispositifs de suivi (810) fixés aux conteneurs de transport (800, 805) et donc des conteneurs de transport (800, 805) ;
la position des dispositifs de suivi (810) fixés aux conteneurs de transport (800, 805), et donc la position des conteneurs de transport (800, 805) lors du transport des produits transportés, peut être suivie par le biais de l'unité de contrôle (210) ;
l'unité de contrôle (210) surveille le stock des dispositifs de suivi (810) et donc des conteneurs de transport (800, 805) à certains ou à tous les emplacements ; et
l'unité de contrôle (210), en fonction du besoin en conteneurs de transport (800, 805) à chaque emplacement et en fonction du stock de conteneurs de transport (800, 805) à chaque emplacement, établit des instructions pour l'envoi de conteneurs de transport vides (800, 805) sans produits transportés entre les emplacements et les conteneurs de transport vides (800, 805) sont envoyés entre les emplacements sur la base des instructions établies.

17. Procédé selon la revendication 16, comprenant en outre au moins l'une des caractéristiques suivantes :
- les dispositifs de suivi (810) comportent chacun une unité d'affichage graphique (110), l'unité de contrôle (210) transmettant aux dispositifs de suivi (810) des instructions de destination qui provoquent l'affichage d'informations d'adresse de destination pour l'envoi des conteneurs de transport vides (800, 805) avec le dispositif de suivi respectif (810) vers un autre emplacement sur l'unité d'affichage graphique (110), l'unité de contrôle (210) déterminant les instructions de destination en fonction du besoin en conteneurs de transport (800, 805) à chaque emplacement et/ou en fonction du stock de conteneurs de transport (800, 805) à chaque emplacement ;
- les dispositifs de suivi (810) comportent chacun un module de communication de données (170), par exemple un module de communication en champ proche et/ou un module de communication à courte portée, pour communiquer sans contact avec un appareil de commande (500), l'unité de contrôle (210) transmettant au dispositif de suivi (810) des instructions de destination qui sont lisibles sans contact à l'aide d'un appareil de commande (500) par le biais du module de communication de données (170) et qui provoquent l'affichage d'informations d'adresse de destination pour l'envoi des conteneurs de transport vides (800, 805) avec le dispositif de suivi (800) vers d'autres emplacements sur l'appareil de commande (500), l'unité de contrôle (210) déterminant les instructions de destination en fonction du besoin en conteneurs de transport (800, 805) à chaque emplacement et/ou en fonction du stock de conteneurs de transport (800, 805) à chaque emplacement ;
- les dispositifs de suivi (810) comportent chacun un module de communication de données (170), par exemple un module de communication en champ proche et/ou un module de communication à courte portée, lequel peut communiquer avec des unités réceptrices-émettrices réparties sur les différents emplacements pour la détermination de la position des dispositifs de suivi (810), et donc pour la détermination de la position des conteneurs de transport (800, 805), les positions des conteneurs de transport (800, 805) étant déterminées à l'aide des unités réceptrices-émettrices et transmises à l'unité de contrôle (210), l'unité de contrôle (210) vérifiant, sur la base des positions déterminées, si les conteneurs de transport vides (800, 805) ont été mis à disposition et/ou déjà envoyés conformément aux instructions d'envoi établies par l'unité de contrôle (210).
